# EUROPEAN PATENT SPECIFICATION

(11) **EP 2 410 590 B1**
(45) Date of publication and mention of the grant of the patent: **24.07.2013**
(21) Application number: 11006293.2
(22) Date of filing: 22.12.2010
(51) Int. Cl.: H01M 2/04, H01M 2/10, H01M 2/20, H01M 10/48, H01R 9/00

(54) **Battery pack**
Batteriepack
Bloc-batterie

(30) Priority: 24.12.2009 JP 2009291972; 29.01.2010 JP 2010019529; 31.03.2010 JP 2010084269; 24.06.2010 JP 2010144261
(43) Date of publication of application: 25.01.2012
(62) Divisional of application: 10015975.5
(73) Proprietor: Sanyo Electric Co., Ltd., Osaka 570-8677 (JP)
(72) Inventor: Yamagami, Sadao, Moriguchi-shi Osaka, 570-8677 (JP); Yoneda, Haruhiko, Moriguchi-shi Osaka, 570-8677 (JP); Miyamae, Ichiro, Moriguchi-shi Osaka, 570-8677 (JP); Kawabata, Katsuhiko, Moriguchi-shi Osaka, 570-8677 (JP); Fukumori, Jyunichi, Moriguchi-shi Osaka, 570-8677 (JP)
(74) Representative: Hertz, Oliver

(56) References cited:
- EP-A2- 1 313 156
- JP-A- 2008 034 296
- JP-A- 2008 198 435
- JP-A- 2009 176 689
- US-A1- 2006 177 734

## Description

### BACKGROUND OF THE INVENTION

### 1. Field of the Invention

The present invention relates to a battery pack that includes a plurality of rechargeable base batteries, and in particular to battery pack that can be reduced in exterior size.

Additionally, the present invention relates to a battery pack used as a power supply for electric devices mainly used outdoors such as power assisted electric bicycle and electric bicycle, and in particular to a battery pack that can include a waterproof charging/discharging connector to be connected to electric devices.

### 2. Description of the Related Art

In applications such as for electric bicycle and power assisted electric bicycle that require a large amount of current for driving the bicycles, a battery pack is used that include a plurality of base batteries that are connected to each other in series for increasing the output voltage, and are connected to each other in parallel for increasing the output current. In particular, a battery pack is desired that meets recent high output requirement, and size and weight reduction requirement for easy carrying. In addition, since the output current is increased, the heat amount tends to be increased that is generated by base batteries and electronic components such as switching elements (e.g., FETs) for controlling discharging operation and diodes. Accordingly, in order to stably use such battery packs for a long time, a structure for sufficiently dissipating heat is desired.

See Japanese Patent Laid-Open Publication No. 2008-34296.

However, as the size of a battery pack is reduced, the heat dissipation property will be reduced. The reason is that heat is likely to remain inside the battery pack. If a heat dissipating structure is additionally disposed inside the battery pack, the exterior size of the battery pack is increased. Thus, size reduction conflicts with heat dissipation efficiency improvement. For this reason, it is difficult to achieve both the size reduction and the heat dissipation efficiency improvement.

In addition, in a battery pack in that a number of base batteries are connected to each other in series, as the number of the base batteries increases, the weight of a battery pack increases. Accordingly, before assembling, parts to be assembled require large space. As a result, the parts cannot be easily handled.

In addition, since battery packs used for movable devices such as bicycle is subjected to vibrations and shocks, the battery packs necessarily have sufficient mechanical strength. If a lead plate of the serially-connected base battery is disconnected or is brought in poor contact by vibrations or shocks, the entire battery pack cannot operate.

On the other hand, cost reduction is also strongly required. For this reason, it is required that the mechanical strength is increased and the heat dissipation property is assured for a long time by a maximum simple structure. An improved battery pack that meets these requirements has been desired.

The present invention is aimed at solving the problem. It is an object of the present invention to provide a battery pack that is small and simple, and can be easily assembled but has reliability.

### SUMMARY OF THE INVENTION

The above object is solved by a battery pack comprising the features of claim 1. Preferred embodiments of the invention are defined in the dependent claims. In particular, a battery pack according to the present invention includes a plurality of battery blocks 210, a plurality of pairs of lead plates 220, a circuit board 240, and an exterior case 230. Each of the plurality of battery blocks 210 includes a plurality of base batteries 211 having a cylindrical exterior container, and a battery spacer 212 for holding the plurality of base batteries 211 in parallel to each other. Each pair of lead plates 220 connect the end surfaces of the base batteries 211 held by the battery spacer 212 in corresponding one of the battery blocks 210 so that the base batteries 211 are connected to each other in parallel, and one of one pair of the lead plates 220 in one battery block 210 is serially connected to one of one pair of the lead plates 220 in another battery block 210 adjacent to the one battery block 210. The circuit board 240 is electrically connected to the plurality of pairs of lead plates 220. The exterior case 230 accommodates the battery blocks 210 and the circuit board 240. The battery blocks 210 are classified into battery block rows 202 in that the classified battery blocks 210 are arranged side by side in parallel to each other so that the end surfaces of the base batteries 211 included in the battery blocks 210 are arranged coplanar with each other. The battery block rows 202 are arranged side by side so that the end surfaces of the base batteries 211 of the battery block rows 202 are opposed to each other and so that the base batteries 211 of the battery block rows 202 are aligned in substantially straight lines and extend in the center axes of cylindrical shapes whereby composing a battery assembly 201. Battery block rows 202 that are arranged side by side adjacent to each other include lead plate 220 extension parts that extend along the side surfaces of the battery assembly 201. The battery pack includes lead connection portions 225 that electrically connect the lead plate 220 extension parts to each other. The lead connection portions 225 are alternately arranged on parts of the side surfaces of the battery assembly 201 between adjacent battery block rows 202 to connect the lead plates 220 to each other. According to this battery pack, the battery block rows are connected to each other in zigzag arrangement by the lead connection portions to increase the number of the serially-connected battery blocks. As a result it is possible to avoid that the size of battery block rows increases in the case where the lead connection portions is prepared as separated members for connecting the lead plates to each other. Therefore, it is possible to the efficiency of the battery pack in assembling.

In a battery pack according to another aspect of the present invention, the lead connection portions 225 can be a metal plate that includes a pair of contact parts 226 with screw holes. The thickness of this metal plate can be thicker than the lead plate 220. The lead plate 220 can include a lead connection terminal 222 that is formed by bending the lead plate 220 into an L shape and extends along a side surface of the battery block row 202. The lead connection terminal can have a connection terminal screw hole 223. The battery spacer 212 can have a screw passing opening that is formed on a side surface of the battery assembly 201. The lead connection portion 225 can be coupled to the lead connection terminal 222 and the battery spacer 212 by threaded engagement of a lead connection screw 228. According to this battery pack, the lead plates can be electrically to each other on alternate parts on the side surface of the battery assembly between the battery blocks. Also, since the lead connection portion of the metal plate couples the battery spacer to each other, it is possible to ensure mechanical coupling strength.

In a battery pack according to another aspect of the present invention, the lead connection portions 225 can be a bent part that is formed by bending a part of the lead plate 220 into an L shape so that the part of the lead plate 220 protrudes from the upper surface of the battery assembly 201. The lead connection portions can overlap each other and can be coupled to each other by threaded engagement so that adjacent lead plates 220 are connected to each other. According to this battery pack, the lead connection portion can be formed by bending a part of the lead plate without employing a separately-formed lead connection portion. Therefore, it is possible to reduce manufacturing cost.

In a battery pack according to another aspect of the present invention, the battery spacer 212 can have battery holding portions 213 on the upper and lower surfaces each of which has a curved shape that opens upward or downward and agrees with the cylinder surface of the base battery 211. The base batteries 211 are arranged in two rows on the upper and lower surface of the battery spacer 212. The base batteries 211 are held in the battery holding portions 213 in parallel to each other. According to this battery pack, the cylindrical base battery can be held on the upper and lower surfaces of the battery spacer. In addition, the battery spacer can have a simple shape. Therefore, it is possible to easily manufacture the battery spacer.

In a battery pack according to a twentieth aspect of the present invention, the battery pack can include a plurality of metal penetration screws 250 that penetrate the battery assembly 201 in the longitudinal direction of the exterior case 230 in parallel to each other. The battery spacer 212 is formed of an electrically-insulating resin material. The center axes of the curved battery holding portions 213 on the upper and lower surfaces of the battery spacer 212 can be aligned on a substantially straight line in plan view. At least one of parts that are surrounded by four adjacent battery holding portions 213 can have a spacer through hole 214 into which the penetration screw 250 inserted. According to this battery pack, in the case where semicylindrically-curved battery holding portions are arranged in a matrix, the spacer through hole is formed in a dead space part that are surrounded by the adjacent battery holding portions. Accordingly, it is possible to effectively use space. As a result, it is possible to reduce the battery pack in size. In addition, the spacer through hole can prevent that a sink mark is formed when the battery spacer is formed from a resin material, and can reduce the material amount of battery spacer. Therefore, it is possible to provide a battery pack with an advantage in manufacturing cost. Also, since the entire battery assembly can be tightened by a plurality of penetration screws, it is possible to remarkably improve mechanical strength and reliability as compared with conventional construction in that only parts between the battery blocks are coupled to each other. In particular, it is possible to provide a battery pack with resistance against vibrations and shock from the outside. In particular, since the metal penetration screw passes through the part that is surrounded by the four adjacent base batteries, in other words, since the metal penetration screw penetrates a part that is likely to store heat, it is possible to improve heat conductivity. For this reason, heat generated from the base batteries can be conducted to the end surfaces of the exterior case through the penetration screw. Therefore, the battery pack can be improved in heat dissipation.

In a battery pack according to another aspect of the present invention, each of the plurality of penetration screws 250 penetrate corresponding one of the battery blocks 210 that compose each of the battery block rows 202. According to this battery pack, since all of the battery blocks are penetrated by the penetration screws, the coupling strength of the battery assembly can be surely improved.

In a battery pack according to another aspect of the present invention, the battery pack further can include an electrically-insulating sheet 235 that is arranged in each part between the battery block rows 202 and is interposed between the lead plates 220 opposed to each other to electrically insulate the opposed lead plates 220 from each other. The insulating sheet 235 can have sheet through holes 236 into which the penetration screws 250 are inserted. According to this battery pack, since the insulating sheet is interposed between the opposed lead plates, it is possible to effectively insulate the opposed lead plates from each other. In addition, it is possible to provide a secondary effect in that the insulating sheet is positioned in place by inserting the penetration screws into the sheet through holes.

In a battery pack according to another aspect of the present invention, the battery spacer 212 can include a spacer coupling portion 216 that couples this battery spacer 212 to other battery spacer 212 that composes the common battery block row 202. The spacer coupling part 216 can be arranged on a part of a side surface of the battery spacer 212 between the upper and lower battery holding portions 213. According to this battery pack, since the spacer coupling portion is arranged in dead space between the battery holding portions, it is possible to effectively use space. In addition, since the battery spacers are coupled by the spacer coupling portion, it is possible to easily assemble the battery block row that is composed of the battery blocks.

In a battery pack according to another aspect of the present invention, the battery spacers 212 can have connection grooves 217 in parts of side surfaces of the battery assembly 201 between the upper and lower battery holding portions 213. The spacer coupling portion 216 can be inserted into the connection grooves 217 of battery spacer 212 adjacent to each other so that the adjacent battery spacers 212 are mechanically coupled to each other. According to this battery pack, since the connection structure is arranged in dead space between the battery holding portions, it is possible to effectively use space. In addition, since the battery spacers are coupled by the simple structure, it is possible to easily assemble the battery block row that is composed of the battery blocks.

In a battery pack according to another aspect of the present invention, the connection groove 217 can be also used as screw passing opening. According to this battery pack, the coupling groove of the battery spacer can serve as a coupling groove that is coupled to spacer coupling portion on a side surface in that this battery spacer is coupled to the battery spacer adjacent to this battery spacer. On the other hand, the coupling groove of the battery spacer can serve as a screw passing opening a side surface corresponding to a side surface of the battery block row. Therefore, the construction can be simplified.

In a battery pack according to another aspect of the present invention, some of the plurality of penetration screws 250 can be used as lead for electrical conduction. According to this battery pack, since the metal penetration screw serves not only as reinforcement member but also as lead for electrical conduction, the component count can be reduced. Therefore, it is possible to reduce the battery pack in size and cost.

In a battery pack according to another aspect of the present invention, the number of battery blocks 210 in the battery block row 202 that is located on an end surface of the battery assembly 201 can be less than other battery block rows 202 so that an available space portion BS is produced. An output terminal 233 can be arranged in this available space portion BS. According to this battery pack, since output terminal can be accommodated in the available space portion that is provided by a reduced number of the battery block, the interior space of the exterior case can be efficiently used. Therefore, it is possible to reduce the entire size of the battery pack.

In a battery pack according to another aspect of the present invention, each of the battery blocks 210 can employ three base batteries 211. The battery assembly 201 can employ four first battery block rows 202A each of which employs three battery blocks 210. The battery assembly 202 can includes a second first battery block row 202B that employs two battery blocks 210. According to this battery pack, the battery pack can include fourteen serially-connected base batteries, and in addition to this can have an available space portion on an end surface side of the battery assembly.

In a battery pack according to another aspect of the present invention, the output voltage of the battery pack can be 48 V. According to this battery pack, it is possible to provide a battery pack that can apply voltage of 48 V used in many applications.

### BRIEF DESCRIPTION OF THE DRAWINGS

Fig. 1 is a schematic view showing the outward appearance of a battery pack according to a reference 1 of the present invention;
Fig. 2 is an exploded perspective view showing the battery pack shown in Fig. 1 with an end surface plate being removed;
Fig. 3 is a schematic view showing the outward appearance of a core block shown in Fig. 2;
Fig. 4 is a traverse cross-sectional view of the core block;
Fig. 5 is a longitudinal cross-sectional view of the core block;
Fig. 6 is a perspective view showing a first battery block;
Fig. 7 is an exploded perspective view showing the first battery block shown in Fig. 6 with lead plates being removed;
Fig. 8 is a perspective view showing a second battery block;
Fig. 9 is an exploded perspective view showing the core block with a circuit board being removed;
Fig. 10 is a perspective view showing hinge members that are bent when the first battery blocks are coupled to each other;
Fig. 11 is a perspective view showing the first battery blocks that are folded when the hinge members are not bent so that terminal end surfaces are arranged on the same side;
Fig. 12 is an enlarged view of the hinge member;
Fig. 13 is a perspective view showing a battery pack according to an embodiment 1 of the present invention;
Fig. 14 is a plan view of the battery pack shown in Fig. 13;
Fig. 15 is a longitudinal cross-sectional view of the battery pack taken along a line III-III in Fig. 14;
Fig. 16 is a traverse cross-sectional view of the battery pack taken along a line IV-IV in Fig. 14;
Fig. 17 is a plan view showing the battery pack shown in Fig. 14 with an exterior case being removed;
Fig. 18 is an exploded perspective view showing the battery pack shown in Fig. 13 with a first end surface plate being removed;
Fig. 19 is an exploded perspective view showing the battery pack shown in Fig. 13;
Fig. 20 is an exploded perspective view showing the battery pack shown in Fig. 19 as viewed from the back side;
Fig. 21 is an exploded perspective view showing a lead plate of the end surface of the battery assembly shown in Fig. 19;
Fig. 22 is an exploded perspective view showing lead plates to be coupled to a battery block row;
Fig. 23 is an exploded perspective view showing the battery block row of the battery assembly shown in Fig. 21 to be coupled to each other;
Fig. 24 is another exploded perspective view showing the battery block row of the battery assembly shown in Fig. 21 to be coupled to each other as viewed from another angle;
Fig. 25 is an exploded perspective view showing battery block rows to be coupled by a lead connection portion;
Fig. 26 is a cross-sectional view showing the battery block rows that are coupled to each other by penetration screws;
Fig. 27 is the perspective view showing a part of a first end surface cover through which the penetration screw passes;
Fig. 28 is the perspective view showing a part of a second end surface cover through which the penetration screw passes;
Fig. 29 is a schematic view showing the connection state of base batteries that compose the battery assembly shown in Fig. 21;
Fig. 30 is a perspective view of the battery block;
Fig. 31 is a perspective view of battery spacers;
Fig. 32 is a perspective view showing the battery spacers to be coupled to each other;
Fig. 33 is a cross-sectional view showing the battery spacers that are coupled to each other;
Fig. 34 is a perspective view showing lead connection portions according to a modified embodiment;

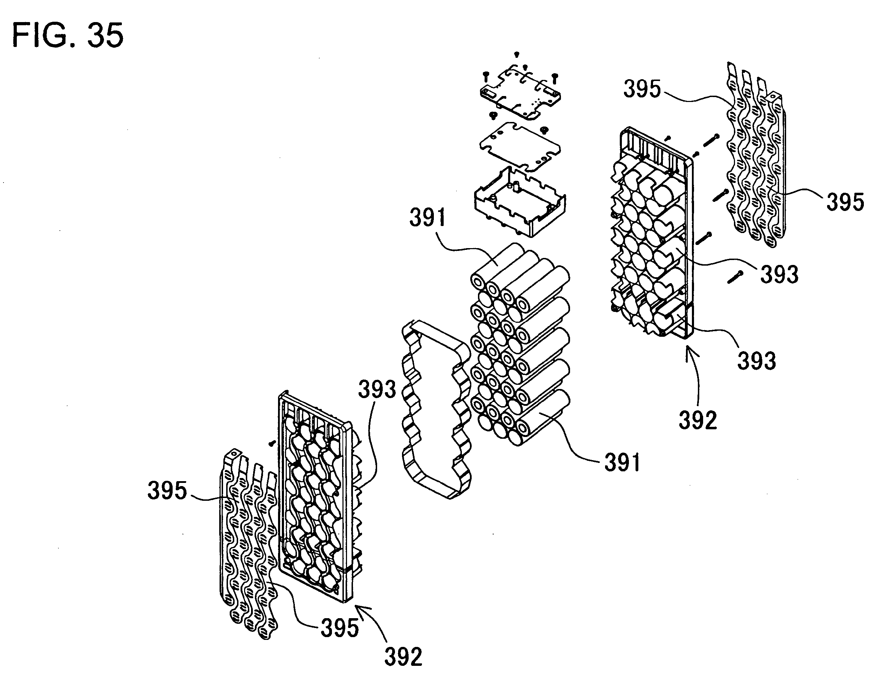

Fig. 35 is an exploded perspective view showing a conventional battery pack;

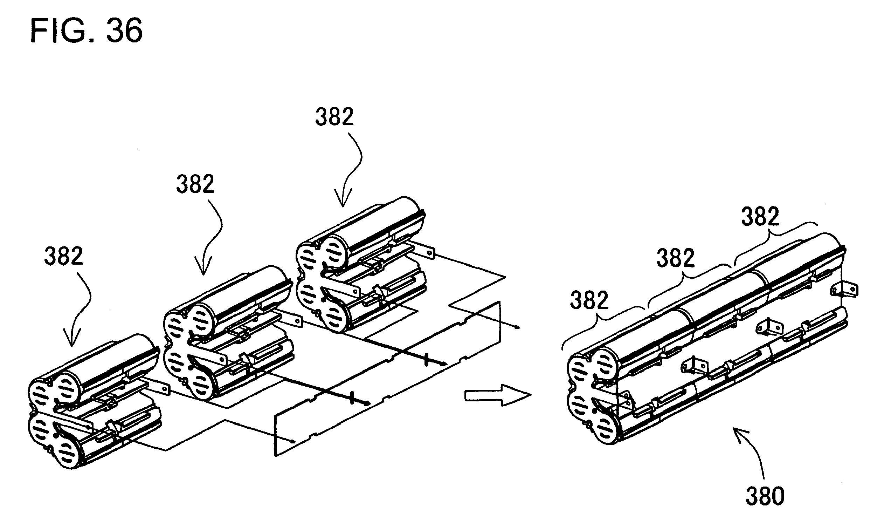

Fig. 36 is an exploded perspective view showing another conventional battery pack;
Fig. 37 is a perspective view of a battery pack according to a reference 2 of the present invention;
Fig. 38 is a bottom perspective view of the battery pack shown in Fig. 37 as viewed from the back surface;
Fig. 39 is a vertical traverse cross-sectional view of the battery pack shown in Fig. 37 corresponding to a V-V cross-sectional view of Fig. 41;
Fig. 40 is an exploded perspective view showing the battery pack shown in Fig. 37;
Fig. 41 is a cross-sectional view of a core pack of the battery pack shown in Fig. 40 corresponding to the VII-VII cross-sectional view of Fig. 39;
Fig. 42 is a perspective view showing the core pack of the battery pack shown in Fig. 40;
Fig. 43 is an exploded perspective view showing the core pack shown in Fig. 42;
Fig. 44 is an exploded view of the battery block;
Fig. 45 is a back perspective view showing the battery block shown in Fig. 44;
Fig. 46 is an exploded view of a secondary battery block;
Fig. 47 is a perspective view showing a manufacturing process of the core pack;
Fig. 48 is a perspective view showing another manufacturing process of the core pack;
Fig. 49 is a perspective view showing another manufacturing process of the core pack;
Fig. 50 is a perspective view showing still another manufacturing process of the core pack;
Fig. 51 is a perspective view showing another exemplary assembling process of the core pack;
Fig. 52 is a plan view showing the assembling process of the core pack shown in Fig. 51;
Fig. 53 is a bottom perspective view of a battery pack according to a reference 3 of the present invention;
Fig. 54 is a perspective view of the battery pack shown in Fig. 53 as viewed from the back surface;
Fig. 55 is an exploded perspective view showing the battery pack shown in Fig. 54;
Fig. 56 is an exploded perspective view of one end of an exterior case of the battery pack shown in Fig. 54;
Fig. 57 is an exploded perspective view of the other end of an exterior case of the battery pack shown in Fig. 54;
Fig. 58 is a front view of a closed portion of the exterior case shown in Fig. 56;
Fig. 59 is an exploded perspective view showing the closed portion shown in Fig. 58;
Fig. 60 is an exploded perspective view of the closed portion shown in Fig. 59 as viewed from the back surface;
Fig. 61 is an enlarged sectional view showing the battery pack shown in Fig. 53 to be mounted to an electric device;
Fig. 62 shows formation processes of an insulating portion of a charging connector.
Fig. 63 is a vertical traverse cross-sectional view of the battery pack shown in Fig. 54 corresponding to a XI-XI cross-sectional view of Fig. 64;
Fig. 64 is a cross-sectional view of a core pack of the battery pack shown in Fig. 55 corresponding to the XII-XII cross-sectional view of Fig. 63;
Fig. 65 is a perspective view showing the core pack of the battery pack shown in Fig. 55;
Fig. 66 is an exploded perspective view showing the core pack shown in Fig. 65;
Fig. 67 is an exploded view of the battery block;
Fig. 68 is an back perspective view showing the battery block shown in Fig. 67;
Fig. 69 is an exploded view of a secondary battery block;
Fig. 70 is a perspective view showing another manufacturing process of the core pack;
Fig. 71 is a side view showing an exemplary electric device to which a battery pack according to one reference the present invention is mounted;
Fig. 72 is a vertical sectional view showing another exemplary electric device to which a battery pack according to one reference the present invention is mounted; and
Fig. 73 is a perspective view of a battery pack according to another reference of the present invention.

### DETAILED DESCRIPTION OF THE EMBODIMENT(S)

The following description will describe embodiments according to the present invention with reference to the drawings.

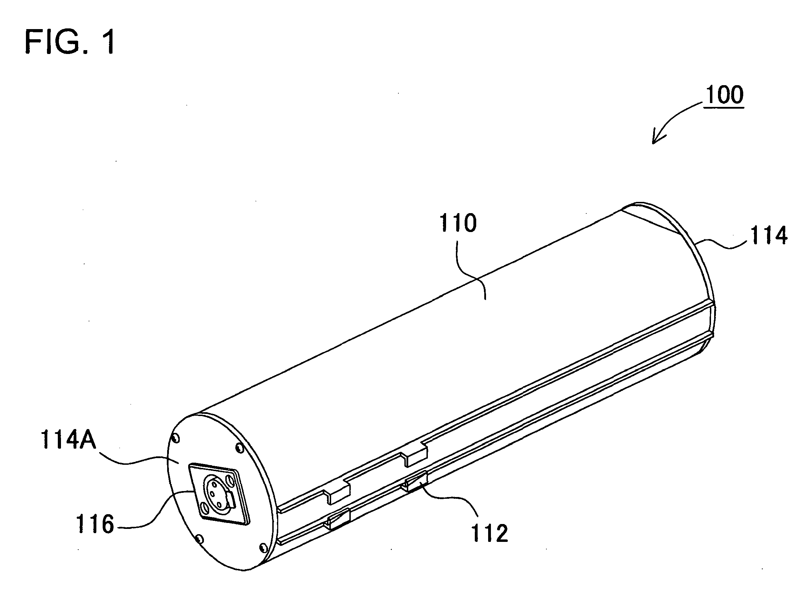

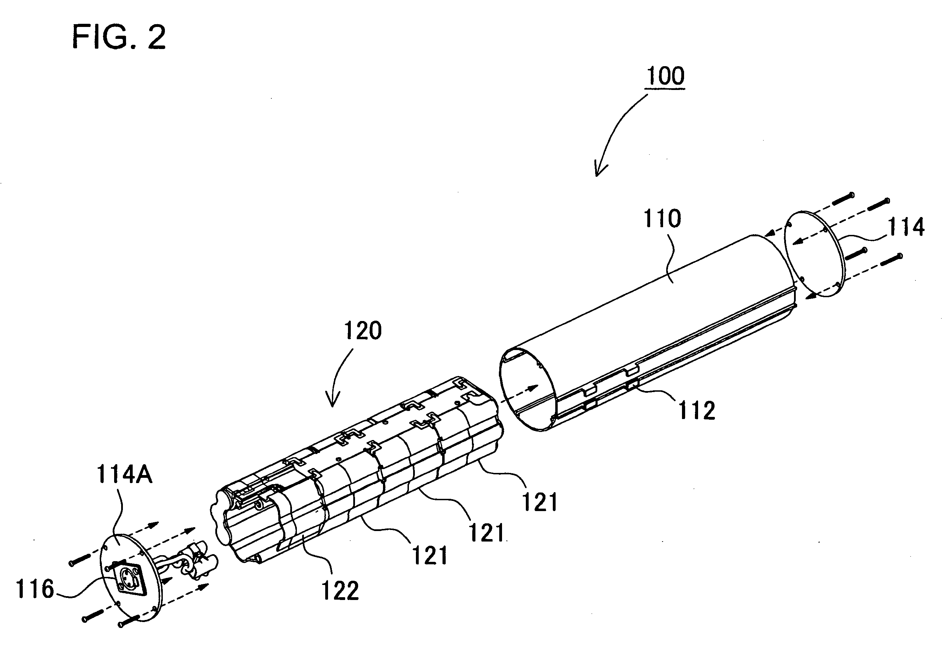

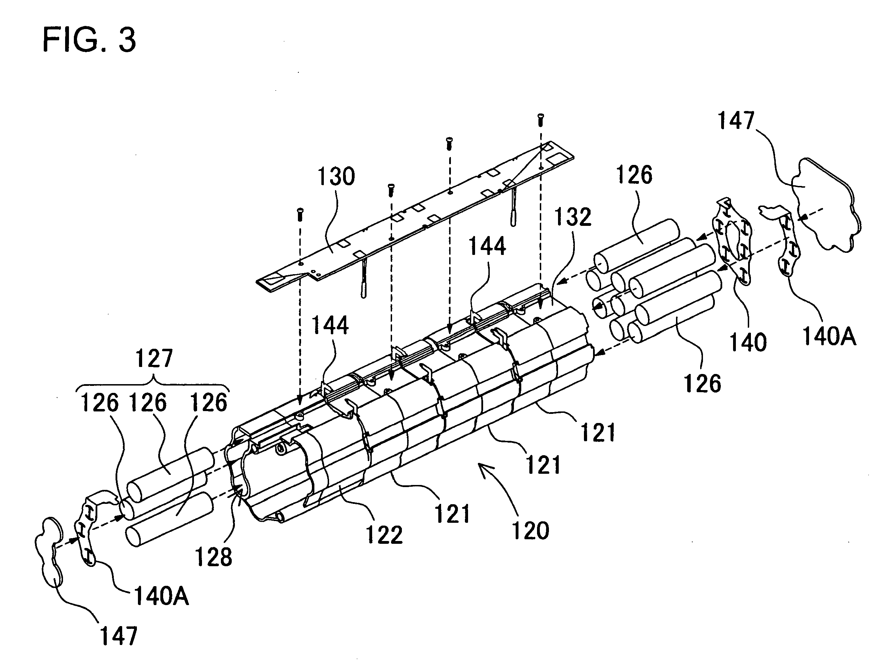

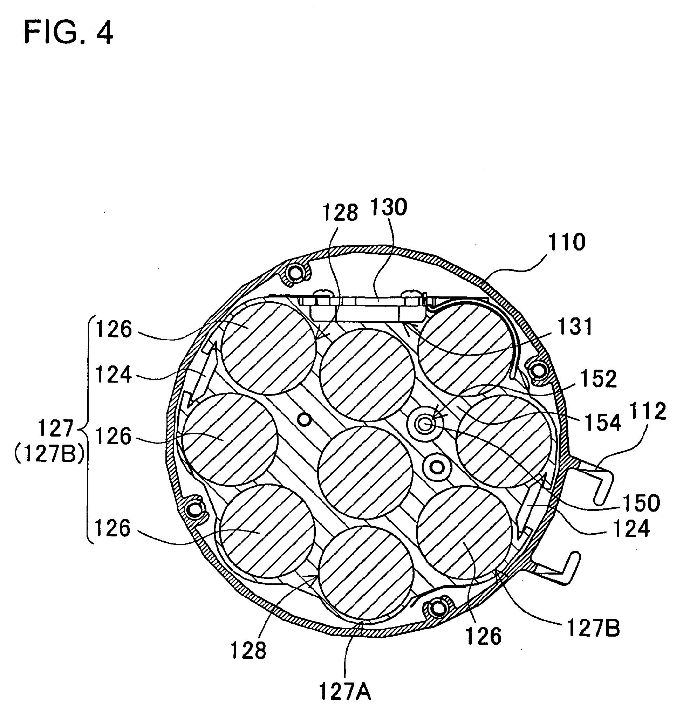

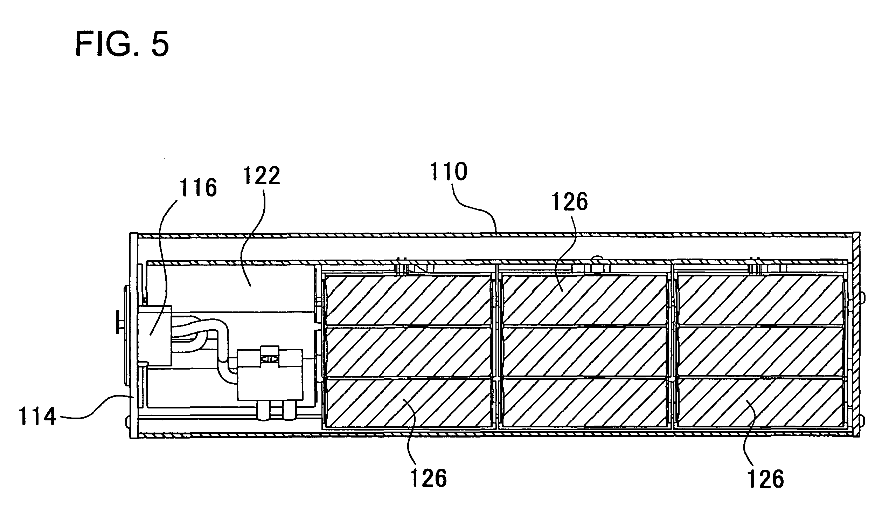

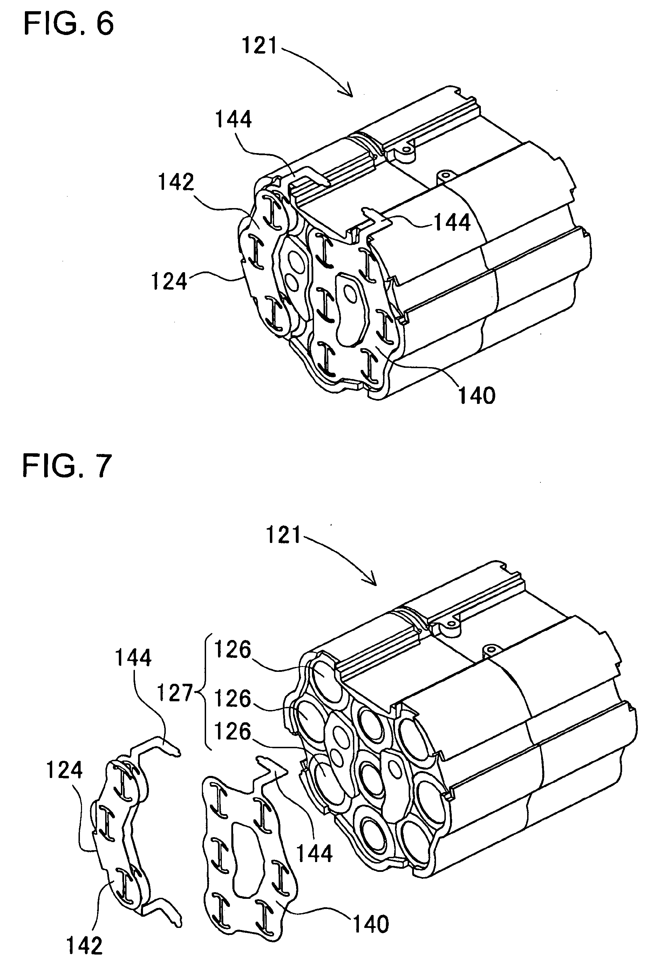

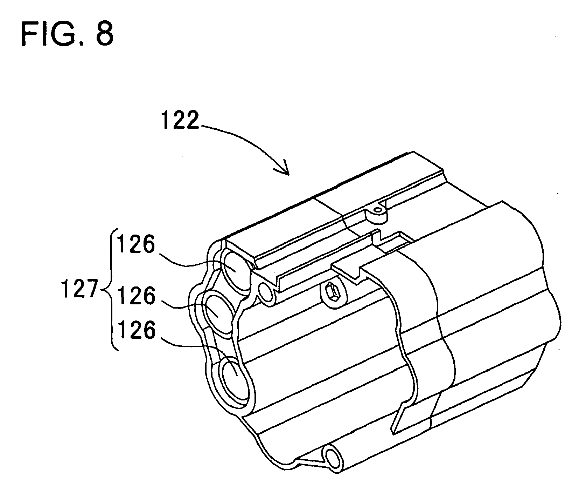

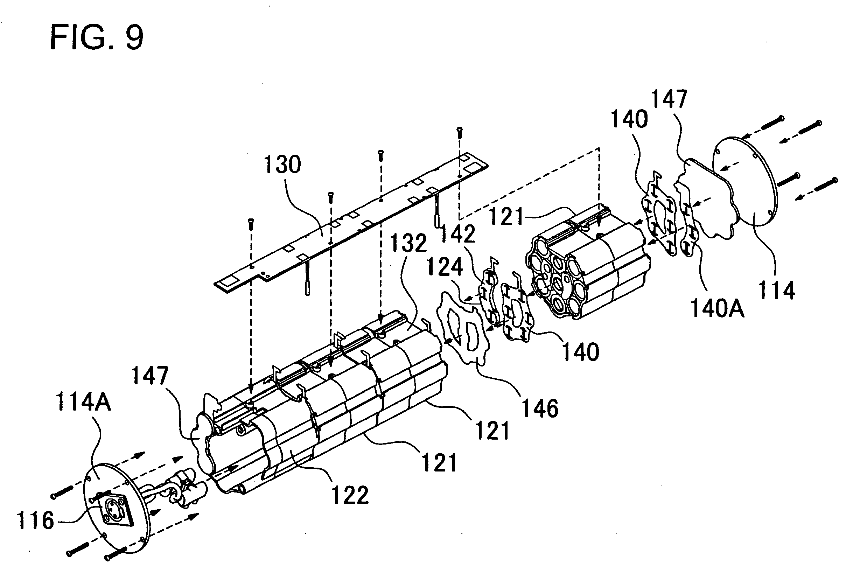

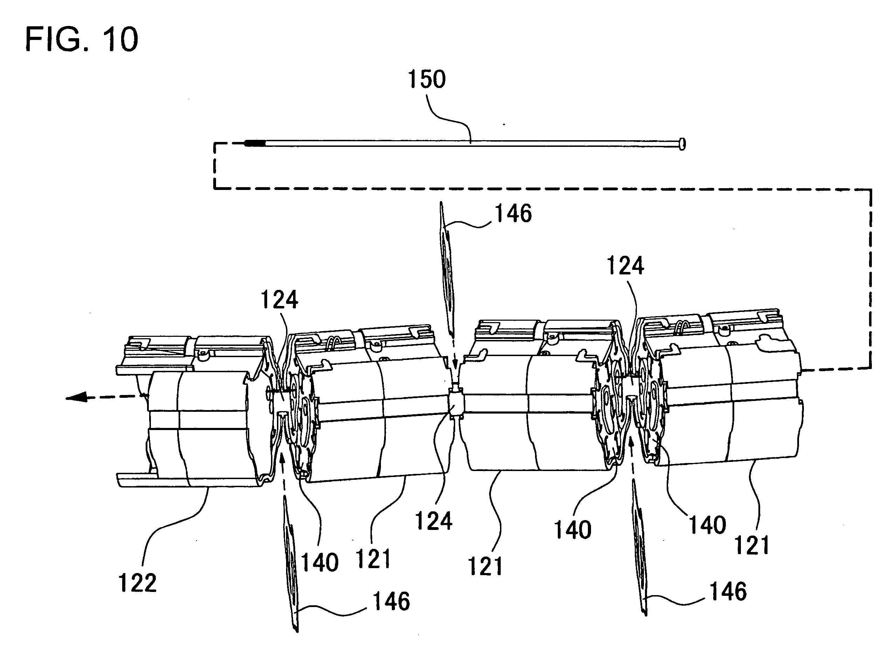

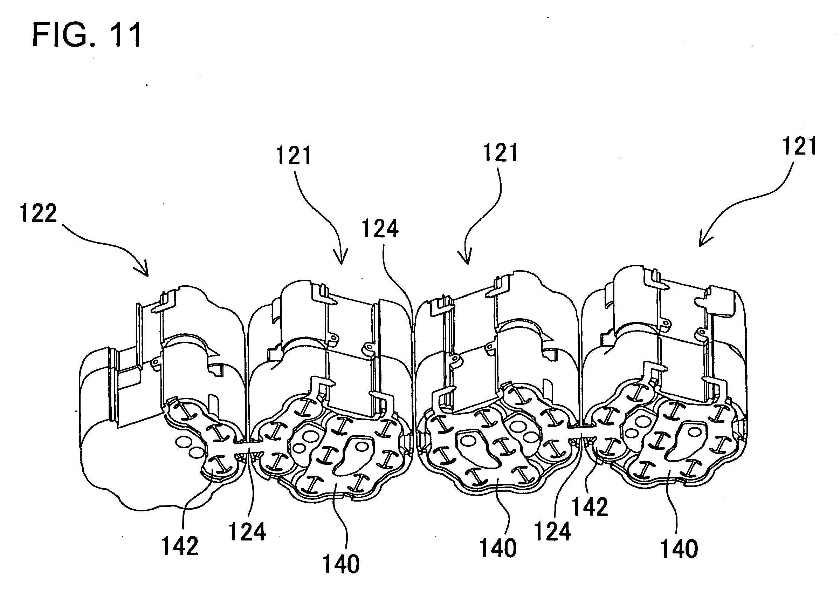

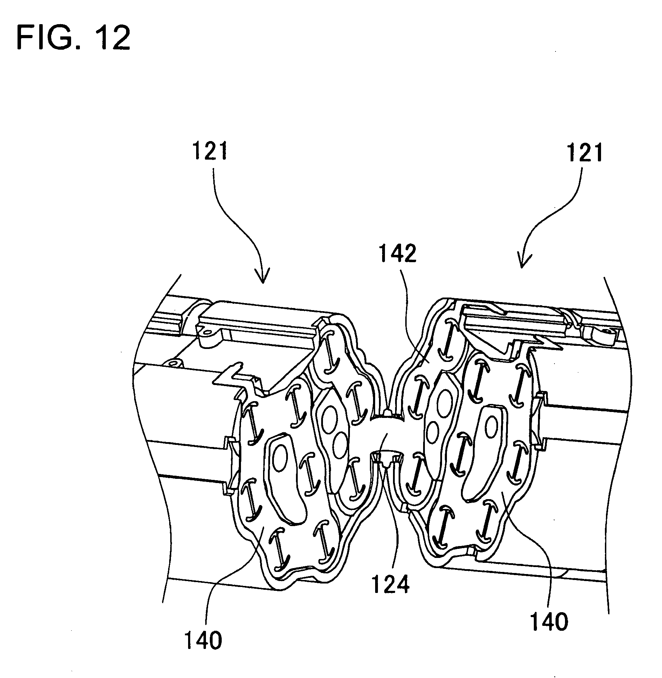

Figs. 1 to 12 show a battery pack 100 according to a reference 1 of the present invention. Fig. 1 is a schematic view showing the outward appearance of a battery pack according to a reference 1 of the present invention. Fig. 2 is an exploded perspective view showing the battery pack shown in Fig. 1 with an end surface plate being removed. Fig. 3 is a schematic view showing the outward appearance of a core block shown in Fig. 2. Fig. 4 is a traverse cross-sectional view of the core block. Fig. 5 is a longitudinal cross-sectional view of the core block. Fig. 6 is a perspective view showing a first battery block. Fig. 7 is an exploded perspective view showing the first battery block shown in Fig. 6 with lead plates being removed. Fig. 8 is a perspective view showing a second battery block. Fig. 9 is an exploded perspective view showing the core block with a circuit board being removed. Fig. 10 is a perspective view showing hinge members that are bent when the first battery blocks are coupled to each other. Fig. 11 is a perspective view showing the first battery blocks that are folded when the hinge members are not bent so that terminal end surfaces are arranged on the same side. Fig. 12 is an enlarged view of the hinge member. The illustrated battery pack 100 is a battery pack for a power assisted electric bicycle. The battery pack 100 has a substantially cylindrical the exterior case 10, which defines the exterior shape of the battery pack 100. Two sets of mount members 12 are arranged spaced away from each other in the vertical direction on the exterior case 10. Each set of mount members 12 includes a pair of mount parts that are symmetrically arranged with respect to a line. Each of the pair of mount parts is bent in an L-shape. Thus, the pair of mount parts together form a U shape. The battery pack 100 is mounted to the bicycle by the mount members 12. A plate-shaped connection member arranged in the bicycle is guided and inserted into the U-shaped opening. Thus, the battery pack 100 can be easily mounted to the bicycle. The mount member is not limited to this construction. The various known coupling mechanisms or any coupling mechanisms that will be developed in the future can be suitably used. The exterior case is not limited to have a cylindrical shape in section. The exterior case can have various types of tubular shapes substantially symmetric with respect to a line, for example, a tubular shape with curved lines in section, or a tube with polygonal shape in section. Shapes symmetric with respect to a line can include a horizontally symmetric with respect to a vertical line, a vertically symmetric with respect to a horizontal line, and a horizontally and vertically symmetric with respect to vertical and horizontal lines.

### (Exterior Case 10)

In this battery pack 100, the both end surfaces of the cylindrical exterior case 10 shown in Fig. 1 are closed by end surface plates 14. The exterior case 10 accommodates a core block 20 as shown in Figs. 2 and 4. The exterior case 10 is formed of strong and heat dissipative metal such as aluminum. The end surface plate 14 has a circular shape similar to the opening of the exterior case 10, and closes the opening end of the exterior case 10. Also, the end surface plate is formed of durable and heat dissipative metal similar to the exterior case 10. The end surface plate 14 is secured to the exterior case 10 by screws at four corners. In addition, an output terminal connector 16 is arranged on one of the end surface plates 14 (left-side end surface plate 14A in Fig. 2).

### (Core Block 20)

In the core block 20, as shown in the perspective view of Fig. 3 and the longitudinal sectional view of Fig. 5, a plurality of first battery blocks 21 are arranged side by side in a longitudinal direction. In the example of Fig. 3, three first battery blocks 21, and one second battery block 22 are arranged side by side. The second battery block 22 is coupled to a first battery block end surface. Bendable hinge members 24 couple first battery blocks 21 adjacent to each other. The hinge member 24 is a plate-shaped member that couples the first battery blocks 21 to each other.

### (First Battery Block 21)

The exterior shape of the first battery block 21 is shown in the perspective view of Figs. 6 and 7. The first battery block 21 has a substantially cylindrical outward appearance. The both ends of first battery block 21 are opened. The cylindrical battery cells 26 are arranged along the peripheral wall of the first battery block 21. Thus, the first battery block 21 has convex and concave parts corresponding to the outward appearances of the cylindrical battery cells 26. Since the first battery block 21 has the convex and concave parts, when the first battery block 21 is inserted into the cylindrical exterior case 10, interspaces are created between the first battery block 21 and the exterior case 10 as shown in the cross-sectional view of Fig. 4. Screw-passing holes 52, the hinge members 24 and the like are arranged in the interspaces. The screw-passing holes 52 receive screws for securing the end surface plates 14 to the exterior case 10. The hinge member 24 couples the first battery blocks 21 to each other.

The first battery block 21 has accommodation space portions 28 each of which can accommodate the battery cell 26. The opening direction of the accommodation space portion 28 is specified to agree the cylindrical shape axis of the battery cell 26 with the opening direction of the first battery block 21 when the battery cell 26 is accommodated in the accommodation space portion 28.

As shown in Figs. 4 and 7, the accommodation space portions 28 are classified into side groups and a central group. The side groups are located on the both side parts. The central group is located on the central part. Each of the side groups and the central group accommodates three battery cells 26. Correspondingly, battery cells 26 are classified into three battery cell groups 27 of the side battery groups (curvedly-arranged battery cell groups) and the central battery group (centrally-arranged battery cell group). Each of the battery cell groups 27 includes three battery cells 26. The central battery cell group 27 is arranged lower than the side battery cell groups 27. Thus, space is created above the central battery cell group 27. The space serves as a circuit board accommodation space 31 that accommodates a circuit board 30. The central battery cells 26 are aligned substantially in a straight line. The lowest battery cell of the central battery cells 26 slightly protrudes downward in the sectionally circular shape relative to the side battery cells. Accordingly, the central lower part of the space can be effectively used. The battery cells of the side battery cell groups 27 are arranged along the side surfaces. The length of half the circumference of a circle is longer than the diameter of the circle. Even if the side battery cell groups 27 are located higher than the central battery cell group 27, it is possible to achieve a balance. Thus, only the central battery cell group 27 is offset downward. As a result, it is possible to effectively use the limited cylindrical space. Consequently, it is possible to provide accommodation space between the cylindrical battery cells 26 for accommodating the plate-shaped circuit board 30.

In this reference, the exterior case 10 has a substantially perfect circle on in section. Although the first battery block 21 has the convex and concave parts including the accommodation space portions 28 for accommodating the battery cells 26, the outermost parts of the first battery block 21 have an arc shape corresponding to the perfect circle of the exterior case 10. Accordingly, the exterior case 10 can accommodate the first battery block 21 without the first battery block 21 wobbling. However, the present invention is not limited to a cylindrical shape with perfect circular in section. Depending on the number of battery cells to be accommodated, the sectional shape can be an ellipse shape, for example. For example, in the case where battery cells are aligned in five lines, the sectional shape can be a horizontally-elongated ellipse shape.

In the thus-constructed first battery block 21, three battery cells of the battery cell group 27 are connected in parallel to each other, and the battery cell groups 27 are serially connected to each other. Thus, one first battery block 21 includes nine battery cells 26, which are connected to each other in three-serial and three-parallel connection. As shown in Fig. 3, three first battery blocks 21 are serially connected to each other. Thus, total 27 battery cells 26 are connected to each other in nine-serial and three-parallel connection. The second battery block 22 is additionally connected to the end surface first battery block 21 (second block from the left side in Fig. 2). The second battery block 22 has three accommodation space portions 28 each of which accommodates battery cell 26. The accommodation space portions 28 are arranged along one of the side surfaces of the second battery block 22 (the left side in Fig. 8) as shown in the perspective view of Fig. 8. The rest part of the second battery block 22 forms a cavity. As shown in Fig. 2 or the like, this cavity part can be used as accommodation space for accommodating the output terminal connector 16. In addition, since three battery cells 26 in the second battery block 22 are serially connected to the first battery block 21, total 30 battery cells 26 are connected to each other in ten-serial and three-parallel connection by the these three first battery blocks 21 and one second battery block 22. For example, in the case where lithium-ion rechargeable batteries of 3.6 V/cell are employed as the battery cells 26, since ten battery cells are serially connected, output of 36 V can be provided.

### (Second Battery Block 22)

The second battery block 22 has substantially the same exterior shape as the first battery block 21, and the accommodation space portions 28, which accommodate the battery cells 26 the number of which is less than the first battery block 21. The first battery block 21 shown in Fig. 7 can accommodate nine battery cells 26, while the second battery block 22 shown in Fig. 8 can accommodate three battery cells 26. The rest space other than the accommodation space portions 28 can accommodate various types of other members.

Needless to say, the first battery block or the second battery block does not necessarily accommodate the battery cells in all of the accommodation space portions. The number of battery cells that are accommodated in the first battery block or the second battery block can be suitably adjusted depending on requirements such as required voltage, the number of battery cells that are connected to each other in parallel. The number of the first battery blocks or the second battery blocks that are arranged side by side is not limited to this reference but can be suitably adjusted depending on requirements. For example, the core block can consist only of the first battery blocks arranged side by side without the second battery block. Alternatively, the core block can consist only of second battery blocks. Also, needless to say, the second battery blocks can be arranged on the both end surfaces of the assembly of the first battery blocks. Also, a plurality of second battery blocks can be arranged side by side on an end surface of the assembly of the first battery blocks. The first battery blocks 21 and the second battery block 22 are formed of a highly insulating material such as resin. Each of the first battery blocks 21 and the second battery block 22 shown in Fig. 6, Fig. 7, and Fig. 8 includes two divided battery block sections. The reason is to remove the battery block from molds. The divided battery block sections are coupled to each other by an adhesive or a screw.

### (Battery Cell 26)

The cylindrical or tube-shaped battery cells 26 are orientated so that their center axes are parallel to each other. Rechargeable batteries such as lithium ion batteries, nickel-hydrogen batteries, nickel-cadmium batteries can be suitably used as the battery cells 26.

### (Circuit Board 30)

The circuit board 30 includes electronic circuits such as a control circuit that controls discharging operation or charging/discharging operation of the battery cells 26. The circuit board 30 has a plate shape, and extends in the longitudinal direction of the core block 20 as shown in Figs. 3 and 9. The upper surface of the core block 20 serves a flat circuit board mount surface 32 that is formed by the upper surfaces of the battery blocks substantially coplanar with each other when the first battery blocks 21 and the second battery block 22 are arranged side by side. After the circuit board 30 is attached onto the upper surface of the core block 20, and the necessary wiring is installed, the core block 20 with the circuit board 30 can be easily inserted into the exterior case 10. Conventionally, the circuit board is arranged on an end surface of the core block. If it is required that the potential at a middle point among battery cells is detected, the lead line necessarily extends from the circuit board to the desired point for electrical connection. Such wiring is installed at much expense in time and effort. In addition, as the number of battery cells increases, the number of the lead lines will also increase. If the number of the lead lines increases, the lead lines may intertwine with each other or may rubs against each other, which in turn may cause a problem in mechanical strength. Contrary to this, the elongated circuit board 30 extends in the longitudinal direction in that the battery cells 26 are serially connected to each other. Accordingly, the distance between the circuit board 30 and each of the battery cells 26 can be short. Therefore, it is possible to easily install wiring between the circuit board 30 and the battery cell 26, for example, in the case where the potential at a middle point among battery cells is detected. In the battery pack shown in Figs. 3 and 6, wiring is installed by bent portions 44 of the lead plates 40 of the battery blocks that extend from the upper edges of the battery blocks facing the circuit board 30 without using separated lead lines. Accordingly, assembling processes can be simplified. In addition, separated lead lines are not required.

As best seen from Fig. 3, sectionally L-shaped bent portions of end surface leads 40A are attached to the both end surfaces of the core block 20, and are connected to the circuit board 30. As shown in Fig. 3 and Fig. 9, insulating sheets 47 are interposed between the end surface leads 40A and the end surface plates 14A and 14. The output from the circuit board 30 is provided to the output terminal connector 16 through internal connectors via lead lines (not shown).

### (Hinge Member 24)

As shown in Figs. 10 and 11, the first battery blocks 21 adjacent to each other are coupled to each other by the bendable hinge members 24, and the first battery block 21 and the second battery block 22 are coupled to each other by the bendable hinge member 24. The hinge member 24 is formed of a plate-shaped member as shown in the enlarged view of Fig. 12. The plate-shaped member is bendable for hinging. In this reference, a part of lead plate is constructed bendable that electrically connects the battery cells 26 of the adjacent first battery blocks 21 to each other. This bendable lead plate 42 serves as the hinge member 24. In the case where the bendable lead plate 42 has enough mechanical strength, the bendable lead plate 42 can serve as the hinge member 24. Thus, a single member can provide mechanical coupling and the electric connection. Therefore, it is possible to reduce the component count. However, the lead plate and the hinge member may be separated members. In this case, the hinge member and the lead plate are arranged on the same side of the first battery block so that when the hinge member is bent, the lead plate can be correspondingly bent.

As shown in Fig. 10, one hinge member 24 is arranged on one end surface of one first battery block 21 at a different position from (preferably, a diagonal side to) another hinge member 24 on the other end surface of the one first battery block 21. For example, in the case where one hinge member 24 is arranged on the left side on one end surface of one first battery block, another hinge member 24 is arranged on the right side on the other end surface of the one first battery block. Since the hinge members 24 are arranged on alternate sides of first battery blocks 21, the first battery blocks 21 can be folded in zigzag arrangement. As a result, as shown in Fig. 11, when the first battery blocks 21 is folded, the end surfaces of the first battery blocks 21 can be aligned on the two common planes. Since the end surfaces of the first battery blocks 21 can be aligned on the two common planes in the folded state, the lead plates 40 can be collectively connected to the battery cells 26 in the first battery blocks 21 from the two common plane sides by spot welding, for example. As compared with a conventional connection process in that the lead plates are connected to the both end surfaces of the first battery blocks one by one, the workability can be remarkably improved. After the lead plates 40 are connected to the battery blocks, the hinge members 24 are bent so that the battery blocks are brought into the arrangement shown Fig. 10, and are arranged side by side into the arrangement shown in Figs. 2, 3 and 5. In the side-by-side arrangement shown in Figs. 2, 3 and 5, the battery blocks can be securely coupled to each other by a penetration screw 50 (discussed later).

The aforementioned construction can be achieved by alternate arrangement of the hinge members 24 for connecting the adjacent first battery blocks 21 to each other. That is, since the positions of the hinge members 24 agree with the positions of the lead plates 40 between the adjacent first battery blocks 21, and the positions of the lead plates 40 for coupling the first battery blocks 21 are alternately arranged on alternate sides, the aforementioned construction can be achieved. To achieve this, each of the first battery blocks 21 includes an odd number of battery cell groups 27 each of which includes of a plurality of battery cells 26, and the battery cell groups 27 are connected serially to each other. Specifically, the odd number of battery cell groups 27 are in parallel to each other, and the end surfaces of the adjacent battery cell groups 27 are aligned on substantially the two common planes. The positive/negative terminals of the adjacent battery cell groups 27 on one common plane are opposite to each other. That is, the adjacent battery cell groups 27 are alternately orientated so that different types of terminals of the adjacent battery cell groups 27 are arranged on one common plane. The terminals of the adjacent battery cell groups 27 that have opposite polarity to each other are connected to each other and are substantially arranged on one end surface coplanar with each other are connected to each other by the lead plates 40 so that the battery cell groups 27 in one first battery block 21 are serially connected to each other. The odd number of battery cell groups 27 in each of the first battery blocks 21 are in parallel to each other and are serially connected to each other. As a result, one of the positive/negative terminals of one battery block to be connected to an adjacent battery block is arranged on one of the end surface of the one battery block, and the other of the positive/negative terminals of one battery block to be connected to another adjacent battery block is arranged on the other of the end surface of the one battery block. As a result, when the first battery blocks 21 are arranged side by side to each other and are serially connected to each other, members for the first battery blocks 21 connection will not interfere with each other. Therefore, wiring can be smoothly installed when the first battery blocks 21 are connected to each other.

In addition, each of the battery cell groups 27 includes the battery cell 26 that are connected to each other in parallel. Accordingly, the lead plates 40 connect all of the battery cells 26 included in one battery cell group 27. In addition, adjacent battery cell groups 27 are serially connected to each other by the lead plate 40 as shown in Fig. 6, or by the bendable lead plate 42 as shown in Fig. 12. According to this construction, a reduced number of lead plates 40 and bendable lead plates 42 can connect the battery cells 26 to each other in parallel and can serially connect the battery cell group 27 to each other. In addition to reduction of the number of the lead plates and the like, since the lead plates and the like can be collectively connected (welded) to the battery cells 26 on common planes, it is possible to remarkably improve battery pack assembling efficiency as compared with conventional assembling efficiency.

In addition, an insulating sheet 46 can be interposed between parts between the bent bendable lead plate 42, and between the lead plates 40. Accordingly, it is possible to prevent that unintended discharge occurs between opposed lead plates.

### (Screw-Passing Hole 52)

The first battery blocks 21 and the second battery block 22 are arranged side-by-side by bending the hinge members 24 between the first battery blocks 21 and the second battery block 22. Thus, the core block 20 in the side-by-side arrangement is constructed. The side-by-side arranged first battery blocks 21 and second battery block 22 are fastened by a fastening member for holding the side-by-side arrangement of the core block. In the core block 20 shown in Figs. 2 and 3, the penetration screw 50 is used as the fastening member. As shown in Figs. 4, 7, 8, and the like, each of the battery blocks has the screw-passing hole 52. The screw-passing hole 52 is preferably formed in a spacer 54 between the central battery cell group 27A and the side battery cell group 27B. The spacer 54 is preferably formed integrally with a member that composes the battery block by molding. In the reference shown in the cross-sectional view of Fig. 4, the spacer 54 is arranged on each of the left and right sides of the central battery cell group 27A. The central battery cell group 27A is aligned in a straight line. The side battery cell groups 27B are arranged along the side surfaces of the cylindrical battery block, that is, are curvedly arranged. Accordingly, space is created between the central battery cell group 27A and the side battery cell group 27. Since the screw-passing hole 52 is formed in the space, the screw-passing hole 52 can be effectively formed in limited interior space of the battery block. In the case where the spacer 54, which defines the screw-passing hole 52, is formed of an electrically-insulating member, the spacer 54 can serve as a divider that insulates the central battery cell group 27A and the side battery cell group 27 from each other as shown in the cross-sectional view of Fig. 4. In particular, in the case where he central battery cell group 27A and the side battery cell group 27 are thermally insulated from each other, in case where one of the battery cells 26 in the battery cell group 27 rises in temperature, it is possible to reduce adversely effect on other battery cells in the battery cell group 27.

The screw-passing holes 52 are formed at positions in the first battery blocks 21 and the second battery block 22 corresponding to each other so that the screw-passing holes 52 are aligned in a straight line when the first battery blocks 21 and the second battery block 22 are arranged side-by-side. The penetration screw 50 to be inserted into the screw-passing holes 52 has a length capable of penetrating all of the battery blocks that are arranged side by side. The penetration screw 50 can be a sufficiently mechanically strong member such as metal screw. Since the penetration screw 50 penetrates all of the battery blocks in the side-by-side arrangement and fastens the battery blocks to each other, the battery block can be sufficiently strongly secured as a unitary member. In particular, as compared with conventional coupling in that hook structures couple adjacent battery blocks to each other only at gaps between the adjacent battery blocks, since the penetration screw 50 as a core rod passes through the entire battery blocks, it is possible to remarkably increase mechanical strength, and to remarkably improve reliability in strength. In the reference shown in Fig. 4, the screw-passing hole 52 is arranged only in the right-side spacer 54 among the spacers arranged in the left and right sides of the central battery cell group 27A. The battery blocks are fastened by one penetration screw 50. However, needless to say, two or more penetration screws can be according used as desired. The screw hole is not limited to be formed in the spacer. For example, the screw hole can be formed in space between the core block and the exterior case.

Thus, battery blocks can be firmly coupled to each other. Conventionally, in the battery pack, from viewpoint of output adjustment, assembling workability, and the like, battery cells are accommodated in a plurality of divided blocks. In this conventional case, it is difficult to sufficiently strongly fasten the battery blocks. Conventionally, the battery blocks are generally interlocked by hook structures. Thus, only parts between adjacent battery blocks are coupled. In the case where a number of battery blocks are arranged side by side, if only parts between adjacent battery blocks are coupled, the entire battery blocks cannot be secured as a whole. For this reason, a structure is desired that can improve mechanical strength. However, if such a securing structure is added, the exterior shape will be larger. Such a securing structure does not meet size reduction requirement. Contrary to this, since the penetration screw 50 penetrates the entire battery blocks arranged side by side, and the screw-passing holes 52 are formed in space between battery cell groups 27, it is possible to prevent that the exterior shape of the battery pack is increased as compared with the case where hook structures are arranged on the outer peripheries of battery blocks.

### (Embodiment 1)

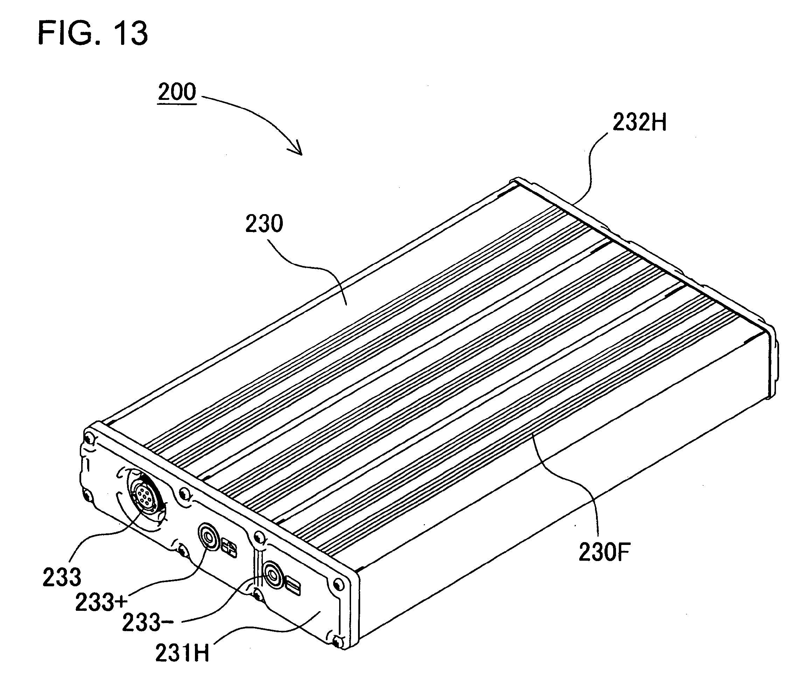

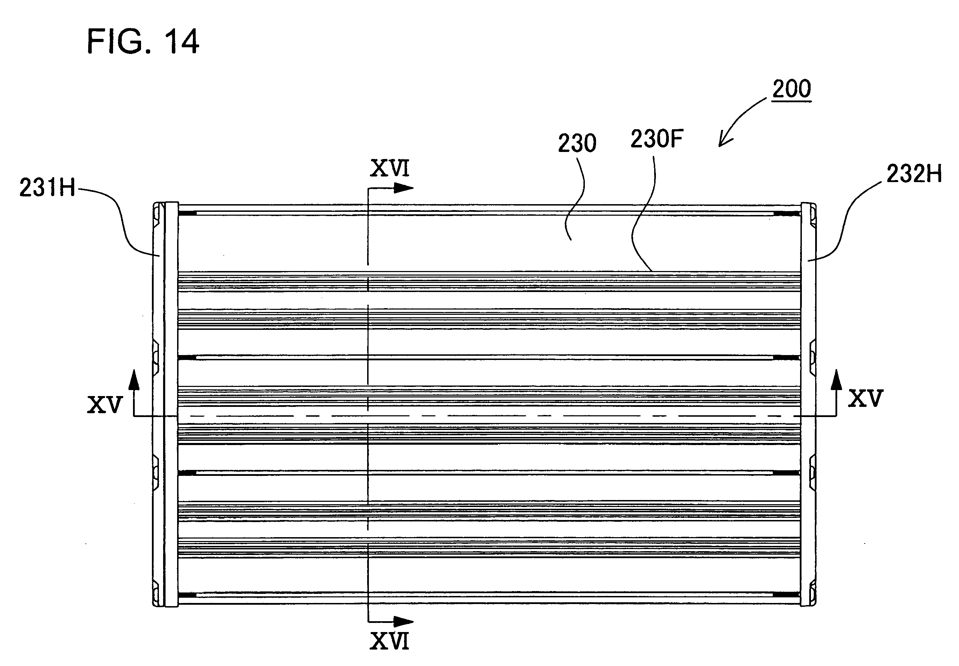

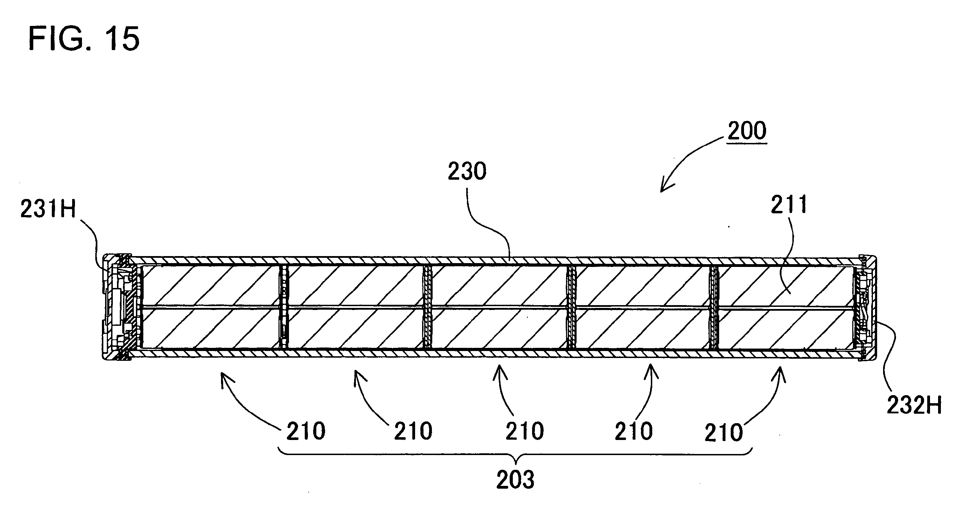

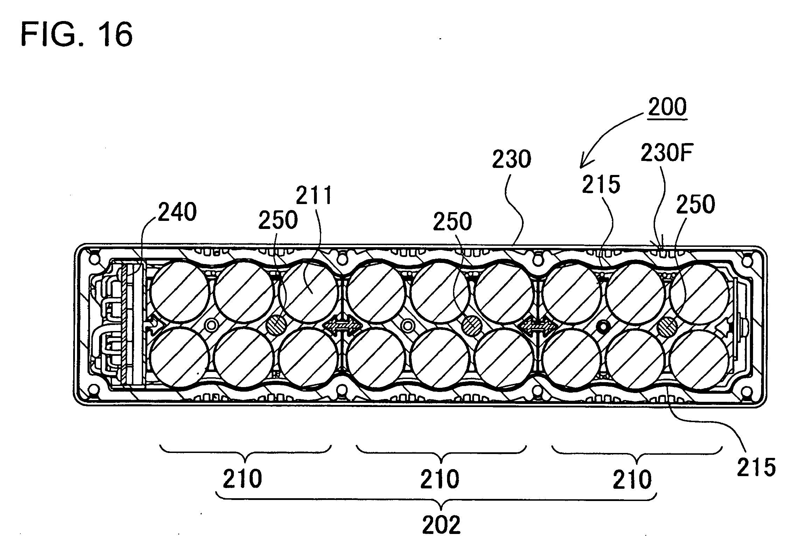

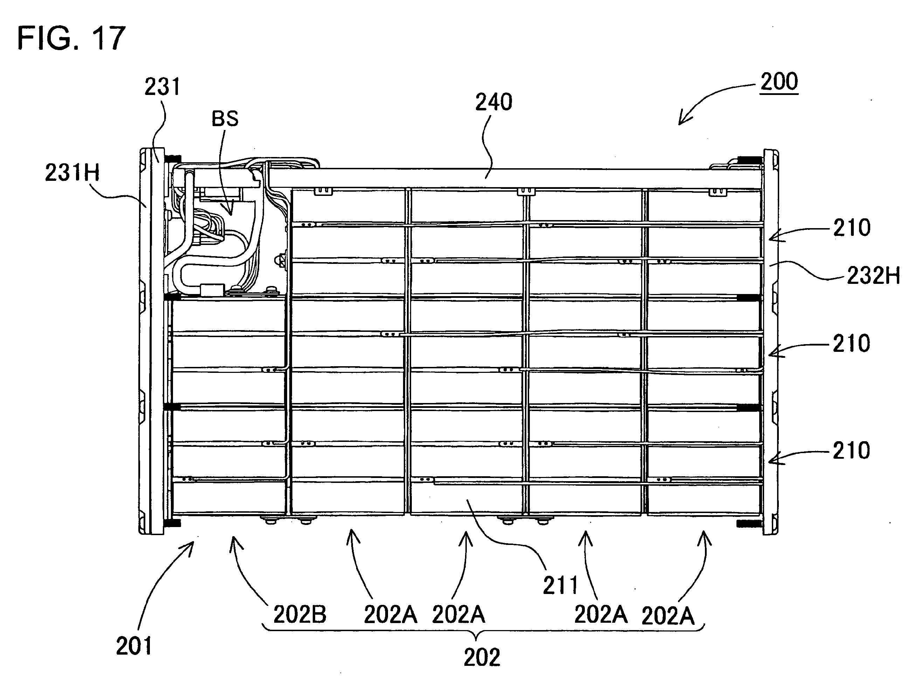

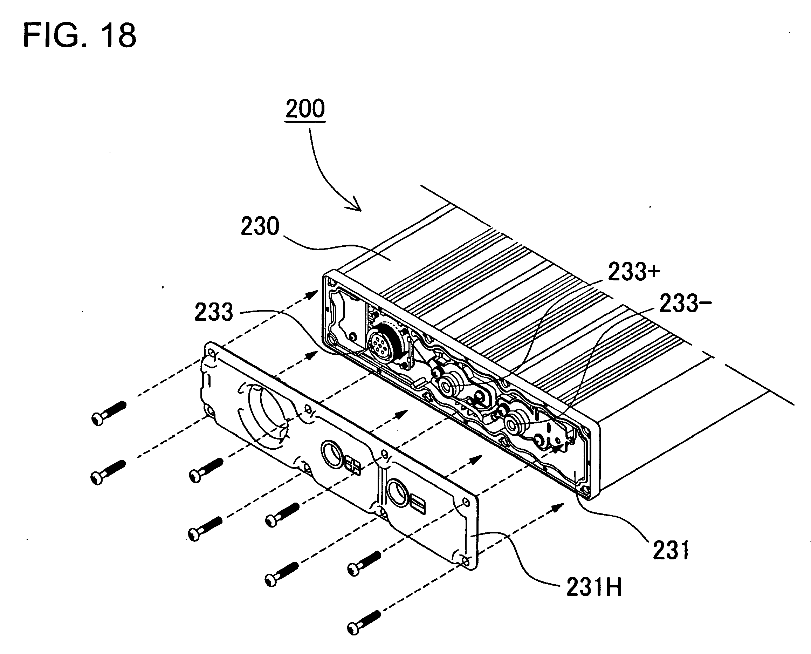

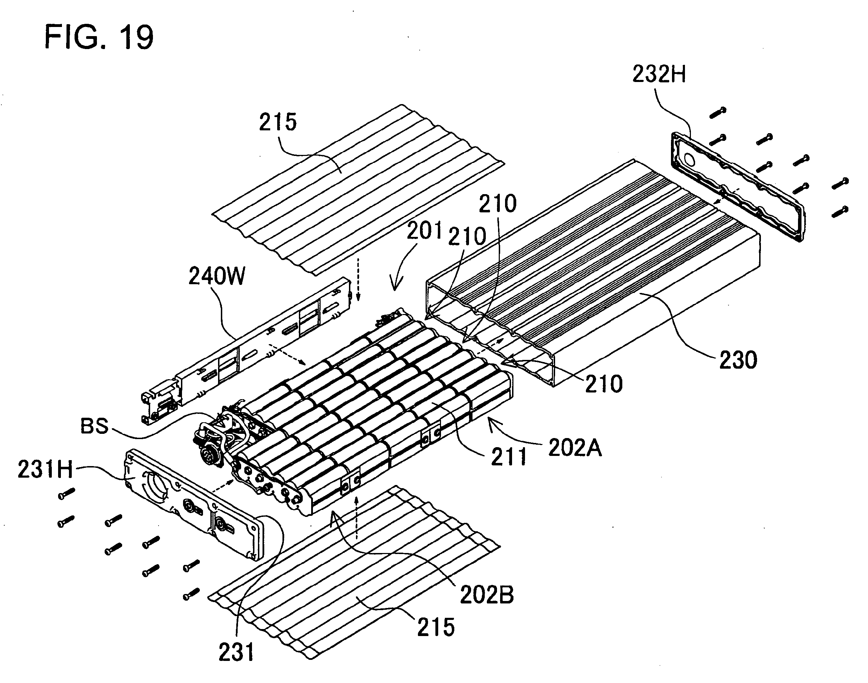

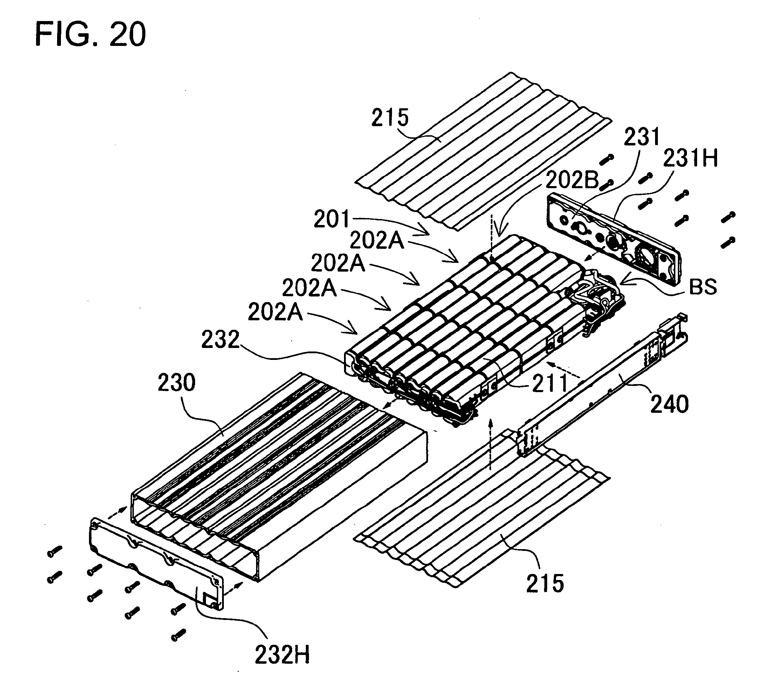

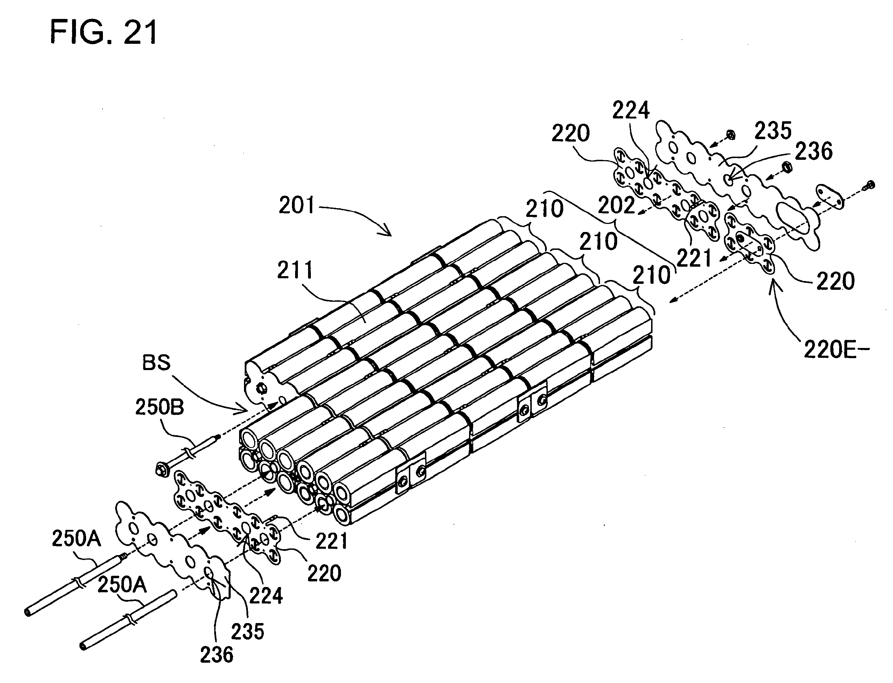

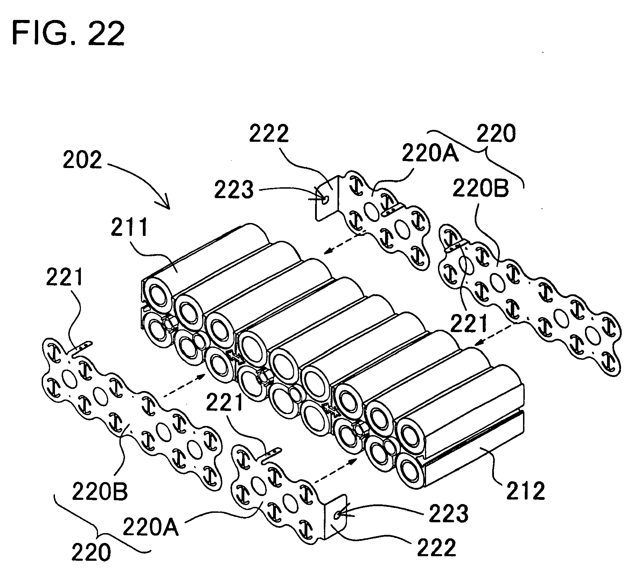

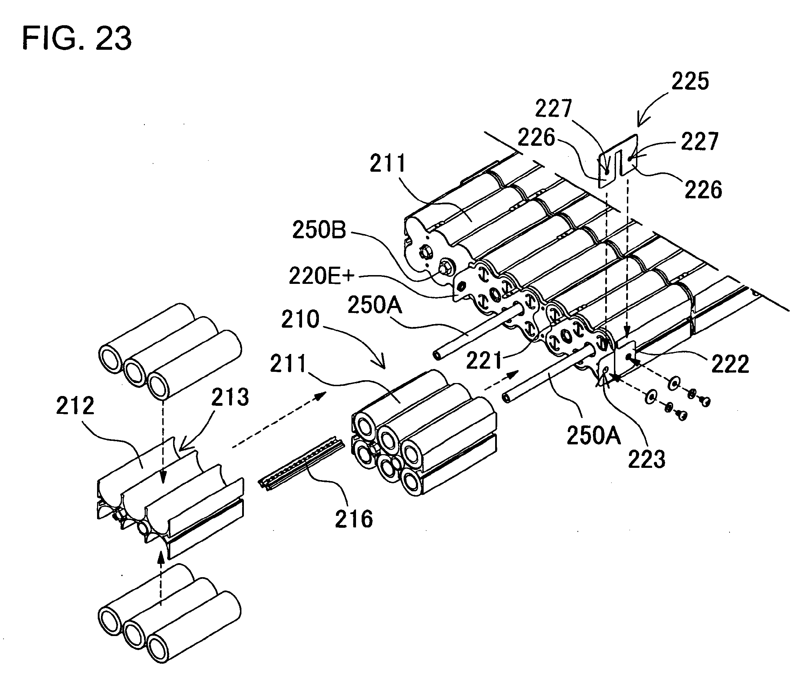

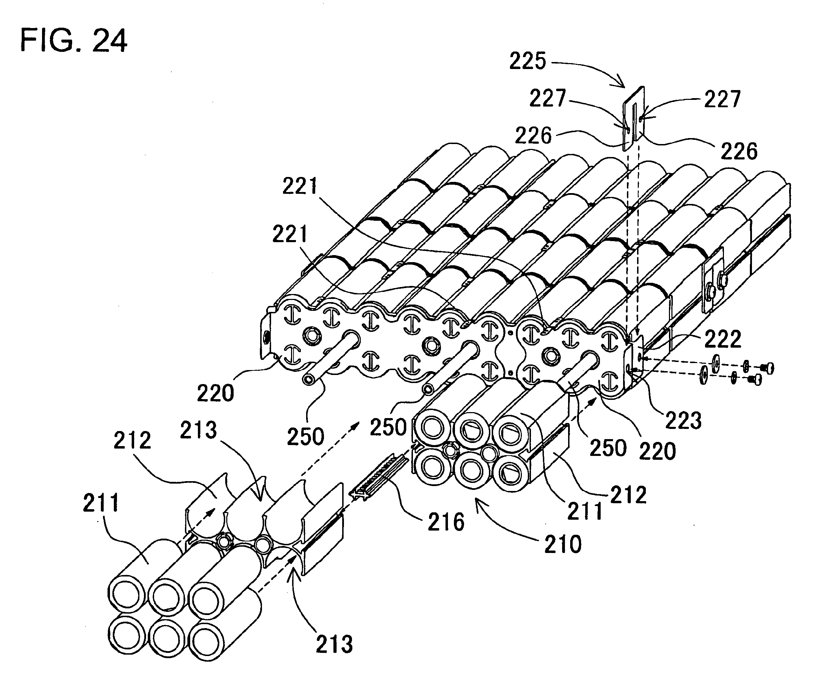

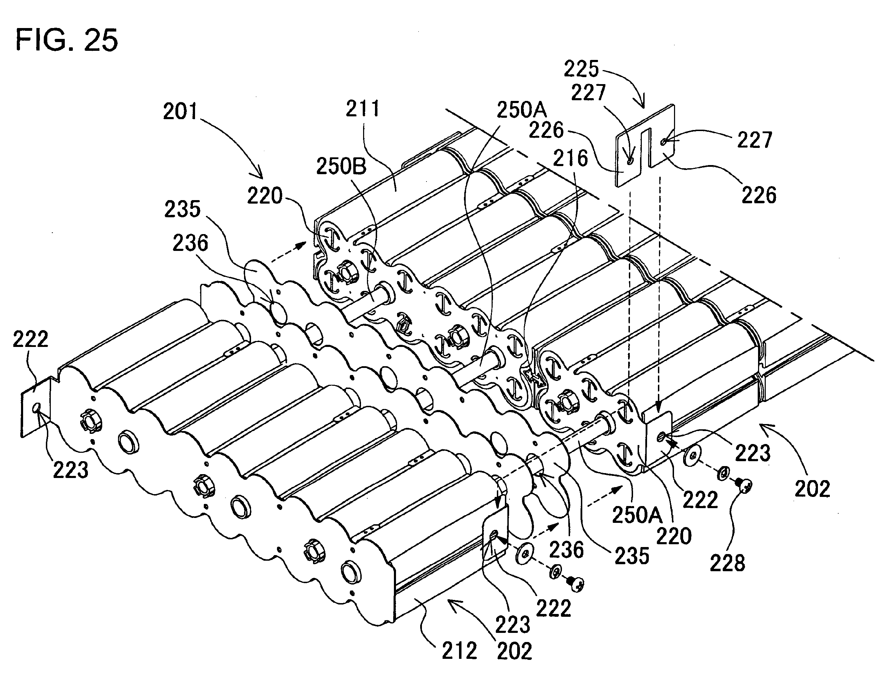

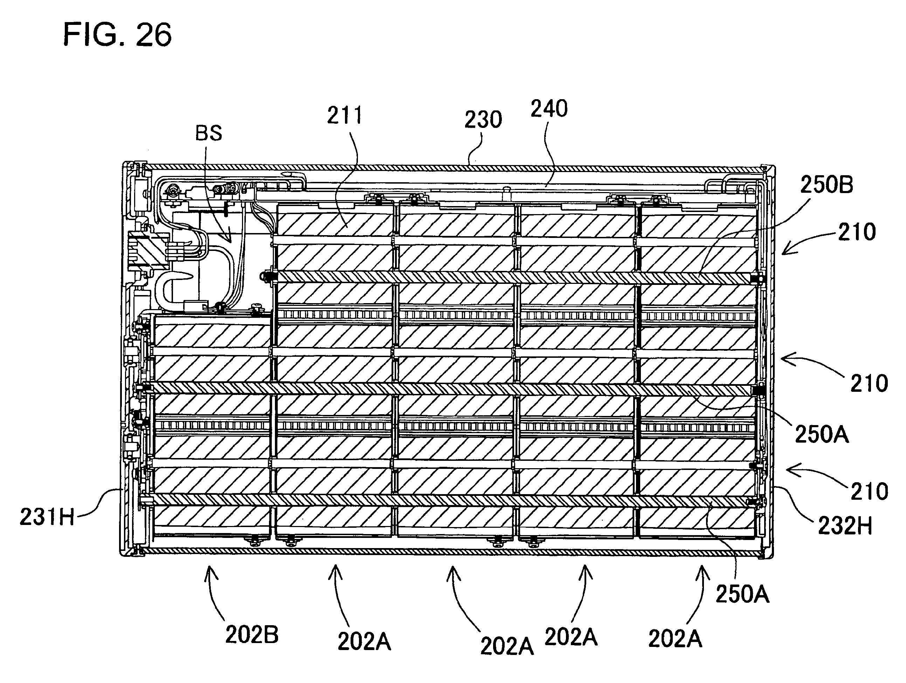

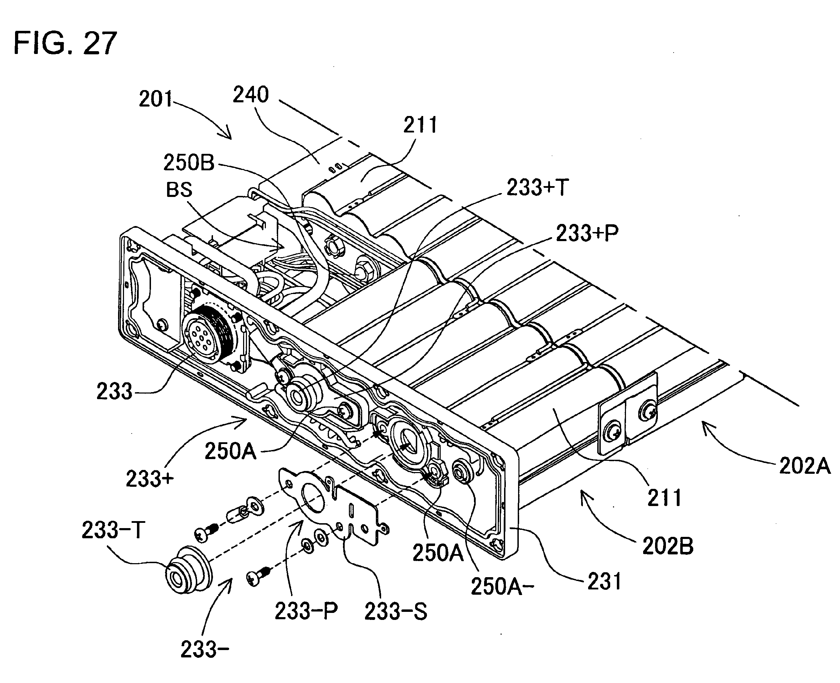

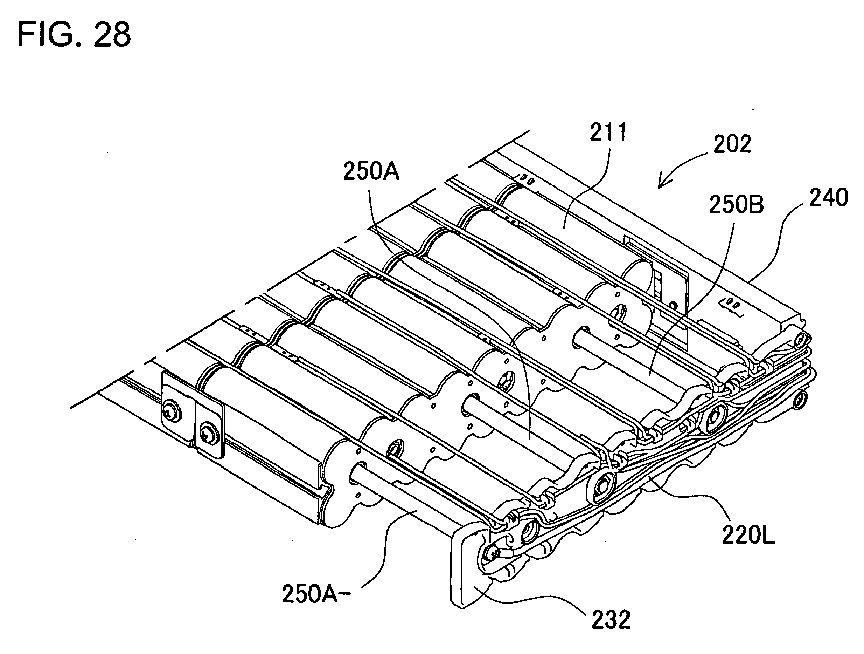

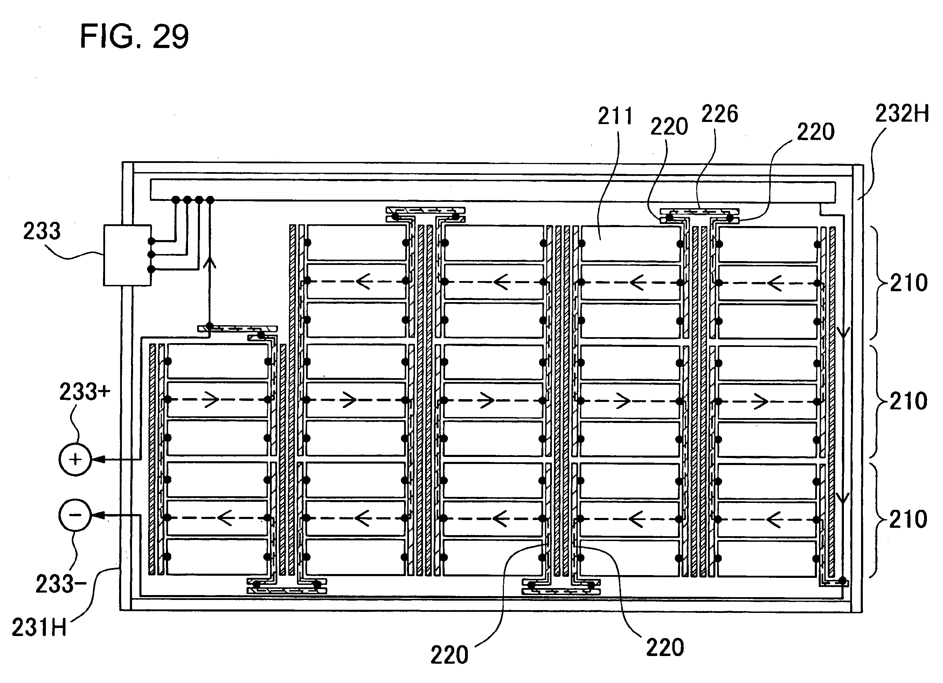

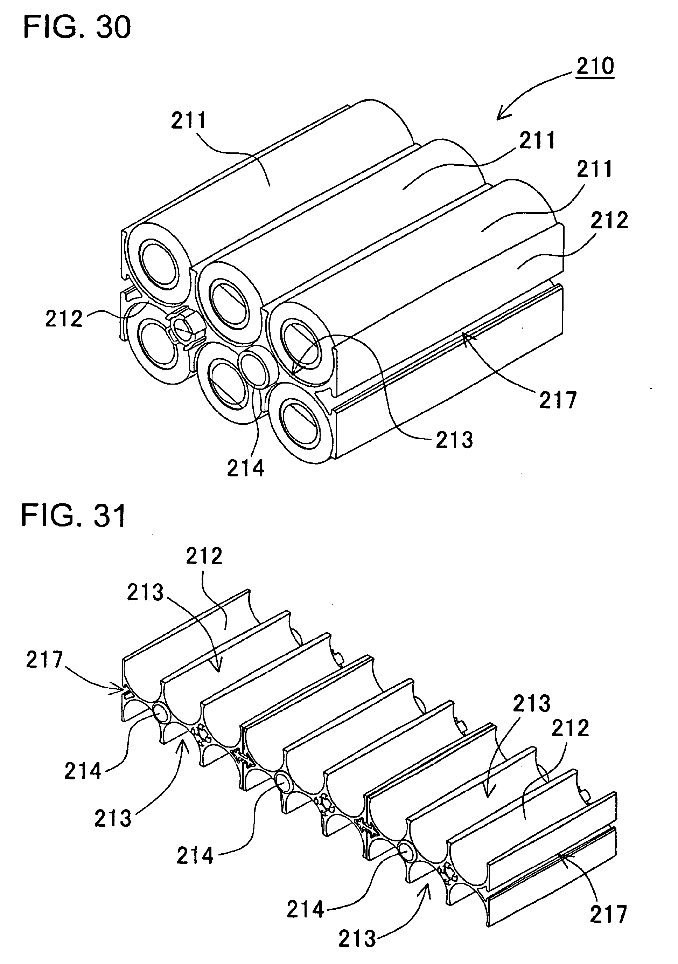

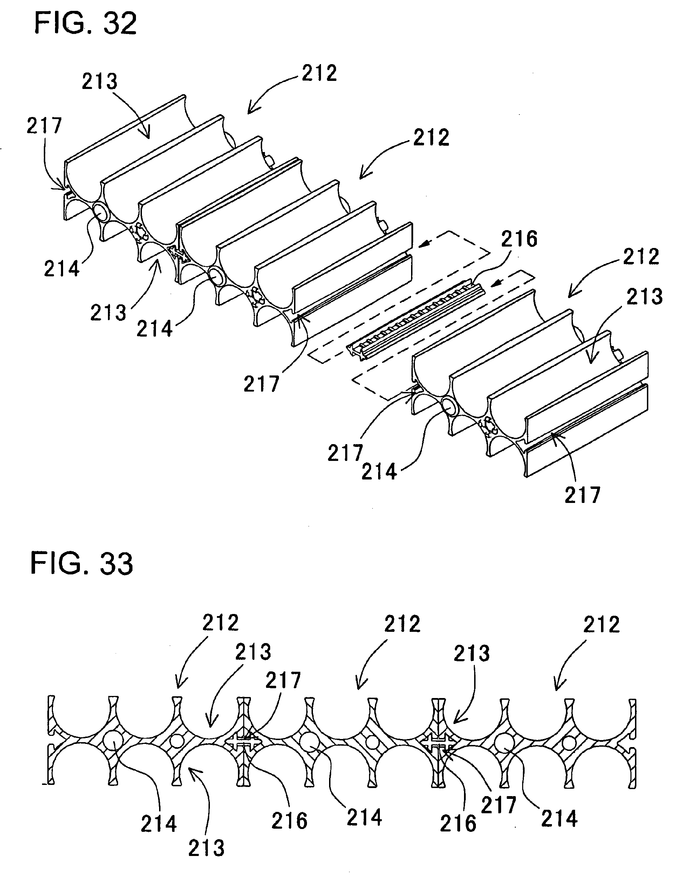

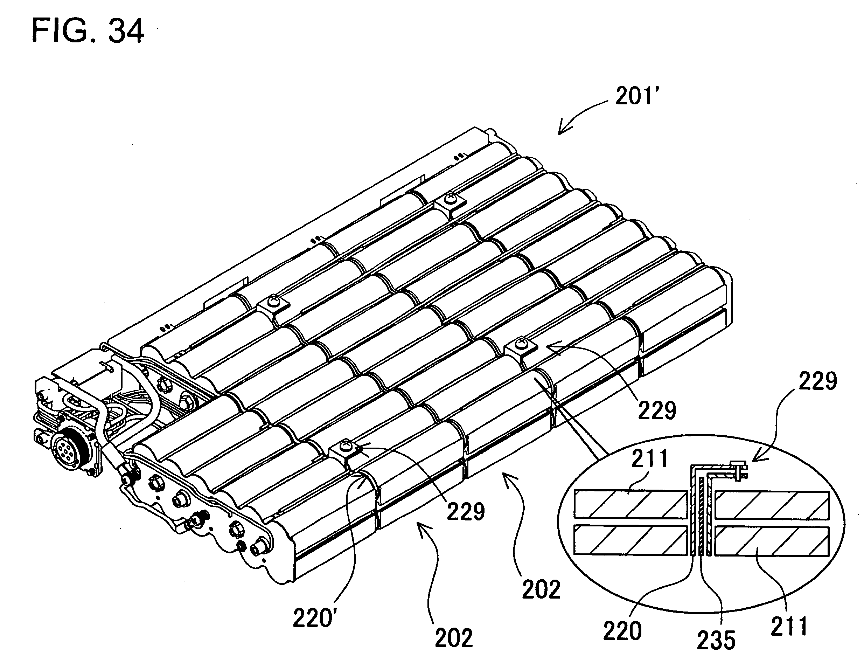

The following description will describe a power supply device for a power assisted electric bicycles as a battery pack according to an embodiment 1 of the present invention with reference to Figs. 13 to 34. Fig. 13 is a perspective view showing a battery pack according to an embodiment 1 of the present invention. Fig. 14 is a plan view of the battery pack shown in Fig. 13. Fig. 15 is a longitudinal cross-sectional view of the battery pack taken along a line III-III in Fig. 14. Fig. 16 is a traverse cross-sectional view of the battery pack taken along a line IV-IV in Fig. 14. Fig. 17 is a plan view showing the battery pack shown in Fig. 14 with an exterior case being removed. Fig. 18 is an exploded perspective view showing the battery pack shown in Fig. 13 with a first end surface plate being removed. Fig. 19 is an exploded perspective view showing the battery pack shown in Fig. 13. Fig. 20 is an exploded perspective view showing the battery pack shown in Fig. 19 as viewed from the back side. Fig. 21 is an exploded perspective view showing a lead plate of the end surface of the battery assembly shown in Fig. 19. Fig. 22 is an exploded perspective view showing lead plates to be coupled to a battery block row. Fig. 23 is an exploded perspective view showing the battery block row of the battery assembly shown in Fig. 21 to be coupled to each other. Fig. 24 is another exploded perspective view showing the battery block row of the battery assembly shown in Fig. 21 to be coupled to each other as viewed from another angle. Fig. 25 is an exploded perspective view showing battery block rows to be coupled by a lead connection portion. Fig. 26 is a cross-sectional view showing the battery block rows that are coupled to each other by penetration screws. Fig. 27 is the perspective view showing a part of a first end surface cover through which the penetration screw passes. Fig. 28 is the perspective view showing a part of a second end surface cover through which the penetration screw passes. Fig. 29 is a schematic view showing the connection state of base batteries that compose the battery assembly shown in Fig. 21. Fig. 30 is a perspective view of the battery block. Fig. 31 is a perspective view of battery spacers. Fig. 32 is a perspective view showing the battery spacers to be coupled to each other. Fig. 33 is a cross-sectional view showing the battery spacers that are coupled to each other. Fig. 34 is a perspective view showing lead connection portions according to a modified embodiment.

The illustrated battery pack 200 includes a battery assembly 201 that includes a plurality of base batteries 211 connected to each other, a circuit board 240 that is connected to the base batteries 211, and an exterior case 230 that accommodates the battery assembly 201 and the circuit board 240. In the battery pack 200 according to the embodiment 1, in each of the battery blocks 210, a plurality of base batteries 211 are held in the horizontal orientation by battery spacers 212. The battery blocks 210 are coupled to each other in a transverse direction in each of battery block rows 202. The battery block rows 202 are couple to each other in a longitudonal direction in the battery assembly 201. In the embodiment shown in Figs. 19, 20, 21, 29 and the like, three battery blocks 210 are coupled to each other in the transverse direction in each of the battery block rows 202. Five battery block rows 202 are coupled to each other in the battery assembly 201. However, two battery blocks 210 are coupled to each other only in the battery block row 202 on the leftmost side in Fig. 17 and Fig. 19. Since the number of battery blocks in the leftmost-side battery block row 202 is reduced by one than the other battery blocks, an available space portion BS is created. Each of the battery blocks 210 has two stages that are stacked in the vertical direction. Three base batteries 211 are arranged in each of the two stages. Thus, totally, six base batteries 211 are connected in parallel to each other in each of the battery blocks 210. As a result, fourteen base batteries 211 are connected to each other in series in the battery assembly as a whole. Thus, the output voltage of the battery assembly is adjusted to 48 V. Since 48 V output is used in many applications, the battery pack can be used without conversion in many applications.

### (Exterior Case 230)

The exterior case 230 is formed in a thin box shape that has a width larger than thickness as shown in Figs. 13 to 17. As shown in Figs. 18 to 20, the box-shaped exterior case 230 has openings on the both end surfaces. The battery assembly 201, the circuit board 240, and the like can be are inserted into the exterior case 230 through the openings. Main surfaces of the exterior case 230 opposed to each other have a large area, and can serve as a heat dissipation surface that externally dissipates heat generated in the battery assembly 201 and the circuit board 240 accommodated in the exterior case 230. The main surfaces can have protruding and recessed parts 230F (see Figs. 13 to 14, and 16) such as fins for increasing their surface area. In this case, the heat dissipation by the main surfaces can be improved. The exterior case 230 is formed of aluminum, which is excellent in heat dissipation and strength. In addition, in order to insulate the exterior case formed of metal such as aluminum, the surfaces of the exterior case can be covered by a laminate film, a vinyl film, or the like.

### (End Surface Cover 350)

The both end surfaces of the exterior case 230 are closed by the end surface plates. In the embodiment of Fig. 19, the left-side opening end surface is closed by a first end surface plate 231 H, and the right-side opening end surface is closed by a second end surface plate 232H. The end surface plates are secured to the exterior case 230 by screws or the like. A first end surface cover 231 is arranged inside the first end surface plate 231 H as shown in Fig. 18. A second end surface cover 232 is arranged inside the second end surface plate 232H as shown in Figs. 20, .28, and the like. The first end surface cover 231 includes an output terminal 233 for supplying power to an external device. Needless to say, the second end surface plate may be omitted, and the exterior case may be a box that has an opening only on one end surface and has a bottom surface on the other end surface. In this case, the end surface opening can be closed only by the first end surface plate.

### (Battery Assembly 201)

As shown in Figs. 19 to 20, and the like, the battery assembly 201 is inserted into the exterior case 230. The circuit board 240 is arranged on one surface of the battery assembly 201. The circuit board 240 includes a protection circuit for protecting the base batteries 211 from being over-discharged/over-charged, a charging/discharging circuit, and the like as necessary.

In the battery assembly 201, as shown in the longitudinal sectional view of Fig. 15, and the traverse cross sectional view of Fig. 16, base batteries 211 are arranged side by side in two vertically-arranged stages. In this construction, surfaces of the cylindrical exterior containers of all of the base batteries 211 can face either of the two main surfaces of the exterior case 230. Accordingly, heat from all of the base batteries 211 can be effectively dissipated directly through the exterior case 230. In other words, in the case where base batteries are not arranged side by side in three or more stages, heat does not remain in batteries that are located inside batteries locate outer stages. Therefore, base batteries can be cooled uniformly.

In this embodiment, the base batteries 211 are held by the battery spacers 212 in horizontal orientation. The base batteries 211 are aligned in straight lines in parallel to the longitudinal direction of the exterior container. Thus, valleys between the base batteries 211 in the horizontal orientation extend continuously. That is, as shown in Fig. 15 or the like, the battery blocks 210 are coupled to each other not only in the transverse direction but also in the longitudinal direction of the base battery 211. Each of battery block columns 203 is composed of the battery blocks 210 that are coupled to each other in the longitudinal direction of the base battery 211. This arrangement can increase the unity of the battery assembly 201. This arrangement results in effective space use. In addition, the center axes of the cylindrical base batteries 211 arranged in the upper and lower stages agree with each other in each of the columns so that the cylindrical base batteries 211 are arranged in matrix arrangement. In other words, the center axes of the cylindrical base batteries 211 arranged in the upper and lower stages are not deviated from each other. That is, the cylindrical base batteries 211 arranged in the upper and lower stages are not arranged offset from each other, or the center axes of the cylindrical base batteries 211 arranged in the upper stage are not positioned between the center axes of the cylindrical base batteries 211 arranged the lower stages. Thus, interspaces can be intentionally created between the base batteries.

### (Spacer Through Hole 214)

The dead space portions created by this matrix arrangement are used as spacer through holes 214 for penetration screws 250 that penetrate the entire battery assembly 201 as shown in the cross-sectional view of Fig. 33. Accordingly, it is possible to effectively use space. In addition, the strength of the battery assembly 201 can be improved. In most of conventional battery packs, only parts between battery blocks are coupled. A structure is not included that penetrates and holds the entire battery assembly in most of conventional battery packs. In applications in that battery packs are subjected to vibrations and shocks, for example, in battery packs for the movable device such as a power assisted electric bicycle, mechanical strength is also important. Even in the case where the exterior case is a strong metal case, if the coupling strength of the battery assembly is not sufficient, the battery blocks may be decoupled or deviated from each other inside the exterior case, which may cause poor contact or disconnection. In consideration of this, it can be said that it is preferable that a fastening structure be includes that penetrates and secures the entire battery assembly.

However, in order to that the battery pack can include the structure that penetrates and secures the entire battery assembly, it is necessary to prepare space in that the screw hole is formed. As a result, the battery pack will be thicker. From this viewpoint, in this embodiment 1, in the battery pack that includes the cylindrical base batteries, although the dead space portions are intendedly provided, the dead space portions are used as the spacer through holes 214 for penetration screws 250. Therefore, it is possible to prevent that the battery pack becomes thicker. In the thus-constructed battery assembly, since the base batteries 211 are arranged in two stages, a part between the base batteries arranged in two stages is necessarily located at substantially the center line in the thickness direction of the battery pack 200. For this reason, the part between the base batteries arranged in two stages is suitable for the position of the penetration screw 250. In the case where the penetration screw 250 is a metal screw, the penetration screw 250 can serve as a heat conductive member. Heat is likely to stores in a part surrounded by four base batteries. The heat conductive metal penetration screw 250 penetrates this part. Accordingly, the stored heat can be conducted along the penetration screw 250 to the end surfaces of the battery assembly. After that, the heat can be externally dissipated through the end surfaces of the exterior case. For this reason, the penetration screw 250 can be used not only for improvement in mechanical strength but also for improvement in heat dissipation.

In addition, as shown in the cross-sectional view of Fig. 33, the spacer through hole 214 is formed in a central part of the battery spacer 212 that has a cross shape surrounded by four battery holding portions 213 that hold the base batteries 211. Accordingly, the spacer through hole can prevent that a sink mark is formed when the battery spacer 212 is formed from a resin material, and can reduce the material amount of battery spacer 212. Therefore, it is possible to reduce the amount of resin material required for battery spacer molding. As a result, it is advantageous in manufacturing cost.

### (Penetration Screw 250)

The penetration screws 250 penetrate the battery assembly 201 in parallel to the longitudinal direction of the exterior case 230. In the embodiment of Figs. 21 to 28, each of the three penetration screws 250 penetrates corresponding one of three battery blocks 210 in each of the battery block rows 202 each of which includes the three battery blocks 210 coupled to each other in the transverse direction. Thus, the three penetration screws 250 penetrate the entire battery assembly 201. That is, since the penetration screws 250 penetrate all of the battery blocks 210 in each of the battery block rows 203, all of the battery blocks 210 in all of the battery block rows 203 can be reliably secured. Therefore, the battery assembly 201 can be firmly secured as a unitary unit. The penetration screw 250 is formed of strong and heat conductive metal. The length of the penetration screws 250 is dimensioned capable of penetrating the battery assembly 201 in parallel to the longitudinal direction of the exterior case 230. In the embodiment of Fig. 26, lower two first penetration screws 250A have a length capable of penetrating five battery block rows 203, while upper one second penetration screw 250B has a length capable of penetrating four battery block rows 203.

In the battery assembly 201, the base batteries 211 are arranged in the horizontal orientation, and are stacked in upper and lower stages in double-stacked arrangement. The output current can be large in the battery pack 200 in that the battery blocks 210 are connected to each other in parallel. The output voltage can be high in the battery pack 200 in that the battery blocks 210 are serially connected to each other. In the embodiment of Fig. 29, the base batteries 211 are arranged side by side in the two, upper and lower stages. In each of the battery blocks 210, six base batteries 211 are connected to each other in parallel, while fourteen battery blocks 210 are serially connected to each other and are connected to the output terminal 233. The output terminal 233 is a connector, and serves as a communicating and charging terminal. As shown in Figs. 18, 27, and 29, positive and negative discharging output terminals 233+ and 233- are arranged in the first end surface cover 231, and are externally exposed through an opening window formed in the end surface plate 31 H.

### (Battery Block 210)

In the battery block 210, as shown in Fig. 30, the battery spacer 212 holds six base batteries 211, which are cylindrical rechargeable batteries. The battery spacer 212 is formed of an insulating member, for example, is formed of resin such as plastic. In particular, a slightly elastically deformable material is preferable. The battery spacer 212 is formed into a horizontally and vertically symmetric shape with respect to vertical and horizontal lines.

### (Battery Spacer 212)

The battery spacer 212 according to the embodiment shown in Fig. 30 includes six battery holding portions 213. Three battery holding portions 213 are arranged in each of two, upper and lower stages. Thus, the battery holding portions 213 hold three base batteries 211 in each of upper and lower stages. The sectional shape of each of the battery holding portions 213 is a substantially semicircular shape with a curvature corresponding to the cylinder surface of the base battery 211. Upper three battery holding portions open upward. Lower three battery holding portions open downward. More specifically, as shown in the cross-sectional view of Fig. 33, the battery holding portion 213 has extension parts that are arranged on the sides of the opening and protrude from the vertically center line of the base battery 211 in section. The width of the opening is slightly smaller than the diameter of the base battery 211. Accordingly, the battery spacer 212 formed of resin elastically is deformed when the base battery 211 is inserted into the battery holding portion. Thus, the base battery 211 can firmly hold the base battery 211. Also, the base battery 211 is secured to the battery holding portion 213 by double-faced tape or an adhesive. The battery spacer 212 of the battery block 210 has a minimum shape to hold the base battery. The upper and lower surfaces of the battery assembly 201 are insulated by insulating cover members 215 that cover the exposed surfaces of the base batteries 211. The battery assembly 201 is accommodated in the exterior case 230 with the cover members 215 being arranged on the upper and lower surface, as shown in Figs. 19 to 20, and the end surfaces of the exterior case 230 are closed by the first end surface plate 231 H and the second end surface plate 232H.

Since the base batteries 211 are classified into divided battery blocks and the classified base batteries are connected to each other in each of the battery blocks, it is possible to avoid that the battery block increases in size and weight. Also, the battery blocks are kept small. Therefore, the assembling workability of the battery pack can be improved.

### (Battery Block Row 202)

The battery blocks 210 are connected in the transverse direction to each other in each of the battery block rows 202. As shown in Figs. 23 to 24 and 31 to 32, the battery spacer 212 includes a spacer coupling portion 216 on a side surface. The spacer coupling portion 216 is used for coupling the battery spacer 212 to other battery spacer 212.

### (Spacer Coupling Portion 216)

A coupling groove 217 is formed between the upper and lower battery holding portions 213. The spacer coupling portion 216 is inserted into the coupling grooves 217 as shown in Fig. 32. The spacer coupling portion 216 includes coupling protrusions on the right and left sides that have an arrowhead shape in section for coupling the battery spacers 212 that interpose the spacer coupling portion 216. The coupling groove 217 has a shape corresponding to the arrowhead shape in section. Thus, the coupling protrusion can be inserted into in the coupling groove 217. The spacer coupling portion 216 is formed of elastic resin similar to the battery spacer 212. The spacer coupling portion 216 can be inserted from the edge opening of the coupling groove 217, and is slidably attached to the coupling groove 217. The adjacent battery spacers 212 can be mechanically coupled to each other by the spacer coupling portion 216 as shown in Figs. 31 and 33. Although the spacer coupling portion 216 is constructed as separated member from the battery spacer in this embodiment, need less to say, the spacer coupling portion may be formed integrally with the battery spacer. For example, the coupling groove can be formed on one side surface of the battery spacer, and the coupling protrusion can protrude from the other side surface of the battery spaced. Thus, the battery spacers can be coupled to each other. However, in this case, the battery spacer has an asymmetric shape with respect to the vertical line. Accordingly, the manufacturing efficiency slightly decreases. In addition, since the coupling protrusion protrudes from one end surface of the battery block row 202, the width of battery block row 202 increases correspondingly to the protrusion width of the coupling protrusion. For this reason, it can be said that the aforementioned separately-constructed spacer coupling portion is preferably used.

The spacer coupling part 216 is arranged on a part of a side surface of the battery spacer 212 between the upper and lower battery holding portions 213. According to this battery pack, since the spacer coupling portion 216 is arranged in dead space between the battery holding portions 213, it is possible to effectively use space. In addition, since the battery spacers 212 are coupled by the spacer coupling portion 216, it is possible to easily assemble the battery block row 210 that is composed of the battery blocks 210.

### (Base Battery 211)

The battery block rows 202 are thus constructed as shown in Fig. 31. The base batteries 211 are held in the battery mount surfaces. In the illustrated battery block 210, the base batteries 211 are a lithium ion battery. In the battery pack that includes lithium ion batteries, its output can be high relative to its capacity and weight. However, instead of lithium ion batteries, lithium-polymer batteries or nickel-hydrogen batteries can also be used as the base batteries. The base batteries in the present invention are not limited to lithium ion batteries. Any rechargeable batteries can be used as the base batteries. Temperature sensors for detecting temperature are arranged on the base batteries 211. The temperature sensors can be arranged on all of the base batteries. Alternatively, the temperature sensors may detects temperatures of only representative base batteries that are arranged in particular locations.

### (Lead Plate 220)

In the battery block 210, the lead plates 220 are secured to the both end terminals of the base batteries 211 held in each of the battery spacers 212 by spot welding, or the like. The base batteries 211 are connected in parallel and in serial. As shown in Fig. 29, specifically, each of the lead plates 220 connect the end surfaces of the base batteries 210 held by the battery spacer 211 in corresponding one of the battery blocks 211 so that the base batteries 210 are connected to each other in parallel. One of one pair of the lead plates 220 in one battery block 210 is serially connected to one of one pair of the lead plates 220 in another battery block 210 adjacent to the one battery block 210. In the battery block row 202 that includes the battery block 210 arranged thus in the transverse direction, as shown in Fig. 22, the end surfaces of the base batteries 211 are aligned on substantially the two common planes. Since the end terminals are thus aligned on substantially the two common planes, the lead plates 220 can be secured to the end terminals from the both end surface sides of the battery block row 202 by spot welding. Therefore, this arrangement is preferable in terms of working efficiency. In the battery block 210, the shape of the lead plate 220 and the orientation of the base batteries 211 held in the battery spacer 212 are adjusted so that the number of the base batteries 211 connected to each other in parallel and in series can be changed to an optimum state. The output voltage can be adjusted by the number of the base batteries 211 serially connected to each other. The output current can be adjusted by the number of the base batteries 211 connected in parallel to each other. As shown in Figs. 21 to 24, a connection terminal 221 is also arranged in the lead plate 220 for detecting the potential at a middle point among battery cells, or the like. The voltage and the current from the connection terminal 221 are provided to the later-discussed circuit board 240 via lead lines. In addition, the lead plate 220 has a lead plate through hole 24 into which the penetration screw 250 is inserted.

The lead plate 220 is formed from a thin conductive metal plate. In the embedment of Fig. 22, a first lead plate 220A connects six base batteries 211 included in one of the battery blocks 210 in parallel to each other. A second lead plate 220B connects six base batteries 211 included in one of the battery blocks 210 in parallel to each other, and additionally serially connects the six base batteries 211 included in this battery block 210 to other six base batteries 211 of adjacent one of the battery blocks 210. Thus, the second lead plate 220B connects the end terminals of totally twelve base batteries 211 to each other. An end of the first lead plate 220A extends. This extension part is bent in an L shape, and extends along a side surface of the battery block row 202. This bent extension part serves as a lead connection terminal 222. This lead connection terminal 222 has a connection terminal screw hole 223 for connecting the lead connection terminal 222 to the later-discussed lead connection portion 225.

In the negative output of the battery assembly 201, as shown in Fig. 28, an end of a lead line 220L is secured to a negative side lead plate 220E- of Fig. 21, and is secured to an end of a metal first penetration screw 250A- by a screw. The other end of the lead line 220L is electrically connected to the later-discussed circuit board 240 for charging operation. As shown in Fig. 27, the other end of first penetration screw 250A- is exposed on the first end surface cover 231 surface side, and is secured to a metal terminal plate 233-P in a discharging output terminal 233- by a screw. Thus, some of the penetration screws can be used as lead for electrical conduction. In particular, the penetration screw used as a lead for the electric conduction is preferably formed of a nickel-plated copper material from viewpoint of electric conductivity. On the other hand, other penetration screws that are not used as a lead for the electric conduction can be formed of iron, stainless steel alloy, or the like. The negative side output of the battery assembly 201 is provided from a negative side protruding portion 233-T connected to the metal terminal plate 233-P. The metal terminal plate 233-P includes a shunt resistor portion 233-S arranged integrally with the metal terminal plate 233-P. The shunt resistor portion 233-S is connected to the circuit board 240 via a lead line or the like so that a current value corresponding to the voltage drop is measured. As a result, the voltage drop of the metal terminal plate 233-P can be measured.

The positive side output of the battery assembly 201 is provided from a positive side lead plate 220E+ as shown in Fig. 23. The positive side output of the battery assembly 201 is electrically connected to the later-discussed circuit board 240 via a lead line for charging operation. As shown in Fig. 27, the output from positive side lead plate 220E+ is exposed on the first end surface cover 231 surface side, and is secured to a metal terminal plate 233+P in a discharging output terminal 233+ by a screw. The output from positive side lead plate 220E+ is provided from a positive side protruding portion 233+T connected to the metal terminal plate 233+P.

### (Lead Connection Portion 225)

The thus-constructed battery block rows 202 are coupled to each other in the longitudinal direction of the base batteries 211 so that the battery assembly 201 is constructed. The lead plates 220 are is coupled to each other by the lead connection portions 225. As shown in Figs. 23 to 25, the lead connection portion 225 is a metal center-cut-out plate, and couples a pair of contact parts 226. Each of the contact parts 226 has a screw hole 227. The contact parts 226 have substantially the same size as the lead connection terminal 222. The metal plate of the lead connection portion 225 is thicker than the lead plate 220, and has higher mechanical strength.

As stated above, the lead plate 220 to be connected has the lead connection terminal 222 with the connection terminal screw hole 223. Screw passing openings are formed on side surfaces of the battery spacers 212. The lead connection portion 225 can be coupled to the lead connection terminal 222 by screwing the lead connection screw 228 into the lead connection terminal 222. In addition, the lead connection portion 225 can be secured to the battery spacer 212 by the lead connection screw 228. Accordingly, the lead plates 220 are electrically connected to each other. In addition, since the battery spacer 212 is mechanically coupled to each other by the lead connection portion 225 of a metal plate thicker than the lead plate 220, the physical coupling strength can be increased. As shown in Figs. 21 and 29, the lead connection portions 225 couple the battery block rows 202 to each other on alternate side parts on the both side surfaces of the battery assembly 201. The battery blocks 210 are serially connected to each other in a zigzag coupling manner. Thus, the number of serially-connected base batteries can be increased in limited space to provide high output.

In the case where the lead connection portion 225 that connects the lead plate 220 to each other serially is prepared as separated member, the battery block can be small. That is, in the construction in that the base batteries are serially connected to each other, generally, the base batteries are likely to be coupled to each other extending in the axis of the cylindrical shape of the base battery. As the output is increased, the battery block will be larger. As a result, handling problems will arise in assembling. For this reason, in this embodiment, the battery blocks in that the base batteries are connected to each other in parallel are connected serially to each other. Accordingly, it is possible to avoid that the battery block is elongated. Therefore, the workability in battery pack assembling can be improved.

Preferably, the screw passing opening formed in the battery spacer 212 can also serve as the coupling groove 217. According to this construction, the coupling grooves 217 with the same shape can be symmetrically formed on the both side surfaces of the battery spacer 212. The coupling groove 217 can be used for coupling one battery spacer 212 to other battery spacer 212, and can serve as the screw passing opening when located on a side surface of the battery block row 202. Therefore, the construction of the battery spacer 212 can be simplified.

Although the lead connection portion is coupled by threaded engagement of the lead connection screw in this embodiment, the present invention is not limited to this. Needless to say, the lead connection portion can be coupled by suitable coupling such as laser welding and adhesion. However, in the threaded engagement, torque can be controlled. From this viewpoint, threaded engagement is preferable in terms of reliability.

### (Modified Embodiment)

The thus-constructed exemplary lead connection portion can be constructed integrally with the lead plate. A battery assembly 201' according to a modified embodiment is shown in Fig. 34. This illustrated lead plate 220' has a bent portion 229 as the lead connection terminal. The bent portion 229 is formed by bending an extension part of the lead plate 220' into an L shape. The bent portion 229 extends not along a side surface of the battery block row but along the upper surface of the battery block row. The bent portions 229 of the lead plates that are opposed to each other and coupled to each other are bent toward the same direction. The height of these bent portions 229 is adjusted to heights that allow these bent portions 229 overlap each other. Thus, these bent portions 229 can be connected to each other with overlapping each other. According to this construction, since it is not necessary to use a separated metal plate to connect the lead connection portions to each other, the construction can be simplified. The lead connection portions can be coupled also by threaded engagement as well as suitable coupling such as welding and adhesion.

### (Insulating Sheet 235)

In the case where the battery block rows 202 are connected to each other as discussed above, an insulating sheet 235 is interposed between the battery block rows 202 opposed to each other to prevent that a short circuit occurs between the lead plates 220 as shown in Fig. 25 or the like. Insulating paper, plastic film, or the like can be used as the insulating sheet 235. In addition, the insulating sheet 235 has a sheet through hole 236 into which the penetration screw 250 is inserted. When the penetration screw 250 pass through the sheet through hole 236 and the connection terminal through hole 224 opened in the lead plate 29, the insulating sheet 235 can be positioned and held in place.

### (Circuit Board 240)

In the thus-constructed battery assembly 201, current roughly diagonally flows as shown in Fig. 29. The positive/negative output are connected to the circuit board 240 via the lead plates 220 or the lead lines, and is connected to the output terminals 233 via a protection circuit mounted on the circuit board 240. The circuit board 240 includes circuits required for operating the power supply device and their component parts, elements, and the like, such as charging/discharging circuit for controlling charging/discharging current of the battery blocks 210, and the protection circuit. The circuit board 240 can be formed from a glass epoxy plate or the like. In Fig. 29, the circuit board 240 is inserted in an accommodation frame 240W (see Fig. 19, etc.), and is arranged opposed to a longer edge side surface of the exterior case 230 along a side surface of the battery assembly 201. The output of the battery assembly 201 is connected to the output terminal 233 by the circuit board 240. the circuit board 240 suitably receives the potential at a middle point among battery cells, and outputs from the temperature sensor for detecting the temperatures of the base batteries, and the like through lead lines, and the like.

A microcomputer installed in the circuit board 240 can inform an external electronic device through the output terminal 233 of various types of battery information (for example, battery voltage, current, temperature, and abnormal state). In charging operation, the battery pack is charged through the output terminal 233, and through a charging FET element installed on the circuit board 240. If abnormalities occur, the charging FET element is turned OFF and interrupts charging current. In this construction, the battery pack is discharged not through the circuit board 240 but through the positive discharging terminal 233+ and the negative discharging terminal 233-. A fuse or the like can also be added so that the battery pack can be charged/discharged via the fuse or the like in charging/discharging operation.

In the case where the circuit board 240 is arranged on the side surface of the exterior case 230, heat generated by electronic components installed on the circuit board 240 can be externally dissipated through the exterior case 230. According to the layout of the exterior case 230 in consideration of heat generated by the base batteries and the electronic components, it is possible to eliminate cooling mechanisms such as air cooling mechanism for forcedly flowing air, water-cooling mechanism, and Peltier element, but to sufficiently dissipate the heat. Therefore, it is possible to provide a battery pack that can avoid size increase and cost increase due to heat dissipation member. In particular, in the case of a waterproof battery pack, it is difficult to arrange such a forcedly cooling mechanism that forcedly flows cooling air by using a cooling fan. The battery pack is useful that can cool the base batteries and the electronic components without cooling fan.

### (Reference 2)

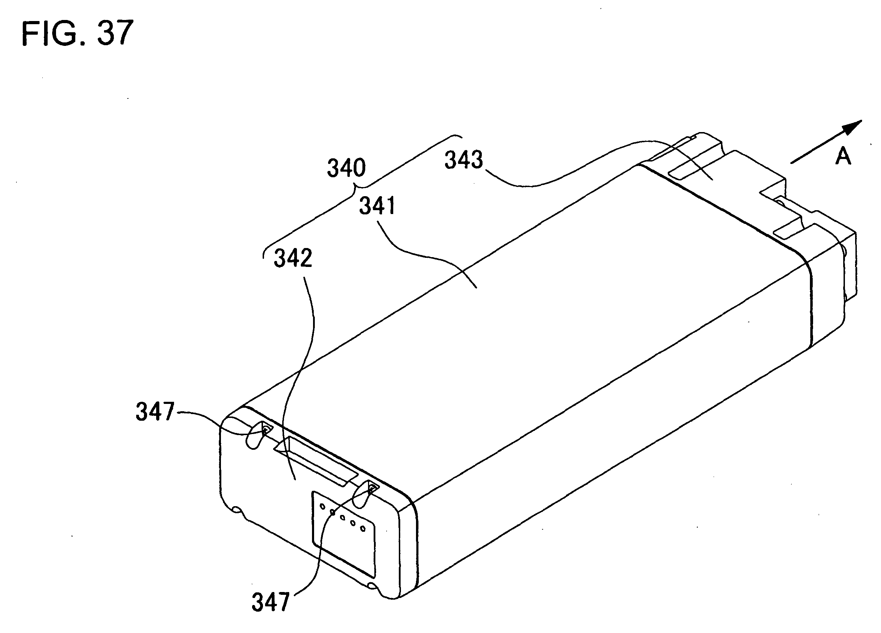

With reference to Figs. 37 to 46, a light battery pack according to an reference 2 of the present invention will be described. The battery pack according to the reference 2 is mounted mainly to an electric vehicle, and provides electric power to a driving electric motor. This battery pack is used as a power supply for electric motorbike, power assisted electric bicycle, a electric wheelchair, a electric tricycle, and a electric cart, for example. However, the application of the battery pack according to the present invention is not limited. the battery pack according to the present invention can be used as a power supply for various types of electric devices used outdoors such as power tool.

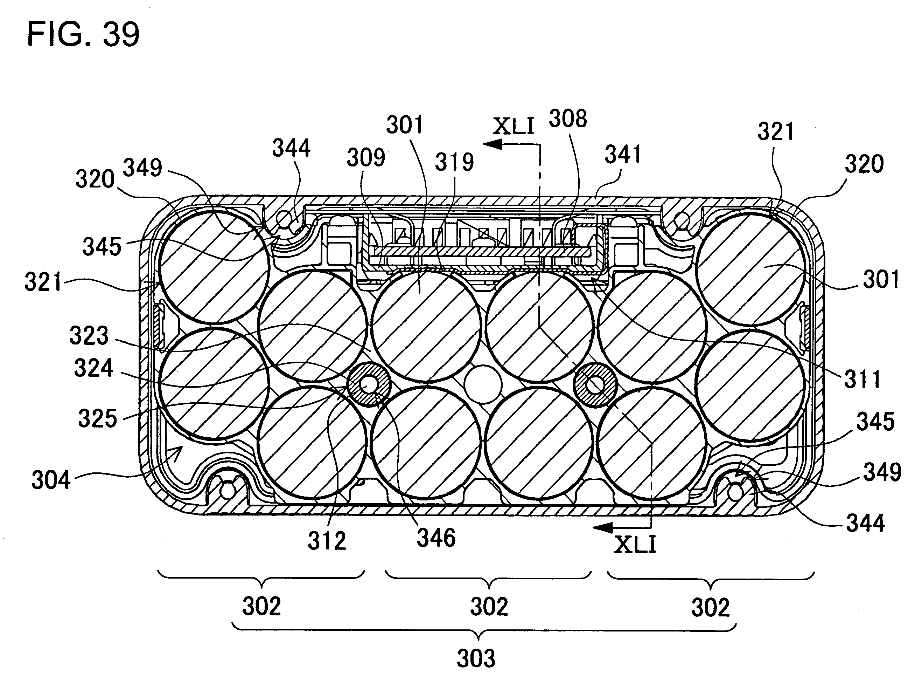

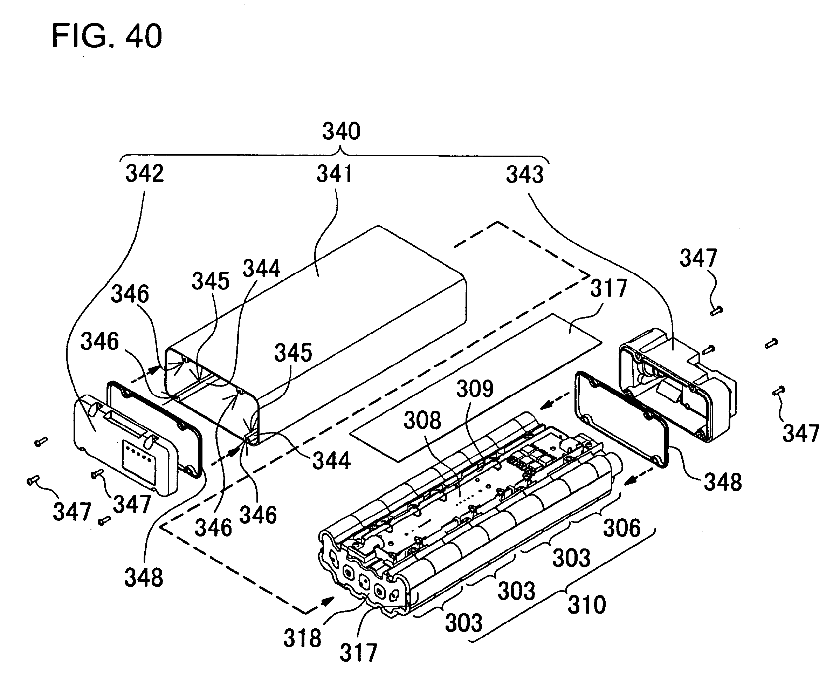

Figs. 37 to 46 show the battery pack according to the reference 2 of the present invention. In the illustrated battery pack, an exterior case 340 accommodates a battery core pack 310 that includes a plurality of battery blocks 303 connected to each other by lead plates 305. As shown in Figs. 40 through 43, in the core pack 310, the plurality of battery blocks 303 are arranged side by side in the longitudinal direction as the center axis direction of the base batteries 301, and aligned in a straight line. Each of the plurality of battery blocks 303 includes a plurality of base batteries 301 are arranged in multi-stage multi-column arrangement. In this core pack 310, a plurality of base batteries 301 are connected to each other in parallel so that the output current of the parallel unit 302 can be high. A plurality of parallel units 302 are connected serially to each other so that the output voltage can be high.
In this reference , transverse and vertical directions are defined as the directions shown in Fig. 39. That is, the horizontal direction in the paper plane of Fig. 39 is defined as the transverse direction. In addition, the center axis direction (longitudinal direction) of the base batteries is defined as the longitudinal direction.

### (Battery Block)

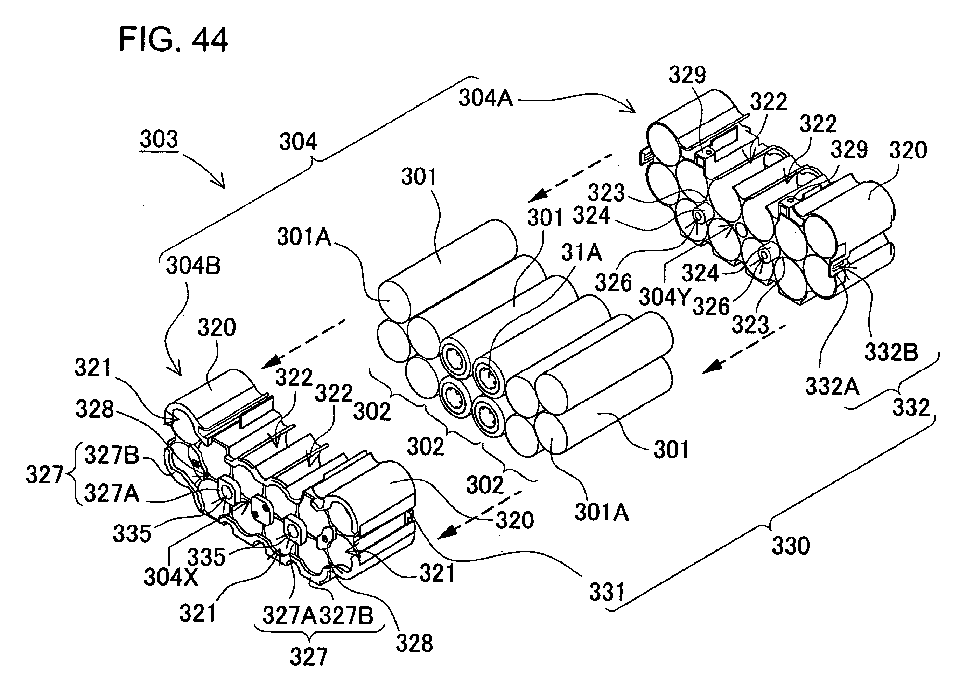

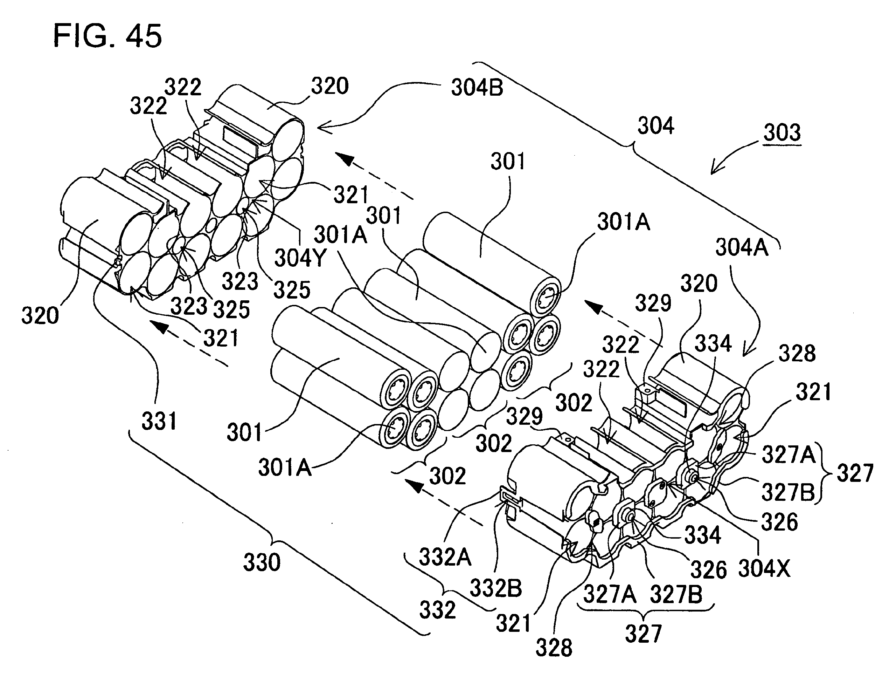

In the battery block 303, as shown in exploded perspective views of Fig. 44 and Fig. 45, a plurality of rechargeable base batteries 301 are arranged in multi-stage multi-column arrangement. The base batteries 301 are a cylindrical rechargeable battery such as lithium-ion rechargeable battery. However, the base battery of the present invention is not limited to a lithium ion battery. Any rechargeable batteries can be used such as nickel-hydrogen battery, nickel-cadmium battery, lithium-polymer battery, and the like. In the illustrated battery pack, although cylindrical batteries are used the base batteries 301, the base batteries can be rectangular batteries.

In the battery block 303, a plurality of base batteries 301 are arranged with the center axes of the base batteries 301 being orientated in parallel to each other. A plurality of base batteries 301 in each of the battery blocks 303 are classified into a plurality of parallel units 302. In each of the parallel units 302, a plurality of base batteries 301 in each of the parallel units 302 are connected in parallel to each other by the lead plates 305 connected to end surface terminals 301A of the both ends of the base batteries 301. The plurality of parallel units 302 are arranged in a traverse straight line. The parallel units 302 adjacent to each other are orientated with the polarities of the end surface terminals 301A of the base batteries 301 of the adjacent parallel units 302 being opposite to each other. The parallel units 302 adjacent to each other in each of the battery blocks 303 are serially connected to each other by the lead plates 305, which connect the base batteries 301, which compose the parallel units 302, to each other in parallel.

A plurality of base batteries 301 in each of the battery blocks 303 are classified into an odd number, three or more, of parallel units 302. The reason for providing the battery block 303 with an odd number of parallel units 302 is that the parallel unit 302 adjacent to each other in the battery block 303 can be connected serially to each other by the lead plates 305 with a plurality of battery blocks 303 being arranged in a straight line. The illustrated battery block 303 includes twelve base batteries 301. These twelve base batteries 301 are classified into three parallel units 302 by four each. However, the battery block can include an odd number, three or more, of, for example, five sets or seven parallel units. The number of the base batteries in each parallel unit is not limited to four. Each parallel unit can includes three or less, or five or more base batteries. For example, although not illustrated, the battery block can include three parallel units each of which includes six base batteries, and can totally include eighteen base batteries as a whole. Also, the battery block can include five parallel units each of which includes three base batteries, and can totally include fifteen base batteries as a whole.

### (Battery Holder)

Each of the battery blocks 303 includes a battery holder 304 that holds base batteries 301 in place, and the base batteries 301, which compose the battery block 303, are held in place by the battery holder 304. The battery holder 304 is formed of an insulating member, for example, is formed of resin such as plastic. The battery holder 304 holds the base batteries 301 in place in parallel to each other so that the end surface terminals 301A of the both ends of the base batteries 301 are arranged on two common planes.

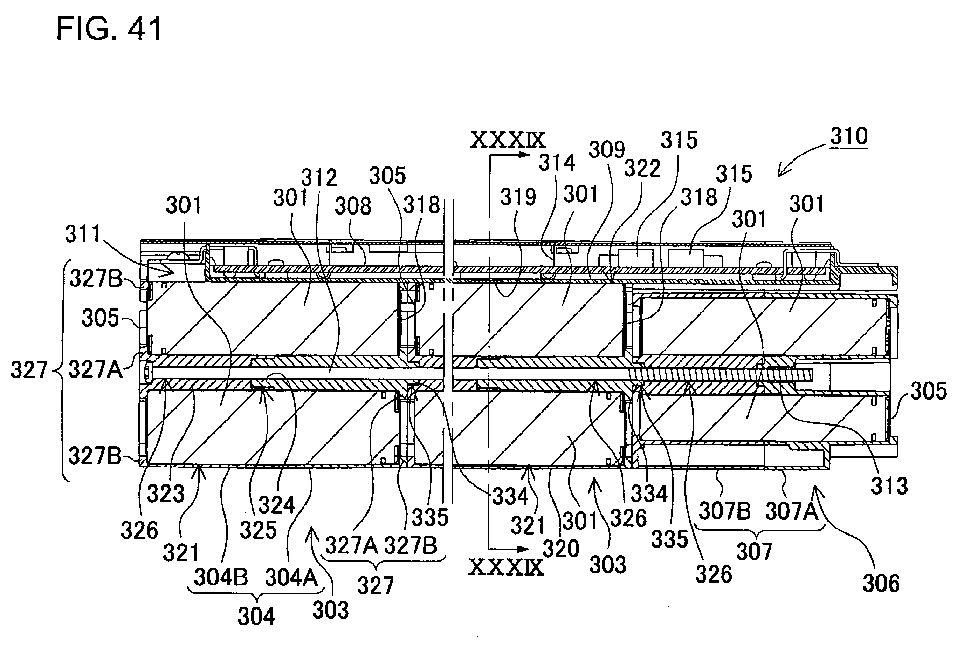

The battery holder 304 includes a plurality of holding cylindrical portions 320, as shown in Fig. 44 and Fig. 45. The base batteries 301 are inserted into and held in holding cylindrical portions 320. The battery holder 304 is formed integrally into a shape that couples the plurality of holding cylindrical portions 320 to each other. Each of the holding cylindrical portions 320 has a cylindrical insertion hole 321 the surface of which corresponds to substantially the entire circumferential surface of the base battery 301. The insertion hole 321 penetrates the holding cylindrical portion 320. The base battery 301 is inserted into each of the insertion holes 321 in the battery holder 304. Thus, a plurality of base batteries 301 are held in predetermined positions. However, the holding cylindrical portion does not necessarily have the cylindrical insertion hole 321 the surface of which corresponds to substantially the entire circumferential surface of the base battery. In the illustrated battery holder 304, the upper surface of two columns of holding cylindrical portions 320 located in the central part on the upper stage is cut out so that an exposure opening 322 is formed. Thus, exterior containers of these base batteries 301 are exposed from this exposure opening 322. In the battery pack of Figs. 39 and 41, a temperature sensor 319 is arranged on the surfaces of these base batteries 301 exposed from the exposure opening 322 of the battery holder 304 so that the temperature of these base batteries 301 can be detected. In the illustrated battery pack, the temperature sensor 319 is secured to the bottom surface of a circuit board holder 309 arranged on the upper surface of the central part of the battery holder 304.

The illustrated battery holder 304 includes twelve base batteries 301 in two, upper and lower, stages. Six batteries are arranged in each stage. In other words, twelve base batteries 301 are arranged in two-stage and six-column arrangement. In this battery holder 304, four base batteries 301 are arranged in two-stage and two-column arrangement in each of the parallel unit 302. The battery holder 304 includes three parallel units 302 are arranged in a traverse straight line. In the central part of the illustrated battery holder 304, base batteries 301 are arranged in two-stage and four-column arrangement so that the centers of the base batteries 301 are positioned at the vertices of a lattice. Two, upper and lower base batteries 301 on each of the both sides are arranged in close-packed arrangement so that the center of one of the two base batteries 301 is positioned in a valley between other base batteries 301 adjacent to the one of the two base batteries 301. In the thus-shaped battery holder 304, as shown in Fig. 39, the upper ends of the holding cylindrical portions 320 arranged on the both sides protrude upwards relative to the upper ends of the holding cylindrical portions 320 arranged in the central part. Accordingly, the accommodation recessed portion 311 as an accommodation space portion for accommodating a circuit board 308 is formed above the upper surfaces of the holding cylindrical portions 320 in the central part. However, the battery holder does not necessarily have the recessed portion above the whole surface of the central part. All of the base batteries 301 accommodated in the battery holder can be arranged in a substantially rectangular shape so that the centers of all of the base batteries 301 are positioned at the vertices of a lattice. Alternatively, all of the base batteries 301 accommodated in the battery holder can be arranged in close-packed arrangement. Alternatively, a plurality of base batteries accommodated in the battery holder can be arranged in combination of lattice arrangement and close-packed arrangement. A plurality of base batteries accommodated in the battery holder can be arranged in various types of arrangement.

The battery holder 304 includes a pair of cell holders 304A and 304B corresponding to two parts of the battery holder 304 defined by dividing the battery holder 304 at the longitudinal center of into the base batteries 301 into two parts. The pair of cell holders 304A and 304B include half parts of the battery holders 304 corresponding to parts obtained by dividing the battery holders 304 at the longitudinal center of into the base batteries 301. The pair of cell holders 304A and 304B are coupled to each other with the both half parts of the base battery 301 being inserted into the holding cylindrical portion 320. Thus, the pair of cell holders 304A and 304B are held by the base battery 301 without relative deviation. Insertion holes 321 of half parts of the holding cylindrical portion 320 have an inner diameter that gradually decreases from a center-side end surface 304Y toward an outer end surface 304X. Thus, the insertion holes 321 are tapered. The smallest inner diameter of the insertion hole 321 on the outer end surface 304X is substantially equal to the outer diameter of the base battery 301. In this holding cylindrical portion 320, the base battery 301 can be smoothly inserted into the insertion holes 321. In addition, when the base battery 301 is inserted into the insertion holes 321, the ends of the base battery 301 come in contact with the interior surfaces of the holding cylindrical portion 320 in the insertion holes 321 on the outer end surface 304X. Thus, the base battery 301 can be held in place. In the case where the holding cylindrical portion 320 is composed of two half parts, metal molds for plastic forming can be simply designed, and it is possible to easily form the holding cylindrical portion 320 by plastic molding.

In order to couple the pair of cell holders 304A and 304B to each other without relative deviation, one cell holder 304A (right side in Figs. 44 and 45) includes connecting bosses 324 that protrudes from the center end surface 304Y, while the other cell holder 304B (left side in Figs. 44 and 45) has connection recessed portions 325 on the center end surface 304Y into which the connecting bosses 324 fitted. In the illustrated cell holders 304A and 304B, the connecting bosses 324 and the connection recessed portions 325 are arranged in parts surrounded by some of the holding cylindrical portions 320 arranged in multi-stage and multi-column arrangement, that is, in cross-shaped parts 323 that are sounded by four holding cylindrical portions 320 that are arranged at four corners of lattices. In this battery holder 304, since the centers of the holding cylindrical portions 320 are arranged at the vertices of lattices, dead space parts are created. The coupling portions 323 can be defined as the dead space parts. The connecting bosses 324 and the connection recessed portions 325 are arranged in the dead space parts. In the pair of illustrated cell holders 304A and 304B, the connecting bosses 324 and the connection recessed portions 325 are arranged opposed to each other in two coupling portions 323 in left and right sides.

The illustrated battery holder 304 has through holes 326 into which penetration screws 312 inserted. Thus, the penetration screws 312 penetrate the core pack 310. This through holes 326 are formed in positions that correspond to the aforementioned cross-shaped coupling portions 323 each of which is surrounded by four holding cylindrical portions 320 in the central part of the battery holder 304. The space of this battery holder 304 is effectively used to form the through holes 326. The through holes 326 are arranged in two positions in the both side parts of the battery holder 304. Each of the through holes 326 is formed in the center of the aforementioned connecting boss 324 and the center of the connection recessed portion 325.

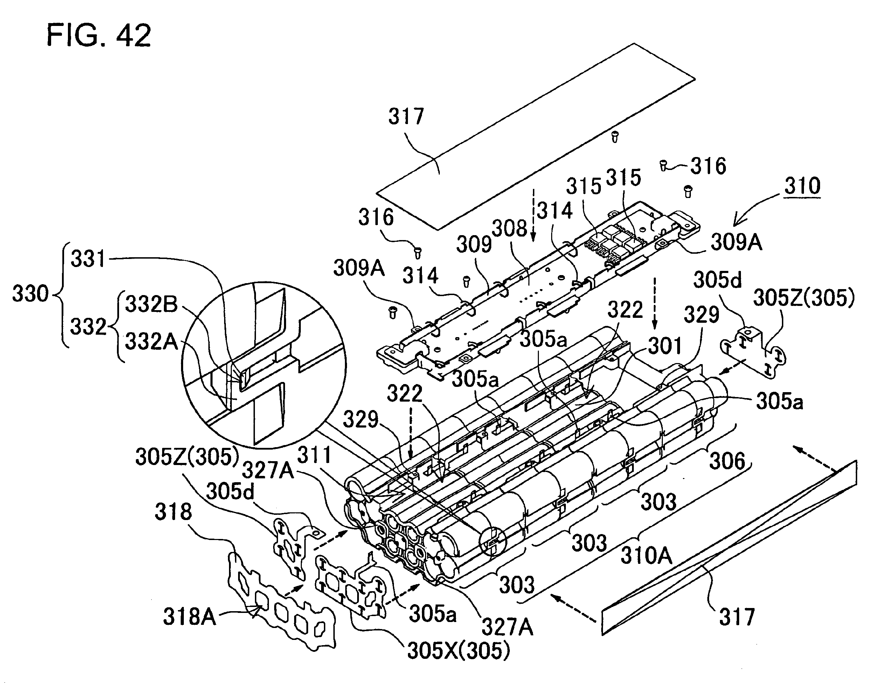

The pair of cell holders 304A and 304B are coupled to each other by an interlocking structure. More specifically, the pair of cell holders 304A and 304B are coupled to each other by hook engagement portions 330 as shown in a partially enlarged view of Fig. 42. The hook engagement portions 330 are formed integrally with the both side surfaces of the cell holders 304A and 304B. In the battery holder 304 of Figs. 44 and 45, interlocking protrusions 331 are formed on the both side surfaces of one of the cell holders 304B (left side in the Figures), while Interlocking portions 332 are formed on the both side surfaces of the other of the cell holders 304A (right side in the Figures), and guide and interlock with the interlocking protrusions 331. The illustrated interlocking portion 332 has a protruding portion 332A that is formed integrally with the side surface of the other cell holder 304A, and protrudes toward the interlocking protrusion 331 of the one cell holder 304B. In addition, the interlocking portion 332 has an interlocking opening 332B that guides the protruding portion 332A to the interlocking protrusion 331. The interlocking portion can have an interlocking recessed portion on the interior side of the protruding portion for guiding the interlocking protrusion. In the thus-constructed hook engagement portion 330, the protruding portion 332A elastically deforms so that the interlocking protrusion 331 can be guided smoothly to the interlocking hole 332B. As a result, the pair of cell holders 304A and 304B can be simply and easily coupled to each other without decoupling. However, in the hook engagement portion, an interlocking hook can be formed on the interior side of the protruding portion, which protrudes from the side surface of the one cell holder, while an interlocking recessed portion can be formed on the side surface of the other cell holder, and can guide this interlocking hook. The pair of cell holders can be coupled to each other by a coupling structure other than the interlocking structure, for example, by screw, adhesive.

Although the thus-constructed battery holder 304 is composed of the pair of cell holders formed of plastic, the battery pack of the present invention is not limited to this construction. The battery holder can has any structures capable of holding a plurality of batteries in predetermined positions. For example, the battery holder can be integrally constructed. Also, the battery holder can be composed of three or more separated parts.

Protrusion prevention portions 327 are formed integrally with the outer end surface 304X of the battery holder 304. The protrusion prevention portions 327 prevent that the end surface terminals 301A of the base batteries 301 inserted in the insertion holes 321 protrude outward of the outer end surface 304X. The protrusion prevention portions 327 allow the end surface terminals 301A of the base batteries 301 inserted in the insertion hole 321 to be exposed from the outer end surface 304X, but prevent that the end surface terminals 301A protrude from the opening ends. The protrusion prevention portions 327 protrude inward of the opening edges of the insertion holes 321, and partially overlap the openings of the insertion holes 321. In the battery holder 304 of Figs. 44 and 45, the protrusion prevention portions 327 include positioning blocks 327A, and the positioning protrusions 327B. The positioning block 327A is arranged in the coupling portion 323 surrounded by a plurality of holding cylindrical portions 320 in the central part of the battery holder 304, and partially overlaps the opening of the insertion hole 321. The positioning protrusion 327B protrudes inward of the outer peripheral rim of the battery holder 304 in the outer periphery portion of the battery holder 304. In this battery holder 304, since the protrusion prevention portions 327 are in contact with the end surface terminals 301A of the base batteries 301 inserted into the insertion holes 321, it is possible to prevent that the end surface terminals 301A of the base batteries 301 protrudes from the outer end surface 304X.

In order to couple the battery block 303 adjacent to each other to each other without relative deviation, an end surface of one battery holder 304 (right side in Figs. 44 and 45) includes a connecting boss 334 that protrudes from the positioning block 327A, while the other battery holder 304 (left side in Figs. 44 and 45) has a connection recessed portion 325 in the positioning block 327A on the other end surface with which the connecting boss 334 engages. In the battery holder 304, the positioning block 327A is formed integrally with the coupling portion 323 that has the aforementioned connecting boss 324 and the connection recessed portion 325. In addition, the positioning block 327A has the connecting boss 334 and the connection recessed portion 335. Also the connecting bosses 334 and the connection recessed portions 335 have the through holes 326 on their centers into which the penetration screws 312 are inserted. The connecting boss 334 that protrudes from an end surface of one of the battery blocks 303 adjacent to each other is fitted into the connection recessed portion 335 of an end surface of the other of the adjacent battery blocks 303. Thus, the adjacent battery blocks 303 can be coupled to each other without relative deviation.

Positioning recessed portions 328 are arranged on the both end surfaces of the battery holder 304. The lead plates 305 to be arranged on the outer end surfaces 304X are fitted into the positioning recessed portions 328. In the illustrated battery holder 304, a part inside the positioning protrusion 327B, which protrudes from the outer end surface 304X, and outside the positioning block 327A is formed as a stepped portion lower the than the protrusion prevention portion 327. Thus, the stepped portion serves as the positioning recessed portion 328 into which the lead plate 305 is fitted. The positioning recessed portion 328 holds the lead plate 305 in place.

### (Secondary Battery Block)

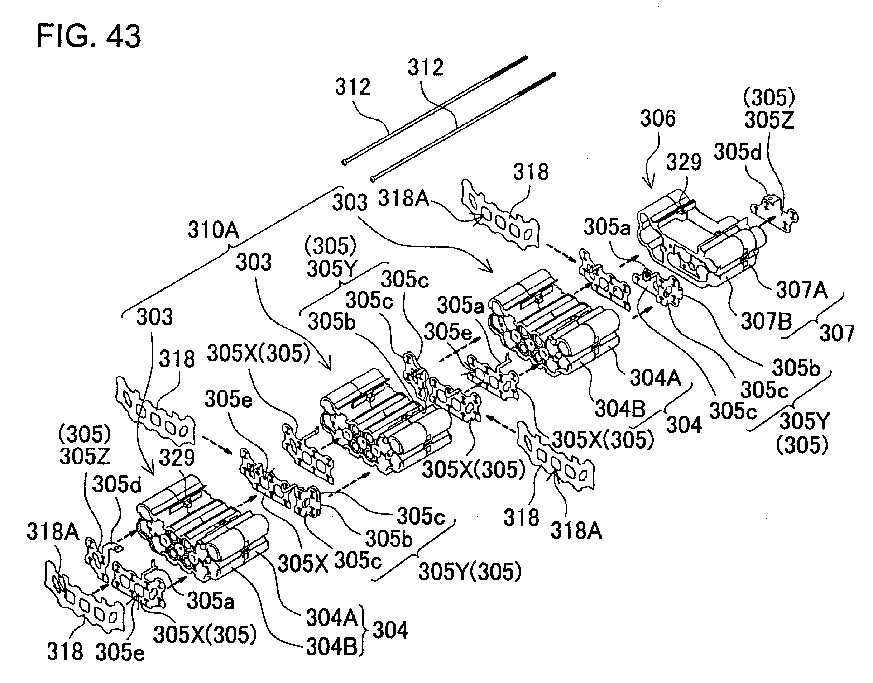

In the battery core pack 310 shown in Fig. 43, a secondary battery block 306 is arranged at an end of an assembly 310A of the battery blocks 303 each of which includes a plurality of battery blocks 303 arranged in a straight line. This secondary battery block 306 includes parallel units 302 the number of which is less than the battery block 303. In the illustrated core pack 310, although the secondary battery block 306 is arranged only on one end of the assembly 310A of the battery blocks 303, the secondary battery blocks can be arranged on the both ends of the assembly of the battery blocks.

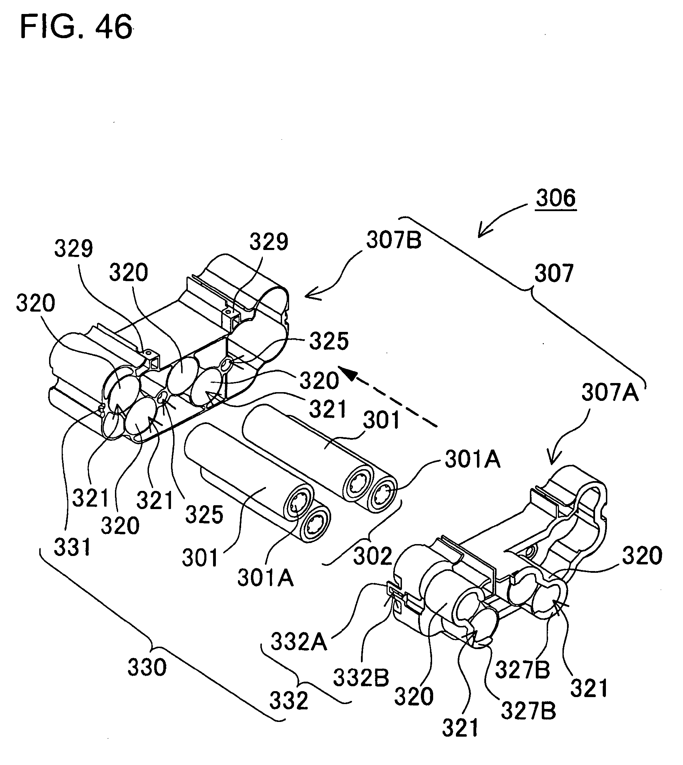

The secondary battery block 306 includes a secondary battery holder 307 that is composed of a pair of cell holders 307A and 307B, as shown in Fig. 46. Since the secondary battery block 306 includes parallel units 302 the number of which is less than the battery holder 304, the number of the holding cylindrical portions 320 is less than the battery holder 304. The secondary battery holder 307 shown in Fig. 46 includes four holding cylindrical portions 320, and can accommodate four base batteries 301. In this secondary battery holder 307, the holding cylindrical portions 320 that accommodate four base batteries 301 on one side (near side in Fig. 46), while a cavity portion is formed on the other side. This cavity portion of the secondary battery holder 307 can be used as an accommodation space for accommodating components such as connector. the number of the holding cylindrical portions of the secondary battery holder can be changed in accordance with the number of the base batteries to be held in the secondary battery block.
Components of the secondary battery holder 307 same as or similar to those of the aforementioned battery holder 304 are attached with the same reference numerals, and their description is omitted.

In the battery core pack 310 shown in Fig. 43, the four base batteries 301 are connected in parallel to each other. The parallel units 302 adjacent to each other are connected serially to each other. Thus, in one battery block 303, twelve base batteries 301 are connected to each other in three-serial and four-parallel connection. In addition, three first battery blocks 303 are serially connected to each other. Thus, total 36 battery cells 301 are connected to each other in nine-serial and four-parallel connection. Four base batteries 301 accommodated in the secondary battery block 306 compose the parallel unit 302. This parallel unit 302 is serially connected to the assembly 310A of the battery block 303. Thus, three battery blocks 303 and one secondary battery block 306 are combined so that totally forty base batteries 301 are connected to each other in ten-serial and four-parallel connection. For example, in the case where lithium-ion rechargeable batteries of 3.6 V/cell are employed as the base batteries 301, since ten battery cells are serially connected, output of 36 V can be provided. However, all of the holding cylindrical portions of the battery holder and the secondary battery holder in the core pack do not necessarily accommodate the base batteries. For example, each of the three battery holders can accommodate nine base batteries, while the secondary battery holder can accommodate three base batteries. Thus, totally thirty base batteries 301 can be connected to each other in ten-serial and three-parallel connection.

As discussed above, in the case where the secondary battery block 306 is coupled to one end or each of the both ends of the assembly 310A of the battery blocks 303, the number of the parallel units 302 connected serially to each other can be adjusted. For example, in the case where a plurality of battery blocks 303 each of which includes three parallel units 302 are coupled to each other, the number of the serially-connected parallel units 302 to each other is a multiple of 3. According to this arrangement, a number of parallel units 302 can be arranged in close-packed arrangement. However, the optimum number of the serially-connected parallel units 302 is not always a multiple of 3. Accordingly, since the secondary battery block 306 is coupled to one end or each of the both ends of the assembly 310A of the battery blocks 303, the number of the parallel units 302 connected serially to each other can be adjusted. That is, the number of the parallel units 302 connected serially to each other can be changed within a range 3n to (3n+2). For example, in the core pack 310, nine to twelve parallel units 302 can be serially connected to each other as follows:

(1) In the case where nine parallel units are connected serially to each other, three battery blocks each of which includes three parallel units are arranged side by side and coupled to each other.
(2) In the case where ten parallel units are connected serially to each other, three battery blocks each of which includes three parallel units are arranged side by side and coupled to each other, and one secondary battery block that includes one parallel unit is arranged side by side and coupled to an end of this assembly.
(3) In the case where eleven parallel units are connected serially to each other, three battery blocks each of which includes three parallel units are arranged side by side and coupled to each other, and one secondary battery block that includes two parallel unit is arranged side by side and coupled to an end of this assembly.
   Alternatively, three battery blocks each of which includes three parallel units are arranged side by side and coupled to each other, and secondary battery blocks each of which includes one parallel unit is arranged side by side and coupled to both ends of this assembly.
(4) In the case where twelve parallel units are connected serially to each other, four battery blocks each of which includes three parallel units are arranged side by side and coupled to each other.

In the battery pack of the present invention, the number of the parallel units 302 includes in each of the battery blocks 303 is not limited to three. The battery block 303 can include an odd number, three or more, of parallel units 302. For example, in the battery pack, each battery block can include five parallel units. Also in this battery pack, in the case where the secondary battery block that includes parallel units the number of which is less than five is coupled to one end or each of the both ends of the assembly of the battery blocks each of which includes five parallel units, the number of the parallel units 302 connected serially to each other can be adjusted. That is, the number of the parallel units connected serially to each other can be changed within a range 5n to (5n+4).

### (Lead plate 305)

The lead plates 305 are secured to the end surface terminals 301A of the base batteries 301 exposed from the openings of the insertion holes 321 on the both end surfaces of the battery holder 304 by spot welding or the like. The lead plate 305 is formed from a thin conductive metal plate. The lead plates 305 couples the end surface terminals 301A of a plurality of base batteries 301, which compose the parallel unit 302, on common two planes, and connects these base batteries 301 in parallel to each other. In addition, the lead plates 305 connect parallel units 302 adjacent to each other serially to each other. The illustrated lead plate 305 includes a straight lead plate 305X that connects serially the parallel units 302 in one battery block 303, and a bendable lead plate 305Y that serially connects the parallel units 302 of the battery blocks 303 adjacent to each other.

The straight lead plate 305X is arranged on the end surface of the battery holder 304, and couples parallel units 302 adjacent to each other to each other with their end surface terminals 301A being arranged on the same plane. The straight lead plate 305X serially connects the adjacent parallel unit 302 is connected to each other. The illustrated straight lead plate 305X connects the four base batteries 301 in each of the parallel units 302 to each other in parallel, and serially connects two parallel units 302 adjacent to each other to each other. Accordingly, eight battery connection portions are arranged in multi-stage and multi-column arrangement so that the eight base batteries 301 can be connected to each other. Each battery connection portion has a spot welding slit. The illustrated straight lead plate 305X has penetration holes 305e to which the positioning blocks 327A are guided between eight battery connection portions when the straight lead plate 305X is attached to the end surface of the battery holder 304. The straight lead plate 305X is arranged in a predetermined position of the end surface of the battery holder 304 when the positioning block 327A is guided to the penetration hole 305e.

The bendable lead plate 305Y is arranged astride the adjacent battery holders 304, and serially connects the parallel units 302 of the battery blocks 303 adjacent to each other to each other. The bendable lead plate 305Y is bent at a bent portion 305b located in the center of the bendable lead plate 305Y when the adjacent battery blocks 303 are arranged in a straight line as shown in Fig. 43. The parallel units 302 of the adjacent battery blocks 303 are serially connected to each other by connection parts 305c located on the both sides of the bent portion 305b. The illustrated bendable lead plate 305Y connects the four base batteries 301 in each of the parallel units 302 to each other in parallel by the connection parts 305c, and serially connects two parallel units 302 adjacent to each other to each other by the bent portion 305b. Accordingly, each of the connection parts 305c has four battery connection portions with slits that are arranged in two-stage and two-column arrangement so that the four base batteries 301 can be connected to each other. In addition, the bent portion 305b, which couples the two connection parts 305c, has a width narrower than the connection parts 305c. Thus, the bent portion 305b can be easily bent. The connection part 305c has penetration holes 305e to which the positioning blocks 327A are guided between four battery connection portions when the connection part 305c is attached to the end surface of the battery holder 305. The bendable lead plate 305Y is arranged in a predetermined position of the end surface of the battery holder 304 when the positioning block 327A is guided to the penetration hole 305e of the connection part 305c.

The bendable lead plates 305Y are arranged in diagonal positions of the battery blocks 303. The bendable lead plates 305Y serially connects the parallel unit 302s arranged on side parts of the adjacent battery blocks 303 opposed to each other. Since the bendable lead plates 305Y are arranged in the diagonal positions of the battery blocks 303, which includes an odd number of parallel units 302, the both end surfaces of the battery blocks 303 adjacent to each other can be connected to each other at alternate sides on the both end surfaces of the adjacent battery blocks 303 when the adjacent battery blocks 303 are arranged in a straight line.

The secondary battery block 306 and the battery block 303 adjacent to this secondary battery block 306 are connected to each other also by the bendable lead plate 305Y. The bendable lead plate 305Y is bent at the bent portion 305b located in the center of the bendable lead plate 305Y when the battery block 303 and the secondary battery block 306 adjacent to each other are arranged in a straight line as shown in Fig. 43. The parallel units 302 of the battery block 303 and the secondary battery block 306 adjacent to each other are serially connected to each other by the connection parts 305c located on the both sides of the bent portion 305b. Also, the bendable lead plate 305Y connects four base batteries 301 that compose the secondary battery block 306 to each other in parallel by four battery connection portions arranged in the connection part 305c.

As shown in Figs. 42 and 43, the straight lead plate 305X and the bendable lead plate 305Y include connection terminal portions 305a that protrude in from the upper ends of the plates for detecting potentials at middle points among battery cells. As shown in Fig. 42, the connection terminal portions 305a are a bent part that is bent in a crank shape. The connection terminal portions 305a are drawn out along the upper surfaces of the battery holders 304 when the battery holders 304 are coupled in a straight line. The end of the connection terminal portion 305a is perpendicularly bent, and thus protrudes upward of the upper surface of the battery holder 304. The connection terminal portions 305a are connected to the circuit board 308 arranged in the accommodation recessed portion 311 through lead lines 314 connected to the ends of the connection terminal portions 305a.

The lead plate 305 includes end surface lead plates 305Z that are arranged on the both end surfaces of the core pack 310. The end surface lead plates 305Z are connected to the end surface terminals 301A of the serial ends of parallel units among a plurality of parallel units 302 that are connected serially to each other. The output of the core pack 310 is provided through the end surface lead plates 305Z. The end surface lead 5Z is connected to the circuit board 308 via a bent part 305d that is bent in an L shape. The output from the core pack 310 is connected to the discharging connector through lead lines (not shown).

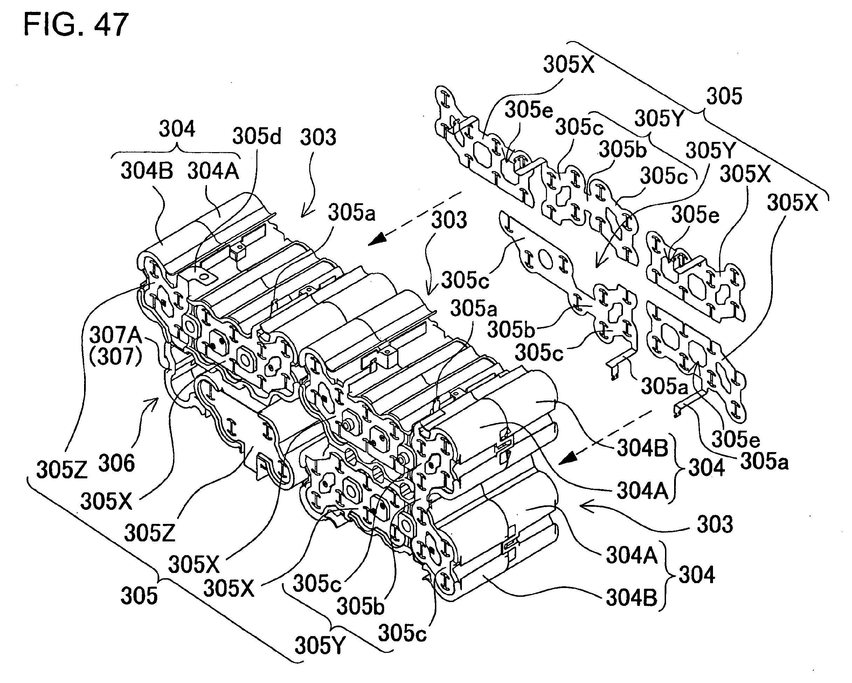

In the thus-constructed core pack 310, three battery blocks 303 and one secondary battery block 306 are coupled to each other in a straight line via the bendable lead plates 305Y. In this core pack 310, as shown in Fig. 43, the bendable lead plate 305Y is bent in the horizontal direction that couples the leftmost battery block 303 to the second battery block 303 from the left side. The bendable lead plate 305Y is bent in the vertical direction that couples the second battery block 303 from the left side to the third battery block 303 from the left side. The bendable lead plate 305Y is bent in the horizontal direction that couples the third battery block 303 from the left side to the secondary battery block 306. In other words, the three battery blocks 303 and the one secondary battery block 306 in said battery core pack 310 are serially connected to each other by the lead plates 305Y each of which has the bent portions 305b bent in the horizontal direction between its pair of connection parts 305c, and the lead plate 305Y bent in the vertical direction between its pair of connection parts 305c. Thus, the horizontally-bent and vertically-bent lead plates 305Y are alternately arranged. For example, a shown in Fig. 47, in this core pack, with the three battery blocks 303 and the one secondary battery block 306 being stacked in two-stage and two-column arrangement, the lead plates 305 arranged on the both end surfaces of the battery holder 304 and the secondary battery holder 307 can be effectively secured onto the end surface terminals 301 A of the base batteries 301 by spot welding. In particular, in the thus-constructed battery pack, since the lead plates 305 arranged on the both end surfaces can be secured by spot welding with the battery blocks 303 and the secondary battery block 306 being arranged side by side in two-row and two-column arrangement whereby reducing the entire length, it is possible to reduce the stroke range of the spot welder and as a result to efficiently secure the lead plates 305 by spot welding. For this reason, spot welding can be conducted by effectively using existing spot welders with a narrow stroke range, without newly introducing a spot welder with a large stroke range. In this core pack 310, after all of the base batteries 301 are connected in parallel and in series to each other by the lead plates 305, the bendable lead plates 305Y are bent in the predetermined directions, i.e., the horizontal and the vertical directions, at the bent portions 305b. Thus, three battery blocks 303 and one secondary battery block 306 are arranged in a straight line.

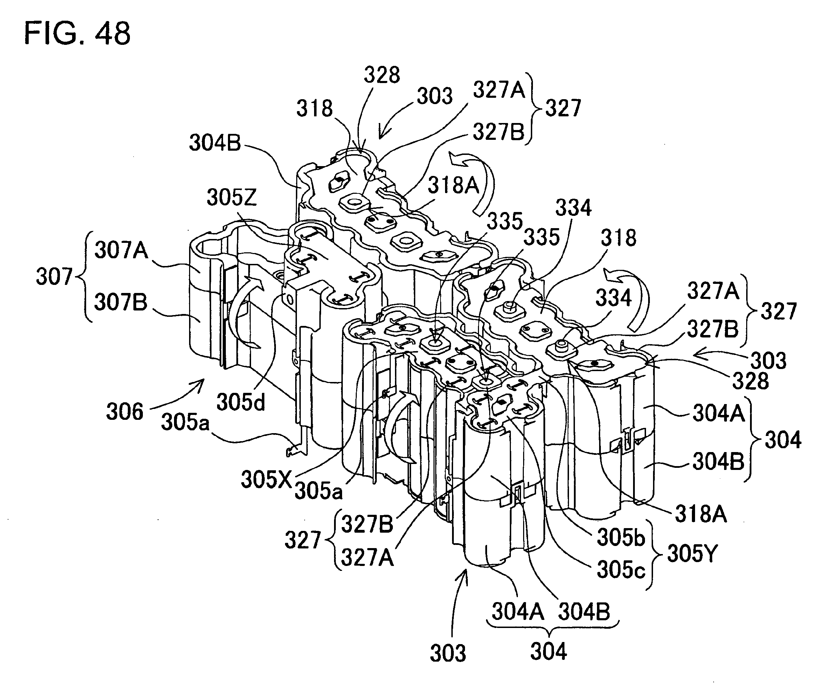

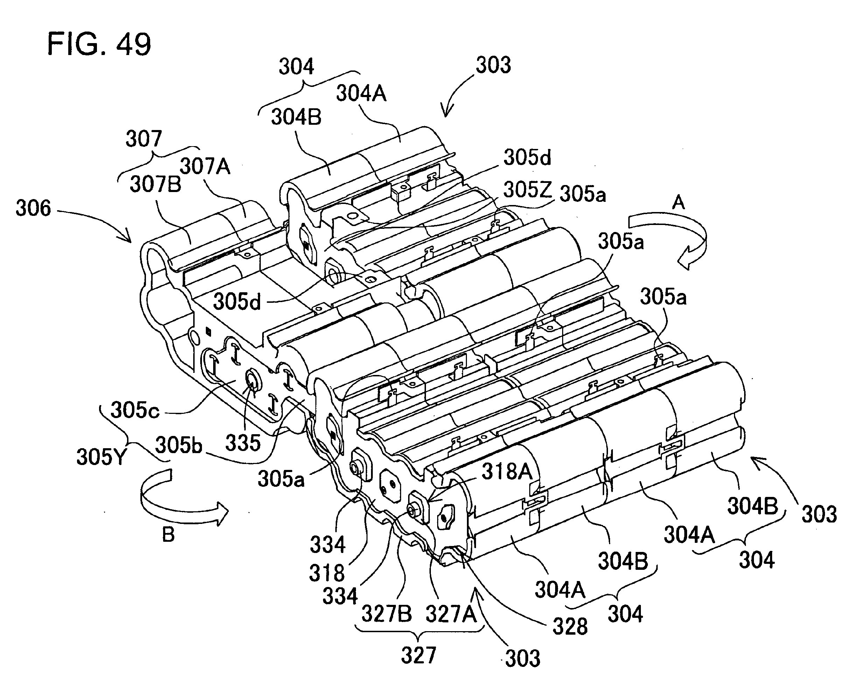

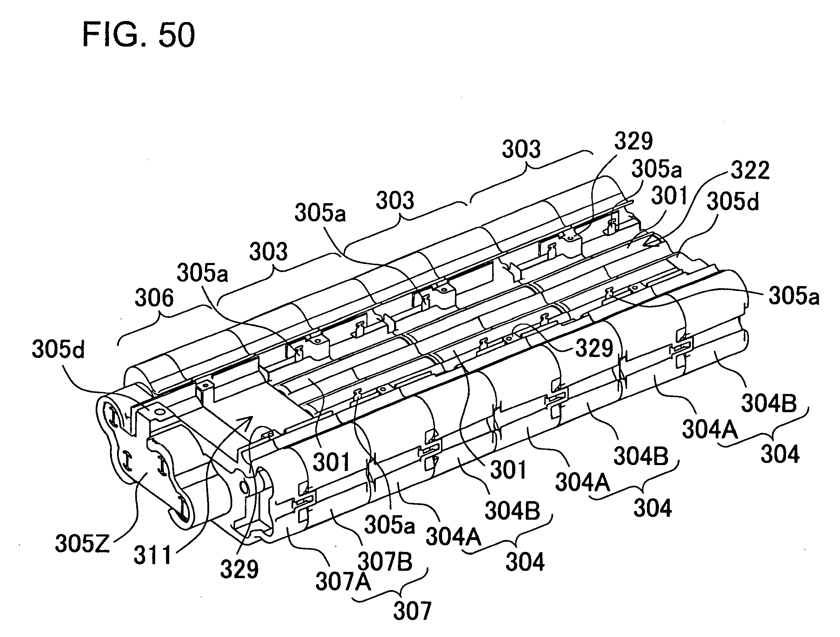

As shown in Fig. 47, after the battery blocks 303 the battery blocks 303 and the secondary battery block 306 are coupled to each other in two-row and two-column arrangement by the bendable lead plates 305Y, they can be arranged in a straight line as follows.
(1) From the orientation in that three battery blocks 303 and one secondary battery block 306 are stacked in two-row and two-column arrangement as shown in Fig. 47, one of the battery blocks 303 and the secondary battery block 306 are pivoted into the upright orientation so that the core pack 310 is erected as shown in Fig. 48. In this orientation, the bendable lead plate 305Y that couples the first battery block 303 to the second battery block 303, and the bendable lead plate 305Y that couples the third battery block 303 to the secondary battery block 306 are located on the lower surface side of the erected core pack 310. The bendable lead plate 305Y that couples the second battery block 303 to the third battery block 303 is located on the upper surface side of the erected core pack 310.
(2) As shown by arrows in Fig. 48, the bendable lead plate 305Y arranged on the upper surface side is bent at the bent portion 305b, and the lower parts of the erected core pack 310 are pivoted about this bent portion 305b as the pivot axis and is developed in the front and back directions. That is, in Fig. 48, the battery block 303 and the secondary battery block 306 located on the front side, and other two battery blocks 303 located on the back side are pivoted about the bent portion 305b to be bent as the pivot axis so that the end surfaces on the lower surface side are moved away from each other. Thus, as shown in Fig. 49, three battery blocks 303 and the secondary battery block 306 are developed in to flat arrangement. After this development, the end surfaces of the second battery block 303 and the third battery block 303 coupled via the bent bendable lead plate 305Y are opposed to and overlap with each other. In addition, the connecting boss 334 that protrudes from the opposed surface of the second battery block 303 is fitted into the connection recessed portion 335 arranged in the opposed surface of the third battery block 303. Thus, the second battery block 303 and the third battery block 303 are coupled to each other without relative deviation.
(3) As shown by an arrow A in Fig. 49, the bendable lead plate 305Y that couples the 1st battery block 303 to the 2nd battery block 303 is bent at the bent portion 305b in the horizontal direction, so that the 1st battery block 303 is pivoted about this bent portion 305b as the pivot axis toward the 2nd battery block 303. Thus, the end surfaces of the first battery block 303 and the second battery block 303 coupled via the bent bendable lead plate 305Y are opposed to and overlap with each other. When overlapping with each other, the 1 st battery block 303 and the 2nd battery block 303 are coupled to each other without relative deviation by the connecting boss 334 and the connection recessed portion 335.
(4) As shown by an arrow B in Fig. 49, the bendable lead plate 305Y that couples the third battery block 303 to the secondary battery block 306 is bent at the bent portion 305b in the horizontal direction, so that the secondary battery block 306 is pivoted about this bent portion 305b as the pivot axis toward the third battery block 303. Thus, the end surfaces of the secondary battery block 306 and the third battery block 303 coupled via the bent bendable lead plate 305Y are opposed to and overlap with each other. When overlapping with each other, the secondary battery block 306 and the third battery block 303 are coupled to each other without relative deviation by the connecting boss 334 and the connection recessed portion 335.
(5) Thus, as shown in Fig. 50, three battery blocks 303 and one secondary battery block 306 are arranged in a straight line, and are coupled to each other.

Although not illustrated, in the core pack, the leftmost battery block and the second battery block from the left side can be coupled to each other by the bendable lead plate to be bent in the vertical direction. Also, the second battery block from the left side and the third battery block 303 from the left side can be coupled to each other by the bendable lead plate to be bent in the horizontal direction. In addition, the second battery block from the left side and the secondary battery block can be coupled to each other by the bendable lead plate to be bent in the vertical direction. Also, in this core pack, with the three battery blocks and the one secondary battery block being stacked in two-stage and two-column arrangement, the lead plates arranged on the both end surfaces of the battery blocks and the secondary battery block can be effectively secured onto the end surface terminals of the base batteries by spot welding.

In the battery pack of the present invention, the number of the battery blocks and secondary battery blocks arranged in a straight line as a battery core pack is not limited to four. Although not illustrated, the battery core pack can include four or more battery blocks, or three or more battery blocks and at least one secondary battery block that are serially coupled to each other by said lead plates. In the core pack, the lead plates, which connect the battery blocks adjacent to each other or the battery blocks and the secondary battery block adjacent to each other, can include the lead plate that has the bent portion bent in the horizontal direction between its pair of connection parts, and the lead plate bent in the vertical direction between its pair of connection parts. In the core pack, with the four or more battery blocks, or the three or more battery blocks and the at least one secondary battery block being stacked in multi-stage and multi-column arrangement, the lead plates arranged on the both end surfaces of the battery blocks and the secondary battery block can be secured onto the end surface terminals of the base batteries by spot welding. For example, in the core pack that includes total six of the battery blocks and secondary battery block, the battery blocks and the secondary battery block are serially connected to each other by the bendable lead plates bents in the vertical direction, and the bendable lead plates bent in the horizontal direction so that they are arranged in two-stage and three-column arrangement or three-stage and two-column arrangement. In this case, the lead plates arranged in the both end surfaces of the battery blocks and the secondary battery block can be secured by spot welding from both sides. Also, in this battery pack, since with the battery blocks and the secondary battery blocks are arranged side by side in multiple rows whereby reducing the entire length, it is possible to reduce the stroke range of the spot welder and as a result to efficiently secure the lead plates by spot welding.

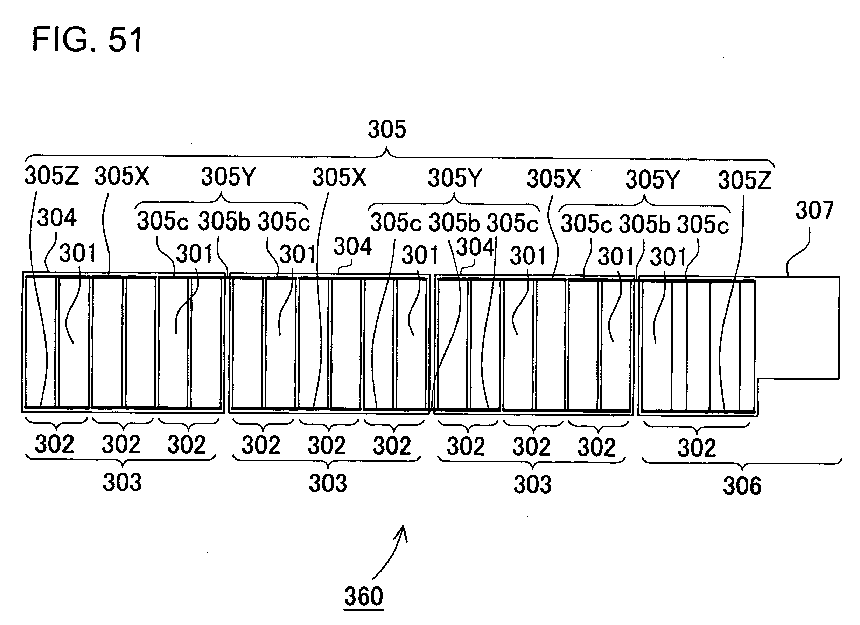

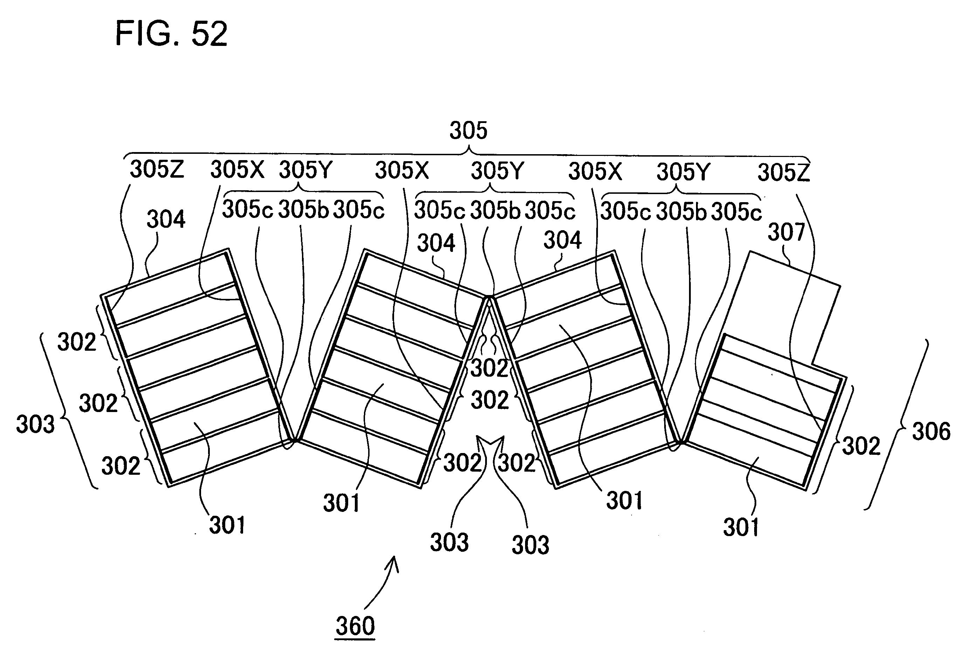

However, the battery core pack can include four or more battery blocks, or three or more battery blocks and at least one secondary battery block that are serially coupled to each other by the lead plates to be bent in only the same direction. For example, in a core pack 360 shown in Figs. 51 and 52, three battery blocks 303 and one secondary battery block 306 are serially coupled to each other by the bendable lead plates 305Y bent only in the horizontal direction. As shown in Fig. 51, in this core pack 360, with the side surfaces of the three battery blocks 303 and the one secondary battery block 306 being arranged opposed each other in traverse straight one-column arrangement, the lead plates 305 arranged on the both end surfaces of the battery blocks 303 and the secondary battery block 306 are secured onto the end surface terminals 301A of the base batteries 301 by spot welding. In this core pack 360, after all of the base batteries 301 are connected in parallel and in series to each other by the lead plates 305, as shown in Fig. 52, the bendable lead plates 305Y are alternately bent in the opposite directions at the bent portions 305b. Thus, three battery blocks 303 and one secondary battery block 306 are arranged in a straight line.

Although not illustrated, in the core pack, three battery blocks and one secondary battery block can be serially coupled to each other by the bendable lead plates bent only in the vertical direction. In this core pack, with the upper and lower surfaces of the three battery blocks 303 and the one secondary battery block being arranged opposed each other in vertical four-stage arrangement, the lead plates arranged on the both end surfaces of the battery blocks and the secondary battery block are secured onto the end surface terminals of the base batteries by spot welding. In this core pack, after all of the base batteries are connected in parallel and in series to each other by the lead plates, the bendable lead plates are bent at the bent portions 305b. Thus, three battery blocks and one secondary battery block are arranged in a straight line. In addition, in the core pack, although not illustrated, connection lead plates bent in the horizontal direction and connections lead plates bent in the vertical direction can be variously combined.

### (Insulating Sheet)

In the case where the battery blocks 303 and the secondary battery block 306 are coupled in a straight line as discussed above, insulating sheets 318 are interposed between the battery blocks 303 opposed to each other and between the battery block 303 and the secondary battery block 306 to prevent that a short circuit occurs between the lead plates 305 as shown in Figs. 43, 48, and 49. Insulating paper, plastic film, or the like can be used as the insulating sheet 318. The illustrated insulating sheet 318 has an exterior shape that can be fitted in the positioning recessed portion 328 formed in the battery holder 304. Thus, the insulating sheet 318 can cover the surface of the lead plate 305 arranged in the positioning recessed portion 328. The insulating sheet 318 shown in Fig. 43 has penetration holes 318A to which the positioning blocks 327A are guided when the insulating sheet 318 is attached to the end surface of the battery holder 304. This penetration hole 318A has a shape into which the positioning block 327A can be fitted. Thus, when the positioning blocks 327A is fitted into the penetration holes 318A, the insulating sheet 318 are interposed in predetermined positions between the battery blocks 303 opposed to each other and between the battery block 303 and the secondary battery block 306. In addition, the illustrated insulating sheet 8 is also to be interposed between the connection parts 305c of the bent bendable lead plate 305Y. Accordingly, it is possible to prevent that unintended discharge occurs between the connection parts 305c.

### (Coupling Member)

In the illustrated core pack 310, in order to more firmly couple the battery blocks 303 and the secondary battery block 306 in a straight line, the battery blocks 303 and the secondary battery block 306 are coupled by coupling members. The illustrated coupling members are penetration screws 312 that penetrate the central part of the core pack 410. Each of the battery holders 304 and the secondary battery holder 307 has through holes 326 at two positions in the central part into which the penetration screws 312 are inserted. In this core pack 310, with the battery blocks 303 and the secondary battery block 306 being coupled to each other in a straight line, the penetration screws 312 penetrate the battery holders 304 and the secondary battery holders 307, and ends of the penetration screws 312 are screwed into nuts 313. Thus, the battery blocks 303 are coupled and held in a straight line. In the battery pack shown in Fig. 41, the nuts 313, which threadedly engage with the ends of the penetration screws 312 are inserted and secured into the cell holder 307A of the secondary battery holder 307. However, the nut is not necessarily inserted into the through hole. The nut can be arranged outside the through hole.

Although not illustrated, the coupling member, which couples the battery blocks and the secondary battery block can be a coupling frame that is arranged along the outer peripheral surfaces of the battery holders and the secondary battery holder at the longitudinal direction. The both ends of this coupling frame are secured to the both ends of the core pack. Thus, the battery blocks and the secondary battery block coupled in a straight line to each other are held for preventing that they are decoupled from each other..This coupling frame can be arranged in valleys that are formed in the outer peripheral surfaces of the battery holders and the secondary battery holder between the holding cylindrical portions, for example. Accordingly, this coupling frame can be arranged in dead space without increasing the exterior shape of the core pack.

### (Circuit Board)

The battery pack shown in Fig. 40 includes the circuit board 308 connected to the battery core pack 310. The core pack 310 shown in Figs. 41 and 42 has the accommodation recessed portion 311 that accommodates the circuit board 308 and is arranged in the upper surfaces of the battery holders 304 and the secondary battery holder 307 coupled to each other. The circuit board 308 is arranged inside this accommodation recessed portion 311. The circuit board 308 is arranged in a predetermined position of the core pack 310 by the circuit board holder 309. The lead plates 305 are connected to the circuit board 308 arranged inside the circuit board holder 309 in the illustrated core pack 310.

The circuit board 308 has a protection circuit (not shown) that controls charging/discharging operation of the base batteries 301. The circuit board 308 has electronic components 315 that realize this protection circuit. The circuit board 308 has a plate shape, and extends in the longitudinal direction of the core block 310 as shown in Figs. 40 to 42. According to this construction, the elongated circuit board 308 extends in the longitudinal direction in that base the batteries 301 are serially connected to each other. Accordingly, the distance between the circuit board 308 and each of the base batteries 301 can be short. Therefore, it is possible to easily install wiring between the circuit board 308 and the base battery 301, for example, in the case where the potential at a middle point among battery cells is detected. In the battery pack shown in Fig. 42, wiring is installed by the connection terminal portions 305a that extend from the lead plates 305 of the battery blocks 303 without using separated lead lines. Accordingly, assembling processes can be simplified. In addition, separated lead lines are not required.

The protection circuit also includes a circuit that detects the battery voltages and interrupts charging/discharging current. If any of battery voltages becomes lower than the minimum voltage, this protection circuit turns a switching element that interrupts discharging current OFF. Thus, discharging current is interrupted. Also, if any of battery voltages becomes lower than the maximum voltage, this protection circuit turns a switching element that interrupts charging current OFF. Thus, charging current is interrupted. Since the battery pack has the protection circuit, which detects the battery voltages and controls charging/discharging operation, the battery pack can be used safely while protecting the base batteries 301. In addition, the circuit board 308 also has a temperature detecting circuit that detects the abnormal temperature in the base battery 301. This temperature detecting circuit detects whether the temperature of the base battery 301 detected by the temperature sensor 319 abnormally rises, and controls charging/discharging current or stops charging/discharging operation based on the detection.

The circuit board holder 309 secures and positions the circuit board 308 in place. The circuit board holder 309 shown in Figs. 39 through 42 is formed in a thin box shape to be arranged in the accommodation recessed portion 311. As shown in Fig. 42, the circuit board holder 309 is integrally formed with coupling portions 309A that protrude from the outer periphery. Fastening screws 316 penetrate the coupling portions 309A, and is screwed into the battery holders 304 and the secondary battery holder 307. In order that the fastening screws 316 are screwed into the battery holders 304 and the secondary battery holder 307, the battery holders 304 and the secondary battery holder 307 are integrally formed with screw-reception bosses 329 that protrude toward the accommodation recessed portion 311. The coupling portions 309A of the circuit board holder 309 are arranged in positions corresponding to the screw-reception bosses 329 of the battery holders 304 and the secondary battery holder 307, as shown in Fig. 42. When the fastening screws 316 penetrate the coupling portions 309A, and are screwed into screw-reception bosses 329, the circuit board holder 309 is secured in a predetermined position of the accommodation recessed portion 311. However, although not illustrated, the circuit board holder may be secured to the battery holders and the secondary battery holder by interlocking structures.

### (Exterior Case)

The both end surfaces of a cylindrical case unit 341 of the exterior case 340 are closed by end plates 342 and 343. The battery core pack 310 is accommodated in the exterior case 340. The exterior case unit 341 is formed of strong and heat dissipative metal such as aluminum. The end plates 342 and 343 are formed of hard plastic. However, the end plate may be formed of metal. In addition, in order to insulate the exterior case unit 341 formed of metal, the surfaces of the exterior case 340 can be covered by a laminate film, a vinyl film, or the like. In the illustrated battery pack, in order to prevent a short circuit between the metal case unit 341, and the lead plates 305 of the core pack 310 and the circuit board 308 accommodated in this metal case, insulating sheets 317 are arranged between the side surfaces of the core pack 310, and the upper surface of the circuit board 308.

The exterior case unit 341 is formed in a rectangular box shape that has a width larger than the thickness. The ends of exterior case unit 341 are opened. Protrusion lines 344 are integrally formed with the case unit 341. The protrusion lines 344 extend in the longitudinal direction on interior surfaces of two sheets opposed to each other. The opposed interior surfaces extends in the width and longitudinal directions. Thus, the protrusion lines 344 improve strength of the case unit 341. In the illustrated case unit 341, the protrusion lines 344 extend in parallel to each other on the both sides of each of the opposed surfaces, As shown in Fig. 39, the protrusion lines 344 extend along valley space parts 349 on the outer peripheral surfaces of the battery holders 304 between the case unit 341 and the battery holders 304. Dead space portions that are created in valleys between the holding cylindrical portions 320 or corner portions of the battery holders 304 can be used as the valley space parts 349. Since the protrusion lines 344 are arranged in the valley space parts 349, the battery core pack 310 can be held in place inside the exterior case 340 without deviation. A longitudinal groove 345 extends at the central part of the protrusion line 344 in the longitudinal direction. Screw holes 346 are formed in the opening ends of the longitudinal groove 345 on the both ends of the protrusion line 344. The fastening screws 347 penetrate the end plates 342 and 343 and are screwed into the screw holes 346. Thus, the end plates 342 and 343 are secured to the both ends of the case unit 341.

The end plates 342 and 343 have the same shape as the opening of the case unit 341 so that the opening ends of the case unit 341 can be closed. The end plates 342 and 343 are secured to the case unit 341 by screws on the both longer edge sides. In the exterior case 340, ring-shaped packing members 348 are interposed between the openings of the case unit 341, and the end plates 342 and 343. Thus, the openings of the both ends are closed by waterproofing structures.

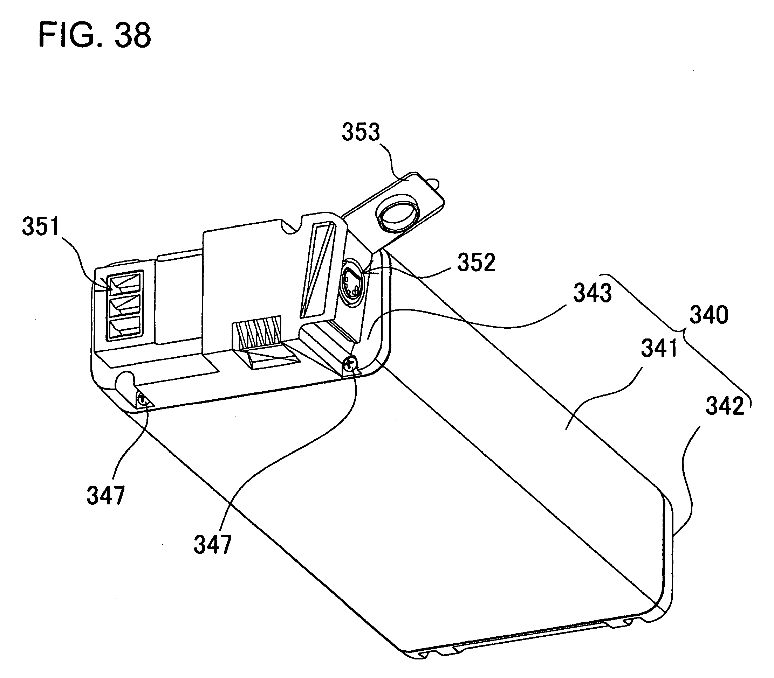

One end plate 343 (left side end plate in Fig. 38) has a discharging connector 351 for discharging the base batteries 301, and a charging connector 352 for charging the base batteries 301. The discharging connector 351 is exposed on the end surface of the illustrated end plate 342. This discharging connector 351 is connected to an external device when the battery pack is moved in the direction shown by an arrow A in Fig. 37.

The end plate 343 of Fig. 38 has the charging connector 352 on the side surface. The charging connector 352 is connected to a charging plug of a charger (not shown). When the charging connector 352 is connected to the charger, the battery pack can charge the base batteries 301 with electric power provided from the charger. In order to prevent that foreign bodies such as duct and water enter the battery pack in the case where the charge plug is not connected, the charging connector 352 has a connector cover 353 that can be placed on the opening. The connector cover 353 is detached in the case where the charge plug is connected to the charging connector 352. In the case where the charge plug is not connected to the charging connector 352, that is, in the case where the battery pack is mounted to the external device, the opening of the charging connector 352 is closed by the connector cover 353.

In the thus-constructed exterior case 340, the openings of the both ends of the cylindrical case unit 341 is closed by a pair of end plates 342 and 343. However, the exterior case may be a box that has an opening only on one end surface and has a bottom surface on the other end surface. In this case, the end surface opening can be closed only by one end surface plate.

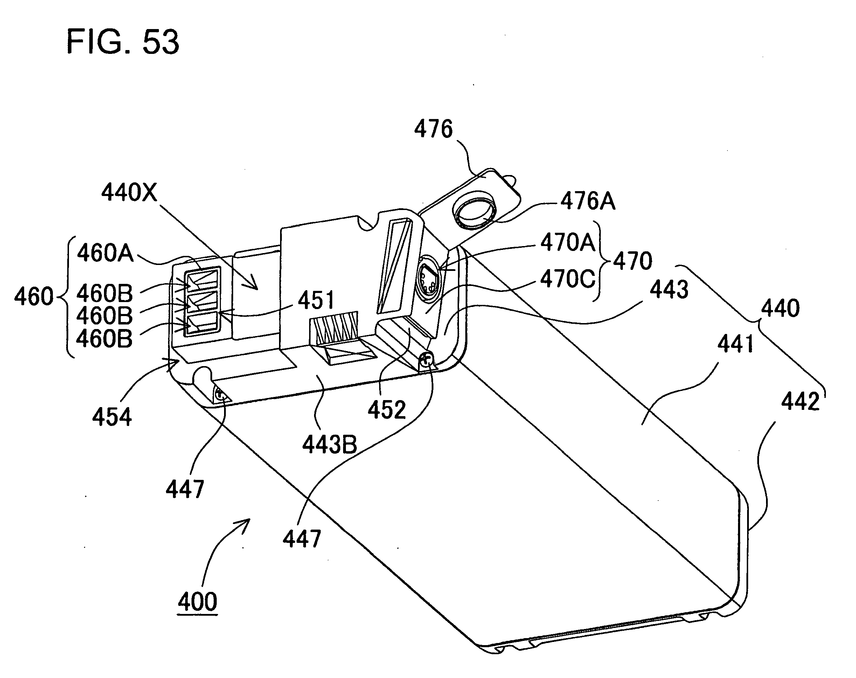

Figs. 53 to 70 show a battery pack 400 according to a reference 3 of the present invention. The illustrated battery pack 400 includes an exterior case 440, a discharging connector 460 and a charging connector 470. The exterior case 440 accommodates a plurality of batteries 401 that are connected to each other in series and in parallel. The discharging connector 460 is arranged in this exterior case 440 and provides electric power externally. The charging connector 470 is arranged in the exterior case 440 and charges the battery 401. The discharging connector 460 is arranged in a vertical surface 440X of the exterior case 440. The charging connector 470 is arranged in a side surface of the exterior case 440. In the battery pack 400, the exterior case 440 accommodates a battery core pack 410 that includes a plurality of battery blocks 403 connected to each other by lead plates 405. Each of the battery blocks 403 includes a plurality of base batteries 401 are connected to each other.
In this reference, the vertical surface of the exterior case refers to a surface in a vertical orientation when the battery pack mounted to an external electric device. The vertical direction of the battery pack refers to the vertical direction when the battery pack mounted to an external electric device. Note that the vertical orientation is used in a broad sense to include an orientation slightly inclined from the vertical direction.

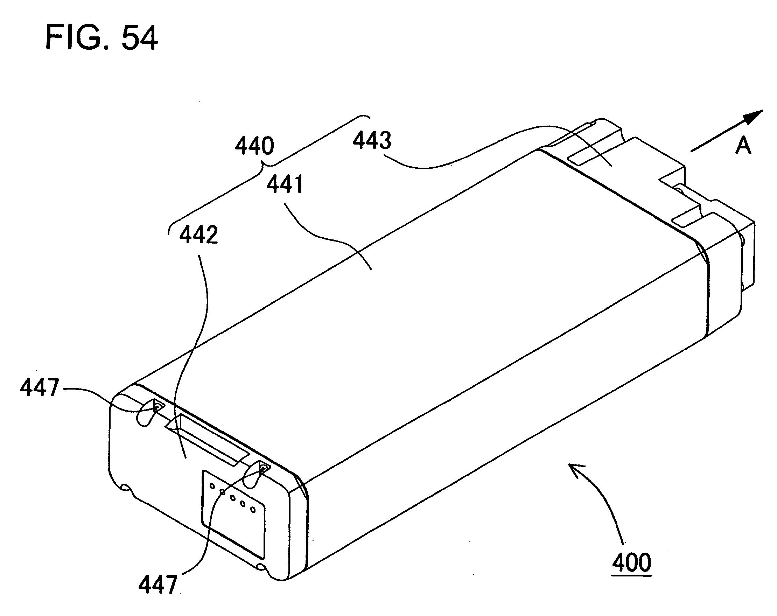

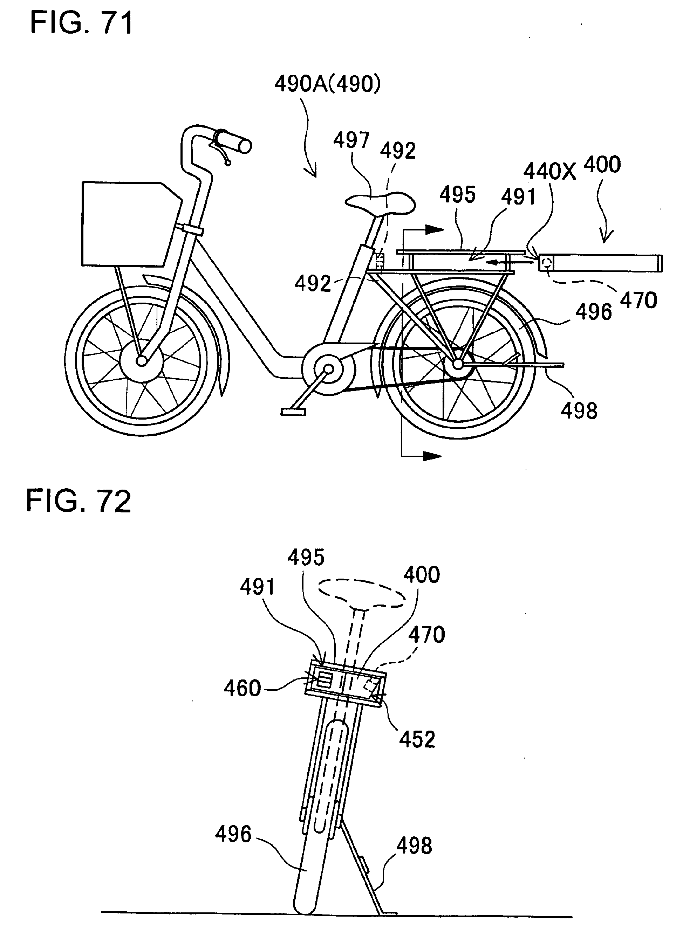

The illustrated battery pack 400 is horizontally orientated as orientation shown in Fig. 54. Then, the battery pack 400 is moved in the direction shown by an arrow in this Figure, and is mounted to the electric device. Fig. 71 shows an electric device 490 such as bicycle 490A including power assisted electric bicycle and electric bicycle with the battery pack 400 being moved to be mounted to the bicycle. In the illustrated bicycle 490A, the battery pack 400 is mounted to a rear rack portion. In the illustrated bicycle 490A, a mount portion 491 to which the battery pack 400 is mounted is arranged above a rear wheel 496 and under the rear rack 495. The battery pack 400 is inserted in this mount portion 491, and is mounted in place. In the illustrated bicycle 490A, an input terminal 492 is arranged under a saddle 497. The input terminal 492 is connected to the discharging connector 460 arranged in an end surface of the battery pack 400. When the battery pack 400 is inserted in the horizontal orientation to the mount portion 491 so that the discharging connector 460 on the end of the battery pack 400 is connected to the input terminal 492, the battery pack 400 is positioned in place. Although not illustrated, in vehicles without the rear racks such as electric wheelchair, electric tricycle and electric cart, the battery pack can be mounted to the vehicles in the horizontal orientation under their seat, for example.

### (Exterior Case)

The exterior case 440 includes a case unit 441 that has a tube portion, and closing portions 442 and 443 that close the openings of this case unit 441. In the illustrated exterior case 440, the case unit 441 has a tubular shape with both ends being opened. The both end openings of the tube-shaped case unit 441 are closed by the closing portions 442 and 443. The battery core pack 410 is accommodated in the case unit 441. The case unit may have a tubular shape that has an opening only on one end surface and has a bottom surface on the other end surface. In this case, the end surface opening can be closed by only one closing plate.

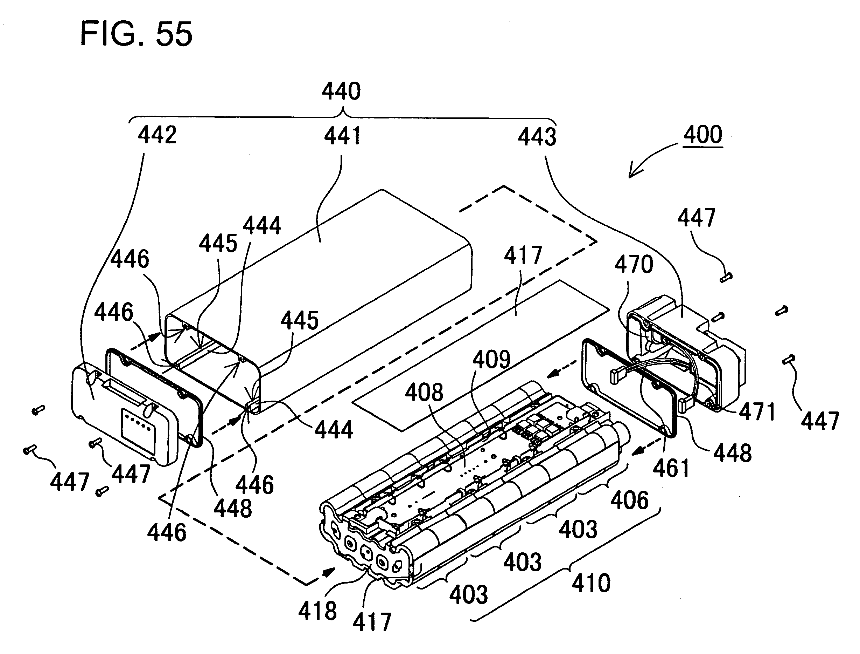

The exterior case unit 441 is formed of strong and heat dissipative metal such as aluminum. The exterior case unit 441 is formed in a rectangular tubular shape that has a width larger than the thickness. The ends of exterior case unit 441 are opened. The tube-shaped case unit 441 can be formed by aluminum drawing, for example. The case unit, which has a tubular shape with bottom surface, can be formed by aluminum plate press forming. Protrusion lines 444 are integrally formed with the case unit 441. The protrusion lines 444 extend in the longitudinal direction on interior surfaces of two sheets opposed to each other. The two sheets are arranged on the upper and lower sides. Thus, the protrusion lines 344 improve strength of the case unit 341. In the illustrated case unit 441, the protrusion lines 444 extend in parallel to each other on the both sides of each of the opposed surfaces. As shown in Fig. 55, the protrusion lines 444 extend along valley space parts 449 on the outer peripheral surfaces of the later-discussed battery holders 404 between the case unit 441 and the battery holders 404. Dead space portions that are created in valleys between the later-discussed holding cylindrical portions 20 or corner portions of the battery holders 404 can be used as the valley space parts 449. Since the protrusion lines 444 are arranged in the valley space parts 449, the battery core pack 410 can be held in place inside the exterior case 440 without deviation. A longitudinal groove 444 extends at the central part of the protrusion line 445 in the longitudinal direction. Screw holes 444 are formed in the opening ends of the longitudinal groove 445 on the both ends of the protrusion line 446. The fastening screws 446 penetrate the closing portions 442 and 443 and are screwed into the screw holes 447. Thus, the closing portions 442 and 443 are secured to the both ends of the case unit 441. In addition, in order to insulate the exterior case unit 440 formed of metal, the surfaces of the exterior case 441 can be covered by a laminate film, a vinyl film, or the like.

The closing portions 442 and 443 are formed of hard plastic. However, the closing portion may be formed of metal. The closing portions 442 and 443 have the same shape as the opening of the case unit 441 so that the opening ends of the case unit 441 can be closed. The closing portions 442 and 443 are secured to the case unit 441 by screws on the both longer upper and lower edge sides. In the exterior case 440, ring-shaped packing members 448 are interposed between the openings of the case unit 441, and the closing portions 442 and 443. Thus, the openings of the both ends are closed by waterproofing structures.

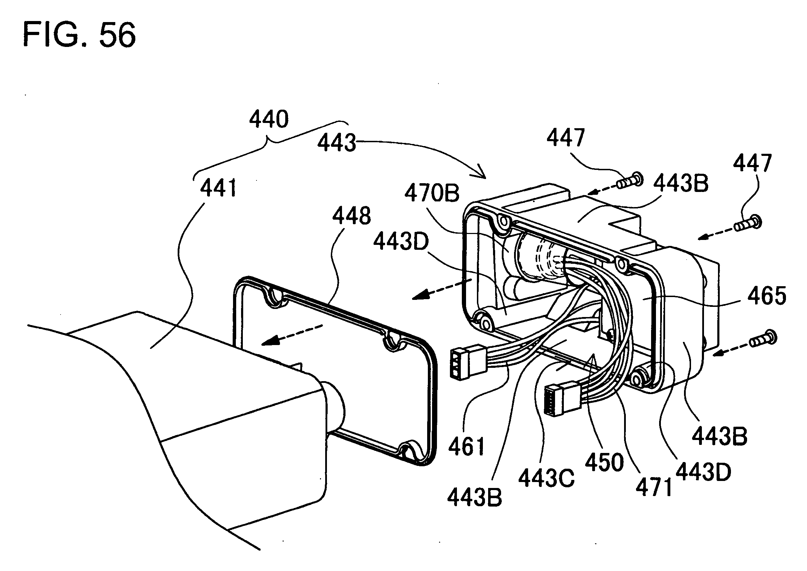

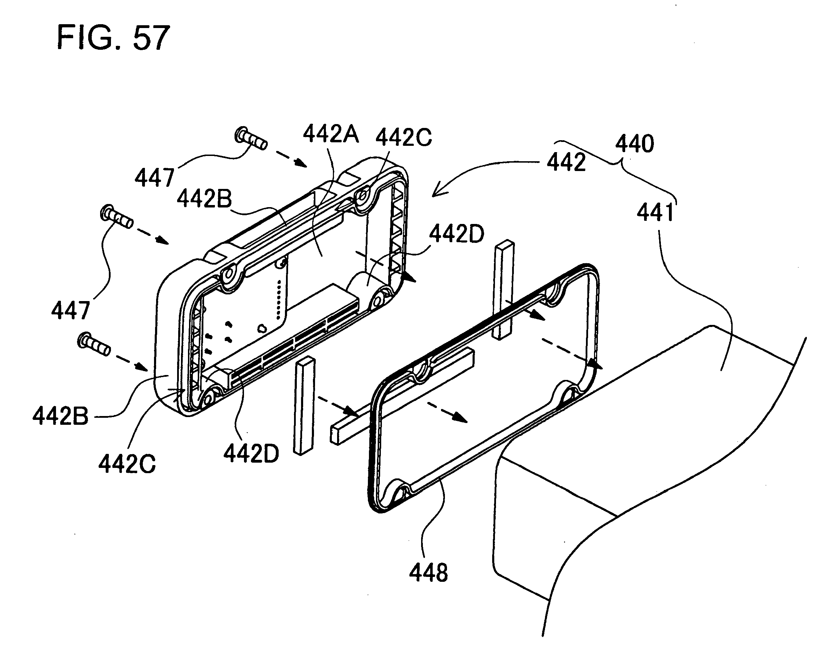

In the closing portions 442 and 443 have peripheral walls 442B and 443B coupled to the peripheries of end surface plates 442A and 443A. Ring-shaped grooves 442C and 443C are arranged on the end surfaces of these peripheral walls 442B and 443B. Ring-shaped packing members 448 are fitted into the ring-shaped grooves 442C and 443C. In addition, the closing portions 442 and 443 have bosses 442D and 443D that protrude inward of the upper and lower parts of the peripheral walls 442B and 443B, and receive fastening screws 447. The fastening screws 447 are inserted into these bosses 442D and 443D, and penetrate the closing portions 442 and 443. Thus, the fastening screws 447 are screwed into the case unit 441. The closing portions 442 and 443 are secured onto the both end openings of the case unit 441 by the screws. Thus, the both ends of the tube-shaped case unit 441 are closed by waterproofing structures. The peripheral wall 442B of one closing portion 442 shown in Figs. 55 and 57 has a low height to reduce the exterior shape of the exterior case 440 in size. in the case of a case unit that has a bottom surface, this closing portion is omitted. In the other closing portion 443 shown in Figs. 56 through 58, the peripheral wall 443B has a large height. The accommodation portion 450 is formed inside the closing portion 443, and accommodates the discharging connector 460 and the charging connector 470.

The closing portion 443 includes the discharging connector 460, which externally provides electric power of the batteries 401, and the charging connector 470, which charges the batteries 401. The discharging connector 460 is arranged on the end surface as the vertical surface 440X of the exterior case 440 in the illustrated closing portion 443. The closing portion 443 has an opening window 451 on the end surface plate 443A. The discharging connector 460 is arranged inside this opening window 451. The discharging connector 460 is externally exposed from the opening window 451. The charging connector 470 is arranged on the peripheral wall 443B as one side surface or a side surface of the exterior case 440 in the illustrated closing portion 443. In the closing portion 443, the side surface on which the charging connector 470 is arranged is used as an undercut surface 452 that is getting closer to the opposed surface opposed to this side surface (side surface of the opposite side) toward the bottom. The charging connector 470 is arranged in this undercut surface 452. In the closing portion 443, this undercut surface 452 has a penetration hole 453. A connector main portion 452B of the charging connector 470 is inserted into this penetration hole 453. The charging connector 470 is arranged on the undercut surface 452 so that a terminal insertion surface 470A of the charging connector 470 is orientated facing downward relative to the horizontal direction. In the case where this side surface on which the charging connector 470 is arranged is an undercut surface that is getting closer to a surface opposed to this side surface toward the bottom, and additionally a terminal insertion surface 470A of the charging connector 470 is orientated facing downward relative to the horizontal direction, it is possible to effectively prevent that rain water enters the charging connector 470 even if the battery pack mounted to the electric device is subjected to a weathered environment.

In the illustrated closing portion 43, the discharging connector 460 is arranged on one side of the end surface plate 443A, and the charging connector 470 is arranged on the opposite side surface. That is, in the closing portion 443, the discharging connector 460 and the charging connector 470 are arranged on the horizontally opposed sides. In the closing portion 43 shown in Fig. 53, the discharging connector 460 is arranged on the left side of the end surface plate 443A, and the charging connector 470 is arranged on the right side surface. As shown in Fig. 72, in this battery pack 400, the charging connector 470 can be arranged on a side surface of the battery pack mounted to the bicycle 490A in that a stand 498 of the bicycle 490A is arranged for holding the bicycle 490A in an inclination orientation. In the battery pack, since the charging connector 470 is arranged on a side surface of the battery pack where the stand 498 of the bicycle 490A is arranged, when the bicycle 490A is held in an inclination orientation, the terminal insertion portion of the charging connector 470 can be orientated further downward. Therefore, it is possible to more reliably prevent that the rain water enters the case through the charging connector 470. However, in the closing portion, the discharging connector may be arranged on the right side of the end surface plate, and the charging connector may be arranged on the left side surface.

### (Discharging Connector)

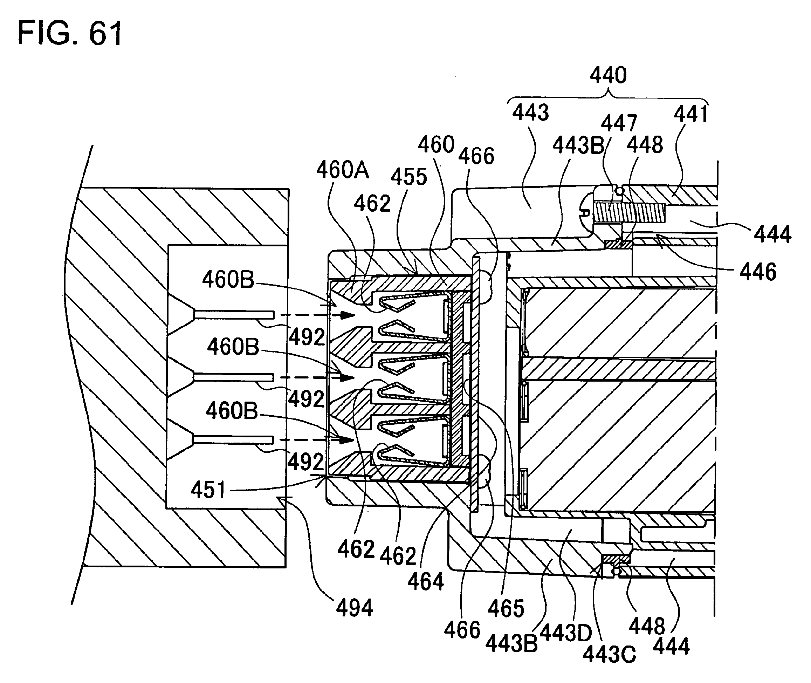

The discharging connector 460 includes a plurality of output terminals 462 connected to the input terminal 492 of the electric device, as shown in Fig. 61. The discharging connector 460 is arranged in the vertical surface 440X of the exterior case 440. The plurality of output terminals 462 are arranged spaced away from each other in the vertical direction. In the illustrated discharging connector 460, a plurality of horizontal grooves 460B are formed in parallel spaced away from each other in the vertical direction on a terminal insertion portion 460A that is exposed to from the opening window 451 arranged in the vertical surface 440X. The output terminals 462 as elastic contacts are arranged in the horizontal grooves 460B. As shown in Fig. 61, when plate-shaped input terminals 492 are inserted into the horizontal groove 460B, plate-shaped input terminals 492 are elastically sandwiched from their both sides by the output terminals 462 as elastic contacts,. Thus, the output terminals 462 are electrically connected to the input terminals 492. The discharging connector 460 has a connection surface of the output terminal 462 that is arranged in the horizontal orientation along the horizontal groove 460B, and the plurality of output terminals 462 are arranged in parallel to each other. The illustrated discharging connector 460 includes three output terminals 462. However, the discharging connector can include two, or four or more output terminals. Three or more output terminals can include positive/negative output terminals, and a communication terminal. In the thus-constructed discharging connector 460, as shown in Figs. 61 and 71, when the battery pack 400 is mounted to the mount portion 491 of the electric device 490, the discharging connector 460 can be connected to the input terminals 492 arranged in the electric device 490. In the illustrated battery pack 400, a stepped protruding portion 454 is arranged on one side part of the end of the closing portion 443, and accommodates the discharging connector 460. This stepped protruding portion 454 is fitted into a coupling recessed portion 494 arranged in the electric device 490. Thus, the discharging connector 460 is coupled to a predetermined position of the electric device 490 so that the output terminal 462 is connected to the input terminal 492.

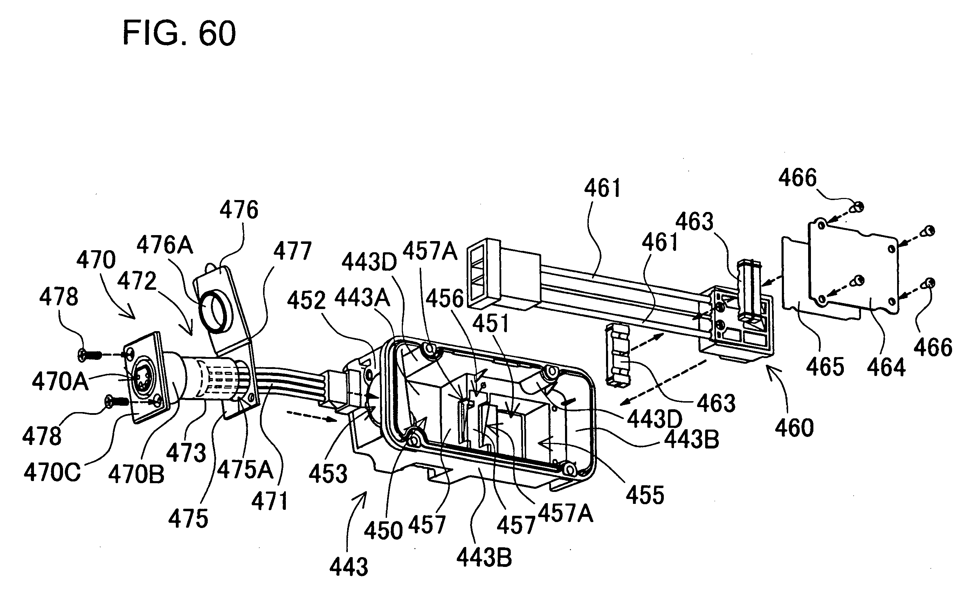

The discharging connector 460 is mounted to the closing portion 443 by a waterproofing structure. As shown in Figs. 60 and 61, an accommodation recessed portion 455 is arranged in the closing portion 443, and accommodates the discharging connector 460 inside the stepped protruding portion 454. The accommodation recessed portion 455 has an opening window 451 on the end surface plate 443A as the bottom surface. The terminal insertion portion 460A of the discharging connector 460 is arranged in this opening window 451. The output terminals 462 are externally exposed from the opening window 451. Discharging lead lines 461 drawn out from the discharging connector 460 are interposed by a pair of waterproof packing members 463. Thus, the discharging connector 460 is mounted to the accommodation recessed portion 455 by this waterproofing structure. The closing portion 443 shown in Fig. 60 includes a fit-in recessed portion 456 that is arranged adjacent to the accommodation recessed portion 455, accommodates the waterproof packing members 463, which has a block shape. The fit-in recessed portion 456 includes partitioning walls 457 on both sides. The waterproof packing members 463 are held in place by the partitioning walls 457 opposed to each other. Cut-out portions 457A are formed in the central parts of the partitioning walls 457. The cut-out portions 457A guides the discharging lead lines 461, which are interposed by the waterproof packing members 463, which are press-fitted into the fit-in recessed portion 456. In the closing portion 443, the openings of the accommodation recessed portion 455 and the fit-in recessed portion 456 are closed by a closing plate 464. The closing plate 464 is a metal plate, and attached by double-faced tape 465 to cover the openings of the accommodation recessed portion 455 and the fit-in recessed portion 456. Also, the closing plate 464 is secured onto the interior surface of the closing portion 443 by fastening screws 466. Thus, the discharging connector 460 accommodated in the accommodation recessed portion 455, and the waterproof packing members 463 accommodated in the fit-in recessed portion 456 are closed by this waterproofing structure. The double-faced tape 465 preferably has adhesion layers on both surfaces of a foaming sheet. This double-faced tape 465 can bring the interior surface of the closing plate 464 in intimate contact with the opening edges of the accommodation recessed portion 455 and the fit-in recessed portion 456, and the surface of the waterproof packing member 463. Therefore, it is possible to provide a reliable water tight structure.

### (Charging Connector)

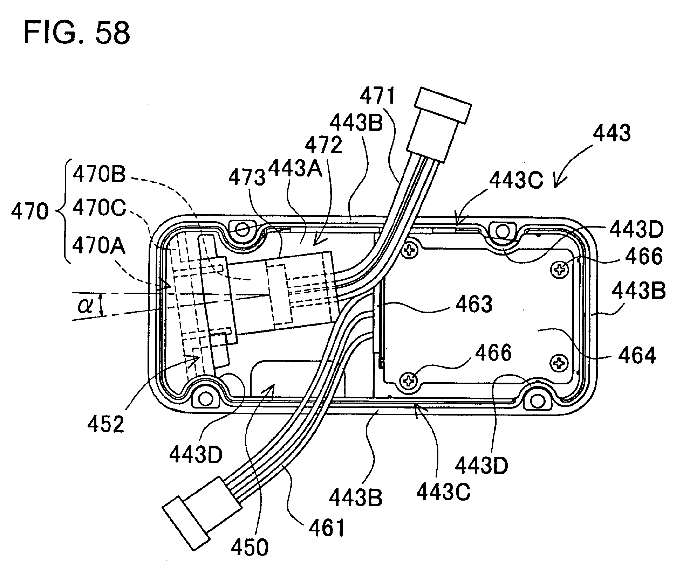

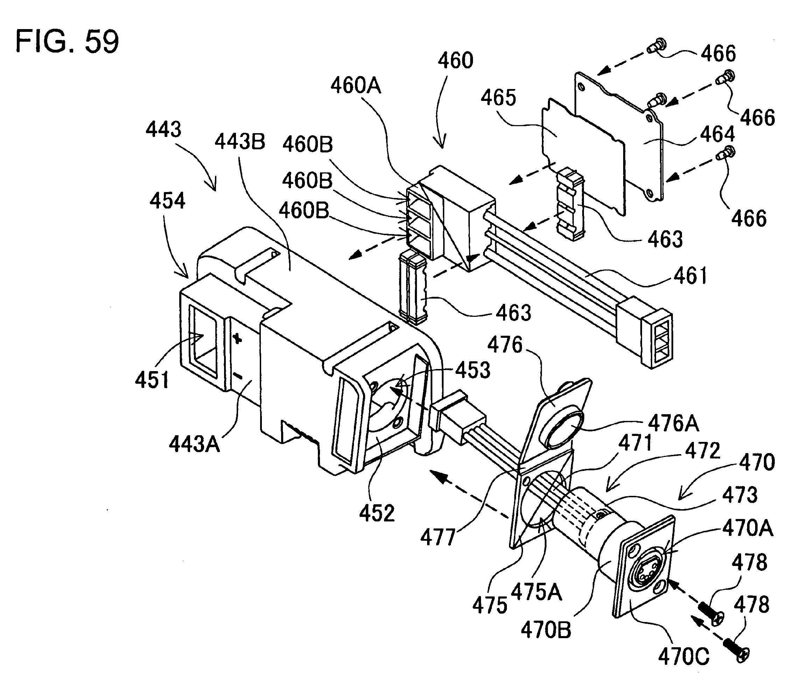

The charging connector 470 is arranged in the undercut surface 452 arranged in a side surface of the exterior case 440. When the charge plug (not shown) of the charger is connected, electric power can be provided from the charger. The charging connector 470 shown in Fig. 59 and Fig. 60 includes a flange portion 470C arranged on the undercut surface 452, and a connector main portion 70B coupled perpendicularly to this flange portion 470C. In the illustrated charging connector 470, the terminal insertion portion 470A to which the charging plug of the charger is connected is arranged on the end of the connector main portion 470B arranged in the central part of the flange portion 470C. The connector main portion 470B is inserted into the penetration hole 453 arranged in the undercut surface 452 in the charging connector 470. Thus, the flange portion 470C is secured onto the undercut surface 452. The charging connector 470 is secured to the undercut surface 452 by fastening screws 478, which penetrate the flange portion 470C. In the charging connector 470 secured to the undercut surface 452, the terminal insertion portion 470A is orientated facing downward relative to the horizontal direction. As shown in Fig. 58, the angle of depression (α) of the terminal insertion portion 470A of the charging connector 470 orientated facing downward relative to the horizontal direction can fall within a range of 5 to 30 degrees, preferably a range of 3 to 45 degrees. In the battery pack, when the angle of depression (α) of the terminal insertion portion 470A is larger, it is possible to more reliably prevent that rain water enters the terminal insertion portion.

The charging connector 470 is mounted to the closing portion 443 by a waterproofing structure. In the battery pack 400 shown in Figs. 59 and 60, a packing member 475 is interposed in the periphery of the penetration hole 453 of the undercut surface 452 between the flange portion 470C of the charging connector 470, and the undercut surface 452. This packing member 475 prevents that water enters through the penetration hole 453. The illustrated packing member 475 is a rubber sheet, and has a through hole 475A into which the connector main portion 470B of the charging connector 470 is inserted. In order to prevent that foreign bodies such as duct and water enter the battery pack in the case where the charge plug is not connected, the illustrated battery pack 400 includes a connector cover 476 that covers the surface of the charging connector 470. A cylindrical portion 476A is arranged in the central part of a rubber sheet of the illustrated connector cover 476. This cylindrical portion 476A is attached to the terminal insertion portion 470A , and covers the charging connector 470. The illustrated connector cover 476 is coupled to the packing member 475 via a bendable coupling portion 477, and is formed integrally with the packing member 475. This connector cover 476 is attached to a predetermined position of the closing portion by the packing member 475, which is secured to the undercut surface 452 by the charging connector 470. The connector cover 476 is detached in the case where the charge plug is connected to the charging connector 470. In the case where the charge plug is not connected to the charging connector 470, that is, in the case where the battery pack is mounted to the electric device, the terminal insertion portion 470A of the charging connector 470 is closed by the connector cover 353.

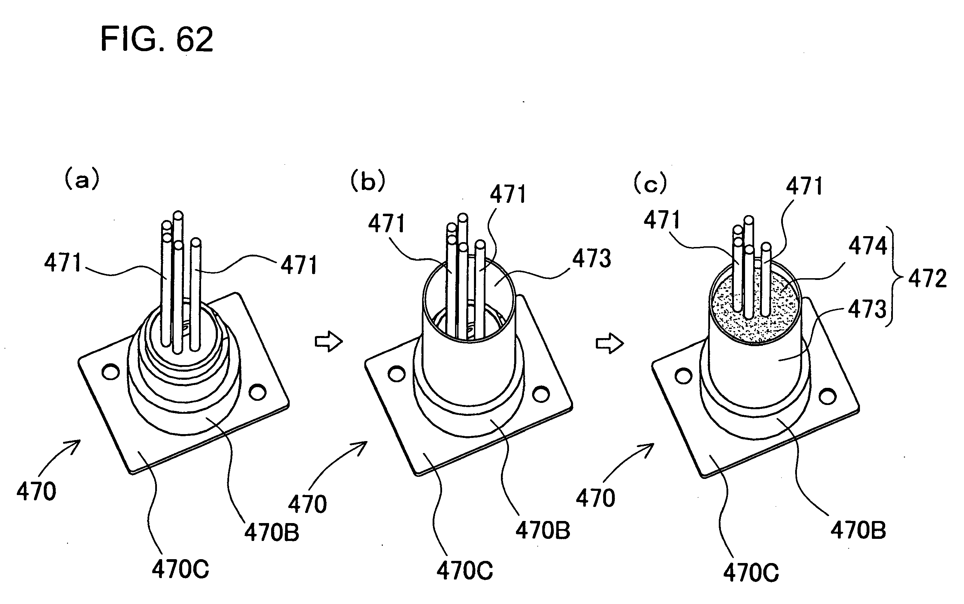

In order to draw out the charging lead lines 471 in a waterproof manner from the connector main portion 470B, in the illustrated charging connector 470, an insulating portion 472 is arranged in the draw-out part of the charging lead lines 471. The insulating portion 472 includes an insulating tube 473 that is coupled to the rear end portion of the connector main portion 470B, and an insulating resin member 474 with which the insulating tube 473 is filled. The insulating tube 473 is formed from a plastic sheet or a rubber sheet into a tubular shape. One end of the insulating tube 473 tightly covers the outer periphery of the connector main portion 470B. The other end protrudes from the rear end of the connector main portion 470B. The charging lead line 471 is inserted into the insulating tube 473. The insulating resin member 474 is plastic resin such as silicon. In this insulating portion 472, as shown in Fig. 62, the insulating tubing 473 is coupled to the rear end of the connector main portion 470B. The inside of this insulating tubing 473 is filled with the insulating resin member 474. Thus, the draw-out portion of the charging lead line 471 is covered by the insulating resin member 474 in a waterproof manner. According to this construction, the connector main portion 470B of the charging connector 470 can be simply and easily formed in a waterproof structure. the charging lead lines 71 can be drawn out from this waterproof connector main portion 470B of the charging connector 470.

When the thus-constructed discharging connector 460 and charging connector 470 are secured to the closing portion 443, as shown in Fig. 58, the discharging lead lines 461 and the charging lead lines 471 are drawn out from the discharging connector 460 and the charging connector 470, respectively, in different directions from each other in the closing portion 443. In the case where the discharging lead lines 461 and the charging lead lines 471 are drawn out in different directions from each other in the closing portion 443, wiring can be ideally installed without interference of the discharging lead lines 461 and the charging lead lines 471 with each other. Accordingly, the discharging connector 460 and the charging connector 470 can be arranged in the accommodation portion 450 inside the closing portion 443 even in small space, it is possible to safely and smoothly install wiring without the discharging lead lines 461 and the charging lead line 471 being forcedly bent.

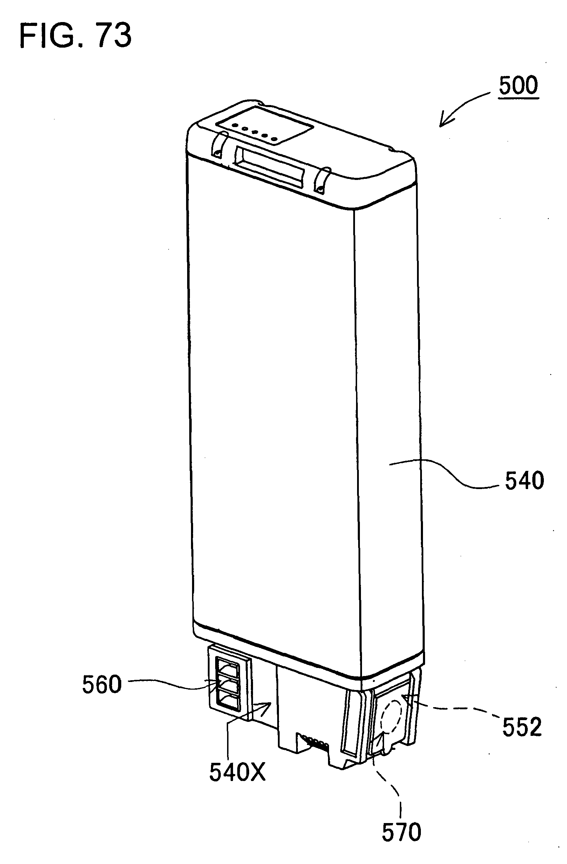

As shown in Fig. 71, the thus-constructed battery pack is mounted to the electric device 490 with the longitudinal direction and the width direction of the exterior case 440 being in parallel to the horizontal direction. However, the battery pack according to the present invention is limited to be mounted to the electric device with the longitudinal direction and the width direction of the exterior case being in parallel to the horizontal direction. As shown in Fig. 73, the battery pack according to the present invention can be mounted to the electric device the longitudinal direction of the exterior case 540 being in parallel to the vertical orientation. In this battery pack 500, the discharging connector 560 is arranged on the lower end part of the vertical surface 540X located in the front side in this Figure, and a plurality of output terminals are spaced away from each other in the vertical direction. A part of side surface of the exterior case 540 (lower end part in this Figure) is serves as an undercut surface 552 that is getting closer to a surface opposed to this side surface toward the bottom. The charging connector 570 is arranged on the undercut side 552 so that a terminal insertion surface of the charging connector 570 is orientated facing downward relative to the horizontal direction.

### (Core Pack)

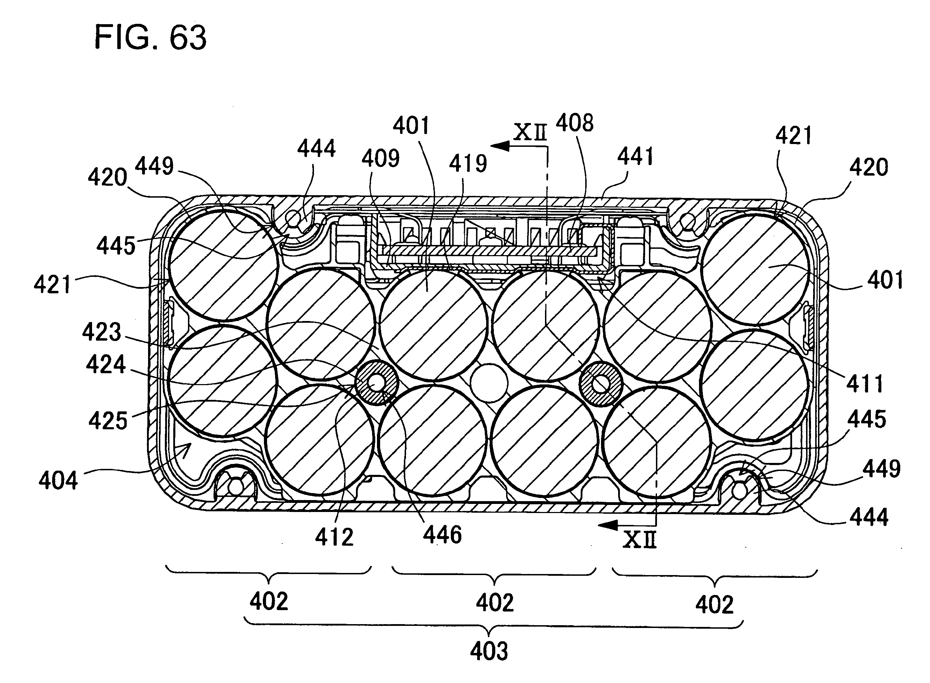

As shown in Figs. 63 through 66, in the core pack 10, the plurality of battery blocks 401 are arranged side by side in the longitudinal direction as the center axis direction of the base batteries 3, and aligned in a straight line. Each of the plurality of battery blocks 401 includes a plurality of base batteries 401 are arranged in multi-stare multi-column arrangement. In this core pack 410, a plurality of base batteries 401 are connected to each other in parallel so that the output current of the parallel unit 402 can be high. A plurality of parallel units 402 are connected serially to each other so that the output voltage can be high.

### (Battery Block)

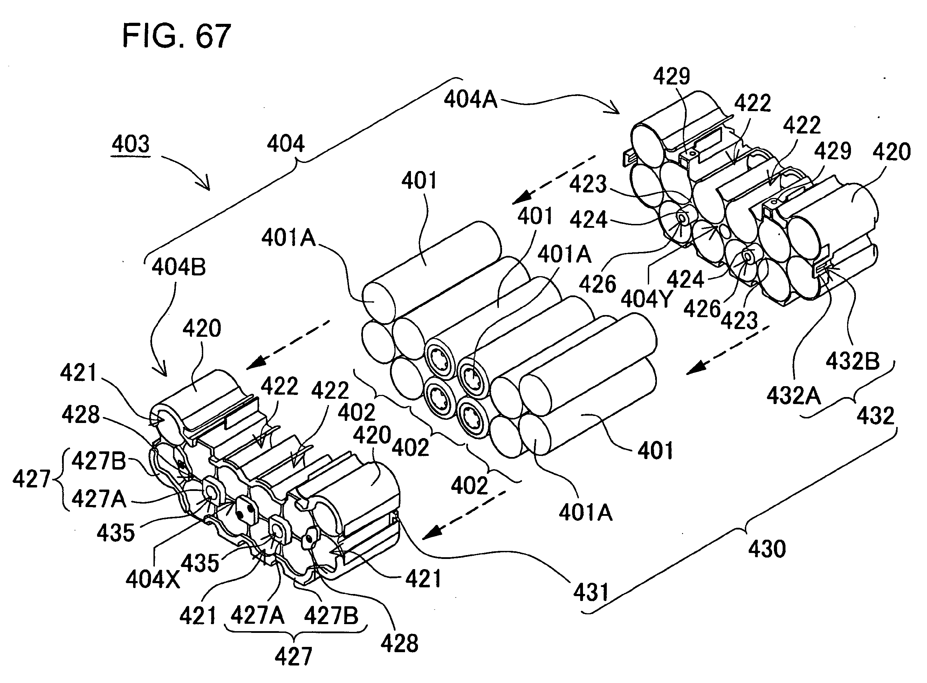

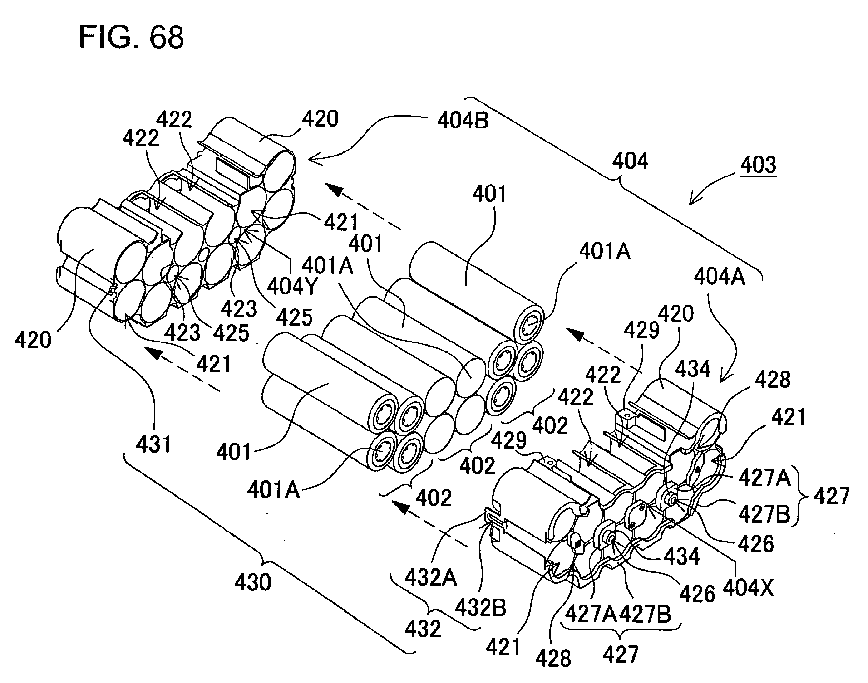

In the battery block 3, as shown in exploded perspective views of Fig. 67 and Fig. 68, a plurality of rechargeable base batteries 401 are arranged in multi-stage and multi-column arrangement. The base batteries 401 are a cylindrical rechargeable battery such as lithium-ion rechargeable battery. However, the base battery of the present invention is not limited to a lithium ion battery. Any rechargeable batteries can be used such as nickel-hydrogen battery, nickel-cadmium battery, lithium-polymer battery, and the like. In the illustrated battery pack, although cylindrical batteries are used the base batteries 401, the base batteries can be rectangular batteries.

In the battery block 403, a plurality of base batteries 401 are arranged with the center axes of the base batteries 401 being orientated in parallel to each other. A plurality of base batteries 403 in each of the battery blocks 401 are classified into a plurality of parallel units 402. In each of the parallel units 402, a plurality of base batteries 401 in each of the parallel units 401 are connected in parallel to each other by the lead plates 405 connected to end surface terminals 401A of the both ends of the base batteries 402. The plurality of parallel units 402 are arranged in a traverse straight line. The parallel units 402 adjacent to each other are orientated with the polarities of the end surface terminals 401A of the base batteries 401 of the adjacent parallel units 401 being opposite to each other. The parallel units 403 adjacent to each other in each of the battery blocks 402 are serially connected to each other by the lead plates 402, which connect the base batteries 401, which compose the parallel units 5, to each other in parallel.

A plurality of base batteries 401 in each of the battery blocks 403 are classified into an odd number, three or more, of parallel units 402. The reason for providing the battery block 403 with an odd number of parallel units 402 is that the parallel unit 402 adjacent to each other in the battery block 403 can be connected serially to each other by the lead plates 402 with a plurality of battery blocks 305 being arranged in a straight line. The illustrated battery block 403 includes twelve base batteries 401. These twelve base batteries 401 are classified into three parallel units 402 by four each. However, the battery block can include an odd number, three or more, of, for example, five sets or seven parallel units. The number of the base batteries in each parallel unit is not limited to four. Each parallel unit can includes three or less, or five or more base batteries. For example, although not illustrated, the battery block can include three parallel units each of which includes six base batteries, and can totally include eighteen base batteries as a whole. Also, the battery block can include five parallel units each of which includes three base batteries, and can totally include fifteen base batteries as a whole.

The battery pack can change its output voltage by changing the number of serially-connected battery blocks 403, and can change its width by changing the number of parallel units 402 that compose the battery blocks 403 whereby providing an optimum exterior shape for applications. In addition, since the battery pack includes parallel units 402 that are serially connected to each other by lead plates 405 bent at their center so that battery blocks 403 adjacent to each other are coupled to each other in a straight line, it is possible to efficiently and inexpensively assemble this battery pack. However, the battery pack according to the present invention does not necessarily includes a core pack that includes a plurality of battery blocks each of which includes an odd number, three or more, of parallel units arranged in one row. In the battery pack of the present invention, the number, the arrangement and the connection state of the batteries contained in the exterior case, and the number, the arrangement and the connection state of the battery blocks each of which includes a plurality of batteries are not limited. The battery pack of the present invention can use any structure that has been already developed or will be developed in the future.

### (Battery Holder)

Each of the battery blocks 403 includes a battery holder 404 that holds base batteries 401 in place, and the base batteries 401, which compose the battery block 403, are held in place by the battery holder 404. The battery holder 404 is formed of an insulating member, for example, is formed of resin such as plastic. The battery holder 404 holds the base batteries 401 in place in parallel to each other so that the end surface terminals 401A of the both ends of the base batteries 401 are arranged on two common planes.

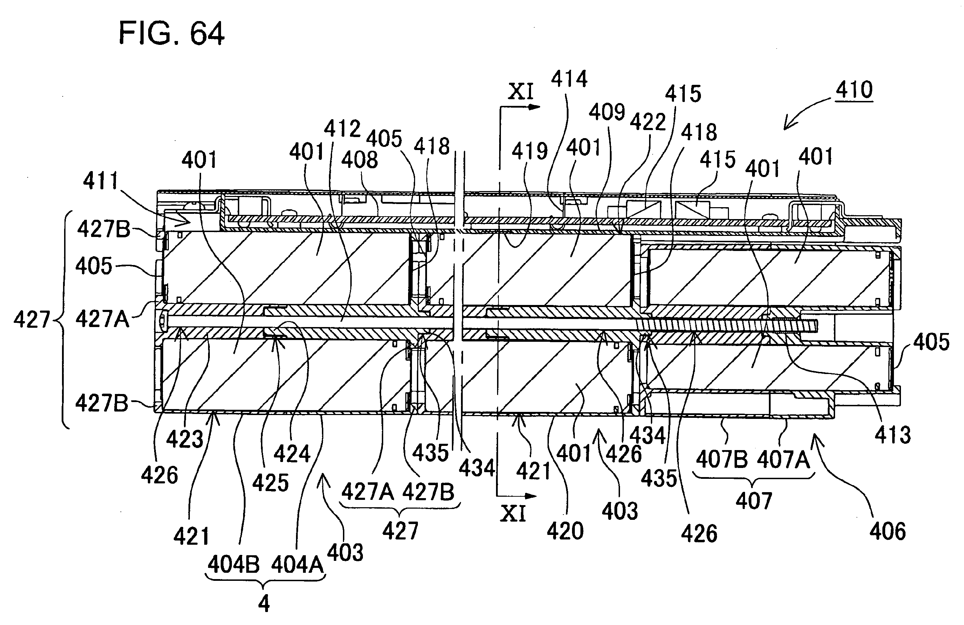

The battery holder 404 includes a plurality of holding cylindrical portions 420, as shown in Fig. 67 and Fig. 68. The base batteries 401 are inserted into and held in holding cylindrical portions 420. The battery holder 404 is formed integrally into a shape that couples the plurality of holding cylindrical portions 420 to each other. Each of the holding cylindrical portions 420 has a cylindrical insertion hole 421 the surface of which corresponds to substantially the entire circumferential surface of the base battery 401. The insertion hole 421 penetrates the holding cylindrical portion 420. The base battery 401 is inserted into each of the insertion holes 421 in the battery holder 404. Thus, a plurality of base batteries 401 are held in predetermined positions. However, the holding cylindrical portion does not necessarily have the cylindrical insertion hole 421 the surface of which corresponds to substantially the entire circumferential surface of the base battery. In the illustrated battery holder 404, the upper surface of two columns of holding cylindrical portions 420 located in the central part on the upper stage is cut out so that an exposure opening 422 is formed. Thus, exterior containers of these base batteries 401 are exposed from this exposure opening 422. In the battery pack of Figs. 63 and 64, a temperature sensor 419 is arranged on the surfaces of these base batteries 401 exposed from the exposure opening 422 of the battery holder 404 so that the temperature of these base batteries 401 can be detected. In the illustrated battery pack, the temperature sensor 419 is secured to the bottom surface of a circuit board holder 409 arranged on the upper surface of the central part of the battery holder 404.

The illustrated battery holder 4 includes twelve base batteries 401 in two, upper and lower, stages. Six batteries are arranged in each stage. In other words, twelve base batteries 401 are arranged in two-stage and six-column arrangement. In this battery holder 404, four base batteries 401 are arranged in two-stage and two-column arrangement in each of the parallel unit 402. The battery holder 404 includes three parallel units 402 are arranged in a traverse straight line. In the central part of the illustrated battery holder 404, base batteries 401 are arranged in two-stage and four-column arrangement so that the center of the base battery 401 are positioned at the vertices of a lattice. Two, upper and lower base batteries 401 on each of the both sides are arranged in close-packed arrangement so that the center of one of the two base batteries 401 is positioned in a valley between other base batteries 401 adjacent to the one of the two base batteries 401. In the thus-shaped battery holder 404, as shown in Fig. 63, the upper ends of the holding cylindrical portions 420 arranged on the both sides protrude upwards relative to the upper ends of the holding cylindrical portions 420 arranged in the central part. Accordingly, the accommodation recessed portion 411 as an accommodation space portion for accommodating a circuit board 8 is formed above the upper surfaces of the holding cylindrical portions 420 in the central part. However, the battery holder does not necessarily have the recessed portion above the whole surface of the central part. All of the base batteries accommodated in the battery holder can be arranged in a substantially rectangular shape so that the centers of all of the base batteries are positioned at the vertices of a lattice. Alternatively, all of the base batteries accommodated in the battery holder can be arranged in close-packed arrangement. Alternatively, a plurality of base batteries accommodated in the battery holder can be arranged in combination of lattice arrangement and close-packed arrangement. A plurality of base batteries accommodated in the battery holder can be arranged in various types of arrangement.

The battery holder 404 includes a pair of cell holders 404A and 404B corresponding to two parts of the battery holder 404 defined by dividing the battery holder 404 at the longitudinal center of into the base batteries 401 into two parts. The pair of cell holders 404A and 404B include half parts of the battery holders 404 corresponding to parts obtained by dividing the battery holders 404 at the longitudinal center of into the base batteries 401. The pair of cell holders 404A and 404B are coupled to each other with the both half parts of the base battery 401 being inserted into the holding cylindrical portion 420. Thus, the pair of cell holders 404A and 404B are held by the base battery 401 without deviation. Insertion holes 421 of half parts of the holding cylindrical portion 420 have an inner diameter that gradually decreases from a center-side end surface 404Y toward an outer end surface 404X. Thus, the insertion holes 421 are tapered. The smallest inner diameter of the insertion hole 421 on the outer end surface 404X is substantially equal to the outer diameter of the base battery 401. In this holding cylindrical portion 420, the base battery 401 can be smoothly inserted into the insertion holes 421. In addition, when the base battery 401 is inserted into the insertion holes 421, the ends of the base battery 401 come in contact with the interior surfaces of the holding cylindrical portion 420 in the insertion holes 421 on the outer end surface 404X. Thus, the base battery 401 can be held in place. In the case where the holding cylindrical portion 420 is composed of two half parts, metal molds for plastic forming can be simply designed, and it is possible to easily form the holding cylindrical portion 420 by plastic molding.

In order to couple the pair of cell holders 404A and 404B to each other without relative deviation, one cell holder 404A (right side in Figs. 67 and 68) includes a connecting boss 424 that protrudes from the center end surface 404Y, while the other cell holder 404B (left side in Figs. 67 and 68) has a connection recessed portion 425 on the center end surface 404Y with which the connecting boss 424 engages. In the illustrated cell holders 404A and 404B, the connecting bosses 424 and the connection recessed portions 425 are arranged in parts surrounded by some of the holding cylindrical portions 420 arranged in multi-stage and multi-column arrangement, that is, in cross-shaped parts 423 that are sounded by four holding cylindrical portions 420 that are arranged at four corners of lattices. In this battery holder 404, since the centers of the holding cylindrical portions 420 are arranged at the vertices of lattices, dead space parts are created. The coupling portions 423 can be defined as the dead space parts. The connecting bosses 424 and the connection recessed portions 425 are arranged in the dead space parts. In the pair of illustrated cell holders 404A and 404B, the connecting bosses 424 and the connection recessed portions 425 are arranged opposed to each other in two coupling portions 423 in left and right sides.

The illustrated battery holder 404 has through holes 426 into which penetration screws 412 inserted. Thus, the penetration screws 412 penetrate the entire core pack 410. This through holes 426 are formed in positions that correspond to the aforementioned cross-shaped coupling portions 423 each of which is surrounded by four holding cylindrical portions 420 in the central part of the battery holder 404. The space of this battery holder 404 is effectively used to form the through holes 426. The through holes 426 are arranged in two positions in the both side parts of the battery holder 404. Each of the through holes 426 is formed in the center of the aforementioned connecting boss 424 and the center of the connection recessed portion 425.

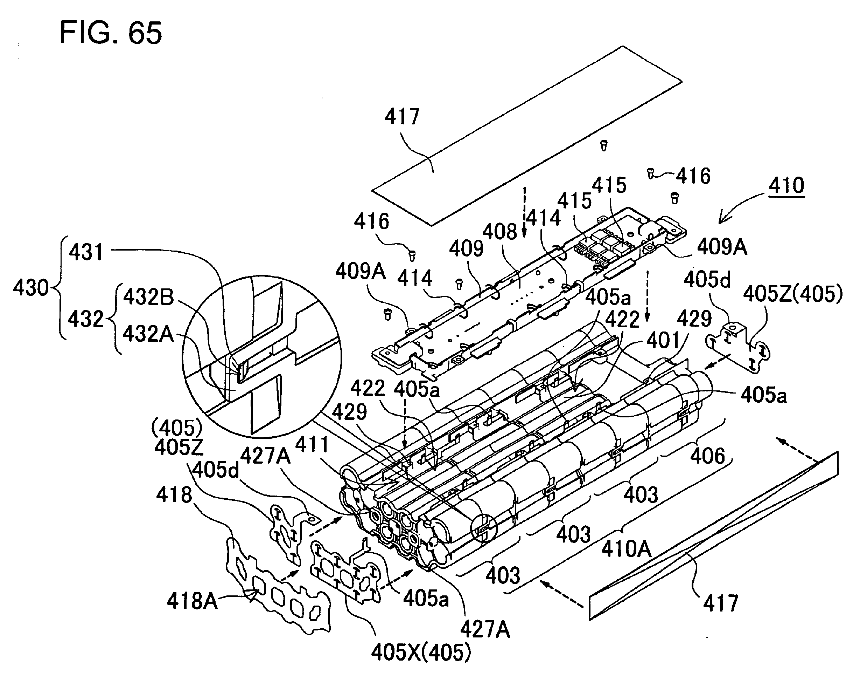

The pair of cell holders 04A and 404B are coupled by an interlocking structure. More specifically, the pair of cell holders 404A and 404B are coupled to each other by hook engagement portions 430 as shown in a partially enlarged view of Fig. 65. The hook engagement portions 430 are formed integrally with the both side surfaces of the cell holders 404A and 404B. In the battery holder 404 of Figs. 67 and 68, interlocking protrusions 431 are formed on the both side surfaces of one of the cell holders 404B (left side in the Figures), while Interlocking portions 432 are formed on the both side surfaces of the other of the cell holders 404A (right side in the Figures), and guide and interlock with the interlocking protrusions 431. The illustrated interlocking portion 432 has a protruding portion 432A that is formed integrally with the side surface of the other cell holder 404A, and protrudes toward the interlocking protrusion 431 of the one cell holder 404B. In addition, the interlocking portion 432 has an interlocking opening 432B that guides the protruding portion 432A to the interlocking protrusion 431. The interlocking portion can have an interlocking recessed portion on the interior side of the protruding portion for guiding the interlocking protrusion. In the thus-constructed hook engagement portion 430, the protruding portion 432A elastically deforms so that the interlocking protrusion 431 can be guided smoothly to the interlocking hole 432B. As a result, the pair of cell holders 404A and 404B can be simply and easily coupled to each other without decoupling. However, in the hook engagement portion, an interlocking hook can be formed on the interior side of the protruding portion, which protrudes from the side surface of the one cell holder, while an interlocking recessed portion can be formed on the side surface of the other cell holder, and can guide this interlocking hook. The pair of cell holders can be coupled to each other by a coupling structure other than the interlocking structure, for example, by screw, adhesive.

Although the thus-constructed battery holder 404 is composed of the pair of cell holders formed of plastic, the battery pack of the present invention is not limited to this construction. The battery holder can has any structures capable of holding a plurality of batteries in predetermined positions. For example, the battery holder can be integrally constructed. Also, the battery holder can be composed of three or more separated parts.

Protrusion prevention portions 427 are formed integrally with the outer end surface 404X of the battery holder 404. The protrusion prevention portions 427 prevent that the end surface terminals 401A of the base batteries 401 inserted in the insertion holes 421 protrude outward of the outer end surface 404X. The protrusion prevention portions 427 allow the end surface terminals 401A of the base batteries 401 inserted in the insertion hole 421 to be exposed from the outer end surface 404X, but prevent that the end surface terminals 401A protrude from the opening ends. The protrusion prevention portions 427 protrude inward of the opening edges of the insertion holes 421, and partially overlap the openings of the insertion holes 421. In the battery holder 404 of Figs. 67 and 68, the protrusion prevention portions 427 include positioning blocks 427A, and the positioning protrusions 427B. The positioning block 427A is arranged in the coupling portion 423 surrounded by a plurality of holding cylindrical portions 420 in the central part of the battery holder 404, and partially overlaps the opening of the insertion hole 421. The positioning protrusion 427B protrudes inward of the outer peripheral rim of the battery holder 404 in the outer periphery portion of the battery holder 404. In this battery holder 404, since the protrusion prevention portions 427 are in contact with the end surface terminals 401A of the base batteries 401 inserted into the insertion holes 421, it is possible to prevent that the end surface terminals 401A of the base batteries 401 protrudes from the outer end surface 404X.

In order to couple the battery block 403 adjacent to each other to each other without relative deviation, an end surface of one battery holder 404 (right side in Figs. 67 and 68) includes a connecting boss 434 that protrudes from the positioning block 427A, while the other battery holder 404 (left side in Figs. 67 and 68) has a connection recessed portion 425 in the positioning block 427A on the other end surface with which the connecting boss 434 engages. In the battery holder 404, the positioning block 427A is formed integrally with the coupling portion 423 that has the aforementioned connecting boss 424 and the connection recessed portion 425. In addition, the positioning block 427A has the connecting boss 434 and the connection recessed portion 435. Also the connecting bosses 434 and the connection recessed portions 435 have the through holes 426 on their centers into which the penetration screws 412 are inserted. The connecting boss 434 that protrudes from an end surface of one of the battery blocks 403 adjacent to each other is fitted into the connection recessed portion 435 of an end surface of the other of the adjacent battery blocks 403. Thus, the adjacent battery blocks 403 can be coupled to each other without relative deviation.

Positioning recessed portions 428 are arranged on the both end surfaces of the battery holder 404. The lead plates 305 to be arranged on the outer end surfaces 404X are fitted into the positioning recessed portions 428. In the illustrated battery holder 404, a part inside the positioning protrusion 427B, which protrudes from the outer end surface 404X, and outside the positioning block 427A is formed as a stepped portion lower the than the protrusion prevention portion 427. Thus, the stepped portion serves as the positioning recessed portion 412 into which the lead plate 405 is fitted. The positioning recessed portion 428 holds the lead plate 405 in place.

### (Secondary Battery Block)

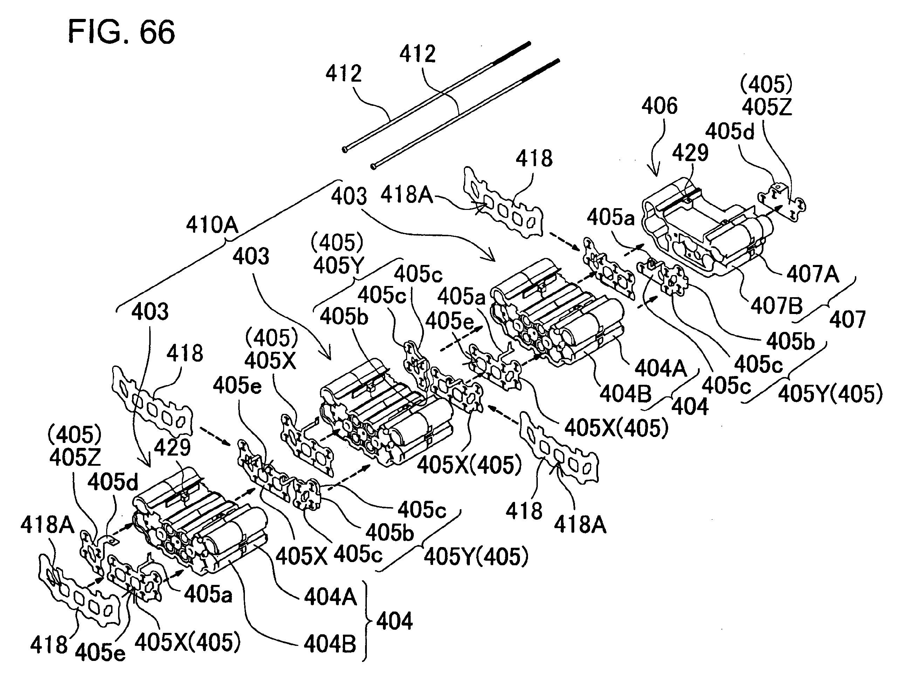

In the battery core pack 410 shown in Fig. 66, a secondary battery block 406 is arranged at an end of an assembly 410A of the battery blocks 403 each of which includes a plurality of battery blocks 403 arranged in a straight line. This secondary battery block 406 includes parallel units 402 the number of which is less than the battery block 403. In the illustrated core pack 410, although the secondary battery block 406 is arranged only on one end of the assembly 410A of the battery blocks 403, the secondary battery blocks can be arranged on the both ends of the assembly of the battery blocks.

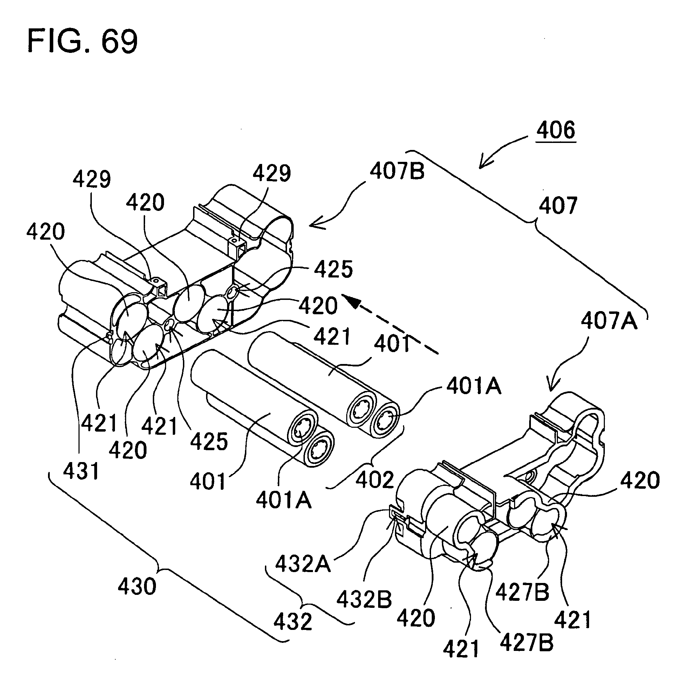

The secondary battery block 406 includes a secondary battery holder 407 that is composed of a pair of cell holders 407A and 407B, as shown in Fig. 69. Since the secondary battery block 407 includes parallel units 402 the number of which is less than the battery holder 404, the number of the holding cylindrical portions 420 is less than the battery holder 404. The secondary battery holder 407 shown in Fig. 69 includes four holding cylindrical portions 420, and can accommodate four base batteries 401. In this secondary battery holder 407, the holding cylindrical portions 420 that accommodate four base batteries 401 on one side (near side in Fig. 69), while a cavity portion is formed on the other side. This cavity portion of the secondary battery holder 407 can be used as an accommodation space for accommodating components such as connector. the number of the holding cylindrical portions of the secondary battery holder can be changed in accordance with the number of the base batteries to be held in the secondary battery block.
Components of the secondary battery holder 407 same as or similar to those of the aforementioned battery holder 404 are attached with the same reference numerals, and their description is omitted.

In the battery core pack 410 shown in Fig. 66, the four base batteries 401 are connected in parallel to each other. The parallel units 402 adjacent to each other are connected serially to each other. Thus, in one battery block 403, twelve base batteries 401 are connected to each other in three-serial and four-parallel connection. In addition, three first battery blocks 403 are serially connected to each other. Thus, total 36 battery cells 401 are connected to each other in nine-serial and four-parallel connection. Four base batteries 401 accommodated in the secondary battery block 406 compose the parallel unit 402. This parallel unit 402 is serially connected to the assembly 410A of the battery block 403. Thus, three battery blocks 406 and one secondary battery block 406 are combined so that totally forty base batteries 401 are connected to each other in ten-serial and four-parallel connection. For example, in the case where lithium-ion rechargeable batteries of 3.6 V/cell are employed as the base batteries 401, since ten battery cells are serially connected, output of 36 V can be provided. However, all of the holding cylindrical portions of the battery holder and the secondary battery holder in the core pack do not necessarily accommodate the base batteries. For example, each of the three battery holders can accommodate nine base batteries, while the secondary battery holder can accommodate three base batteries. Thus, totally thirty base batteries 301 can be connected to each other in ten-serial and three-parallel connection.

As discussed above, in the case where the secondary battery block 406 is coupled to one end or each of the both ends of the assembly 410A of the battery blocks 403, the number of the parallel units 402 connected serially to each other can be adjusted. In the battery pack, the number of the parallel units 402 includes in each of the battery blocks 403 is not limited to three. The battery block 403 can include an odd number, three or more, of parallel units 402.

### (Lead Plate 405)

The lead plates 405 are secured to the end surface terminals 401A of the base batteries 401 exposed from the openings of the insertion holes 421 on the both end surfaces of the battery holder 404 by spot welding or the like. The lead plate 405 is formed from a thin conductive metal plate. The lead plates 405 couples the end surface terminals 401A of a plurality of base batteries 401, which compose the parallel unit 402, on common two planes, and connects these base batteries 401 in parallel to each other. In addition, the lead plates 405 connect parallel units 402 adjacent to each other serially to each other. The illustrated lead plate 405 includes a straight lead plate 405X that connects serially the parallel units 402 in one battery block 403, and a bendable lead plate 405Y that serially connects the parallel units 405 of the battery blocks 403 adjacent to each other.

The straight lead plate 405X is arranged on the end surface of the battery holder 404, and couples parallel units 402 adjacent to each other to each other with their end surface terminals 401A being arranged on the same plane. The straight lead plate 405X serially connects the adjacent parallel unit 402 is connected to each other. The illustrated straight lead plate 405X connects the four base batteries 401 in each of the parallel units 402 to each other in parallel, and serially connects two parallel units 402 adjacent to each other to each other. Accordingly, eight battery connection portions are arranged in multi-stage and multi-column arrangement so that the eight base batteries 401 can be connected to each other. Each battery connection portion has a spot welding slit. The illustrated straight lead plate 405X has penetration holes 405e to which the positioning blocks 427A are guided between eight battery connection portions when the straight lead plate 405X is attached to the end surface of the battery holder 404. The straight lead plate 405X is arranged in a predetermined position of the end surface of the battery holder 404 when the positioning block 427A is guided to the penetration hole 405e.

The bendable lead plate 405Y is arranged astride the adjacent battery holders 404, and serially connects the parallel units 402 of the battery blocks 403 adjacent to each other to each other. The bendable lead plate 405Y is bent at a bent portion 405b located in the center of the bendable lead plate 405Y when the adjacent battery blocks 403 are arranged in a straight line as shown in Fig. 66. The parallel units 403 of the adjacent battery blocks 403 are serially connected to each other by connection parts 405c located on the both sides of the bent portion 405b. The illustrated bendable lead plate 405Y connects the four base batteries 401 in each of the parallel units 402 to each other in parallel by the connection parts 405c, and serially connects two parallel units 402 adjacent to each other to each other by the bent portion 405b. Accordingly, each of the connection parts 405c has four battery connection portions with slits that are arranged in two-stage and two-column arrangement so that the four base batteries 401 can be connected to each other. In addition, the bent portion 405b, which couples the two connection parts 405c, has a width narrower than the connection parts 405c. Thus, the bent portion 405b can be easily bent. The connection part 405c has penetration holes 405e to which the positioning blocks 427A are guided between four battery connection portions when the connection part 405c is attached to the end surface of the battery holder 404. The bendable lead plate 405Y is arranged in a predetermined position of the end surface of the battery holder 404 when the positioning block 427A is guided to the penetration hole 405e of the connection part 405c.

The bendable lead plates 405Y are arranged in diagonal positions of the battery blocks 403. The bendable lead plates 405Y serially connects the parallel unit 402s arranged on side parts of the adjacent battery blocks 403 opposed to each other. Since the bendable lead plates 405Y are arranged in the diagonal positions of the battery blocks 403, which includes an odd number of parallel units 403, the both end surfaces of the battery blocks 403 adjacent to each other can be connected to each other at alternate sides on the both end surfaces of the adjacent battery blocks 403 when the adjacent battery blocks 403 are arranged in a straight line.

The secondary battery block 406 and the battery block 403 adjacent to this secondary battery block 406 are connected to each other also by the bendable lead plate 405Y. The bendable lead plate 405Y is bent at the bent portion 405b located in the center of the bendable lead plate 405Y when the battery block 405 and the secondary battery block 403 adjacent to each other are arranged in a straight line as shown in Fig. 66. The parallel units 402 of the battery block 403 and the secondary battery block 406 adjacent to each other are serially connected to each other by the connection parts 405c located on the both sides of the bent portion 405b. Also, the bendable lead plate 405Y connects four base batteries 401 that compose the secondary battery block 406 to each other in parallel by four battery connection portions arranged in the connection part 405c.

As shown in Figs. 65 and 66, the straight lead plate 405X and the bendable lead plate 405Y include connection terminal portions 405a that protrude in from the upper ends of the plates for detecting potentials at middle points among battery cells. As shown in Fig. 65, the connection terminal portions 405a are a bent part that is bent in a crank shape. The connection terminal portions 405a are drawn out along the upper surfaces of the battery holders 404 when the battery holders 404 are coupled in a straight line. The end of the connection terminal portion 405a is perpendicularly bent, and thus protrudes upward of the upper surface of the battery holder 404. The connection terminal portions 405a are connected to the circuit board 408 arranged in the accommodation recessed portion 411 through lead lines 414 connected to the ends of the connection terminal portions 405a.

The lead plate 405 includes end surface lead plates 405Z that are arranged on the both end surfaces of the core pack 410. The end surface lead plates 405Z are connected to the end surface terminals 401A of the serial ends of parallel units among a plurality of parallel units 402 that are connected serially to each other. The output of the core pack 410 is provided through the end surface lead plates 405Z. The end surface lead 405Z is connected to the circuit board 408 via a bent part 405d that is bent in an L shape. The output from the core pack 410 is connected to the discharging connector 460 through the discharging lead lines 471.

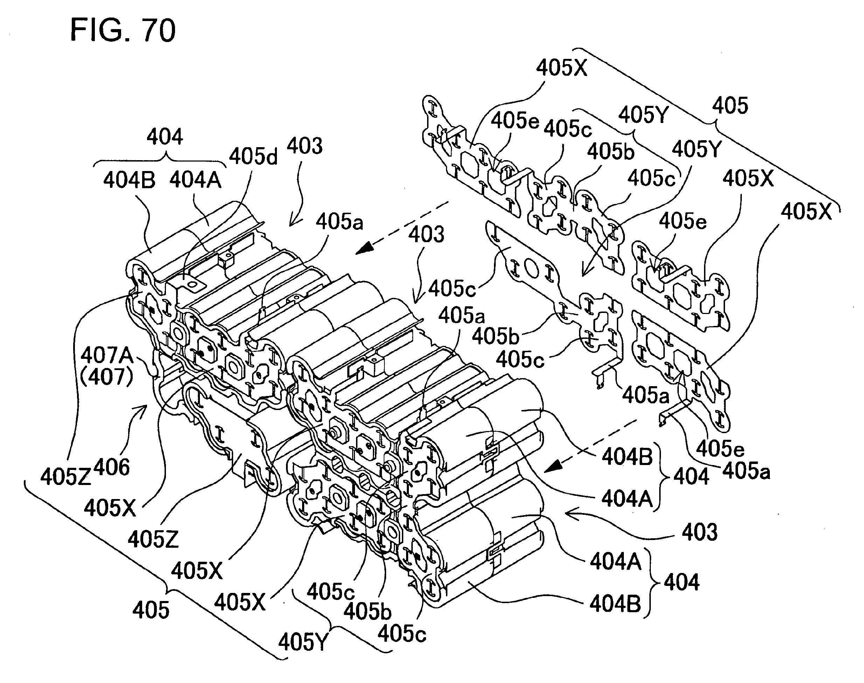

In the thus-constructed core pack 410, three battery blocks 403 and one secondary battery block 406 are coupled to each other in a straight line via the bendable lead plates 405Y. In this core pack 410, as shown in Fig. 66, the bendable lead plate 405Y is bent in the horizontal direction that couples the leftmost battery block 403 to the second battery block 406 from the left side. The bendable lead plate 405Y is bent in the vertical direction that couples the second battery block 406 from the left side to the third battery block 403 from the left side. The bendable lead plate 405Y is bent in the horizontal direction that couples the third battery block 403 from the left side to the secondary battery block 406. In other words, the three battery blocks 403 and the one secondary battery block 406 in said battery core pack 410 are serially connected to each other by the lead plates 405Y each of which has the bent portions 405b bent in the horizontal direction between its pair of connection parts 405c, and the lead plate 405Y bent in the vertical direction between its pair of connection parts 405c. Thus, the horizontally-bent and vertically-bent lead plates 405Y are alternately arranged. For example, a shown in Fig. 70, in this core pack, with the three battery blocks 403 and the one secondary battery block 406 being stacked in two-stage and two-column arrangement, the lead plates 405 arranged on the both end surfaces of the battery holders 404 and the secondary battery holder 407 can be effectively secured onto the end surface terminals 401A of the base batteries 401 by spot welding. In particular, in the thus-constructed battery pack, since the lead plates 405 arranged on the both end surfaces can be secured by spot welding with the battery blocks 406 and the secondary battery block 406 being arranged side by side in two-stage and two-column arrangement whereby reducing the entire length, it is possible to reduce the stroke range of the spot welder and as a result to efficiently secure the lead plates 405 by spot welding. For this reason, spot welding can be conducted by effectively using existing spot welders with a narrow stroke range, without newly introducing a spot welder with a large stroke range. In this core pack 410, after all of the base batteries 401 are connected in parallel and in series to each other by the lead plates 405, the bendable lead plates 405Y are bent in the predetermined directions, i.e., the horizontal and the vertical directions, at the bent portions 405b. Thus, three battery blocks 403 and one secondary battery block 406 are arranged in a straight line.

In the battery pack, the number of the battery blocks and secondary battery blocks arranged in a straight line as a battery core pack is not limited to four. Although not illustrated, the battery core pack can include four or more battery blocks, or three or more battery blocks and at least one secondary battery block that are serially coupled to each other by said lead plates.

### (Insulating Sheet)

In the case where the battery blocks 403 and the secondary battery block 406 are coupled in a straight line as discussed above, insulating sheets 418 are interposed between the battery blocks 403 opposed to each other and between the battery block 403 and the secondary battery block 406 to prevent that a short circuit occurs between the lead plates 405 as shown in Fig. 66. Insulating paper, plastic film, or the like can be used as the insulating sheet 418. The illustrated insulating sheet 418 has an exterior shape that can be fitted in the positioning recessed portion 428 formed in the battery holder 404. Thus, the insulating sheet 418 can cover the surface of the lead plate 405 arranged in the positioning recessed portion 428. The insulating sheet 418 shown in Fig. 66 has penetration holes 418A to which the positioning blocks 427A are guided when the insulating sheet 418 is attached to the end surface of the battery holder 404. This penetration hole 418A has a shape into which the positioning block 427A can be fitted. Thus, when the positioning blocks 427A is fitted into the penetration holes 418A, the insulating sheet 418 are interposed in predetermined positions between the battery blocks 403 opposed to each other and between the battery block 403 and the secondary battery block 406. In addition, the illustrated insulating sheet 408 is also to be interposed between the connection parts 405c of the bent bendable lead plate 405Y. Accordingly, it is possible to prevent that unintended discharge occurs between the connection parts 405c.

### (Coupling Member)

In the illustrated core pack 410, in order to more firmly couple the battery blocks 403 and the secondary battery block 406 in a straight line, the battery blocks 403 and the secondary battery block 406 are coupled by coupling members. The illustrated coupling members are penetration screws 412 that penetrate the central part of the core pack 410. Each of the battery holders 404 and the secondary battery holder 407 has through holes 426 at two positions in the central part into which the penetration screws 412 are inserted. In this core pack 410, with the battery blocks 403 and the secondary battery block 406 being coupled to each other in a straight line, the penetration screws 412 penetrate the battery holders 404 and the secondary battery holders 407, and ends of the penetration screws 412 are screwed into nuts 413. Thus, the battery blocks 403 are coupled and held in a straight line. In the battery pack shown in Fig. 64, the nuts 412, which threadedly engage with the ends of the penetration screws 413 are inserted and secured into the cell holder 407A of the secondary battery holder 407. However, the nut is not necessarily inserted into the through hole. The nut can be arranged outside the through hole.

Although not illustrated, the coupling member, which couples the battery blocks and the secondary battery block can be a coupling frame that is arranged along the outer peripheral surfaces of the battery holders and the secondary battery holder at the longitudinal direction. The both ends of this coupling frame are secured to the both ends of the core pack. Thus, the battery blocks and the secondary battery block coupled in a straight line to each other are held for preventing that they are decoupled from each other..This coupling frame can be arranged in valleys that are formed in the outer peripheral surfaces of the battery holders and the secondary battery holder between the holding cylindrical portions, for example. Accordingly, this coupling frame can be arranged in dead space without increasing the exterior shape of the core pack.

### (Circuit Board)

The battery pack shown in Fig. 55 includes the circuit board 408 connected to the battery core pack 410. The core pack 410 shown in Figs. 64 and 65 has the accommodation recessed portion 411 that accommodates the circuit board 408 and is arranged in the upper surfaces of the battery holders 407 and the secondary battery holder 404 coupled to each other. The circuit board 408 is arranged inside this accommodation recessed portion 411. The circuit board 408 is arranged in a predetermined position of the core pack 410 by the circuit board holder 409. The lead plates 405 are connected to the circuit board 408 arranged inside the circuit board holder 409 in the illustrated core pack 410.

The circuit board 408 has a protection circuit (not shown) that controls charging/discharging operation of the base batteries 401. The circuit board 408 has electronic components 415 that realize this protection circuit. The circuit board 408 has a plate shape, and extends in the longitudinal direction of the core block 410 as shown in Figs. 64 and 65. According to this construction, the elongated circuit board 408 extends in the longitudinal direction in that base the batteries 401 are serially connected to each other. Accordingly, the distance between the circuit board 408 and each of the base batteries 401 can be short. Therefore, it is possible to easily install wiring between the circuit board 408 and the base battery 401, for example, in the case where the potential at a middle point among battery cells is detected. In the battery pack shown in Fig. 65, wiring is installed by the connection terminal portions 305a that extend from the lead plates 405 of the battery blocks 403 without using separated lead lines. Accordingly, assembling processes can be simplified. In addition, separated lead lines are not required.

The protection circuit also includes a circuit that detects the battery voltages and interrupts charging/discharging current. If any of battery voltages becomes lower than the minimum voltage, this protection circuit turns a switching element that interrupts discharging current OFF. Thus, discharging current is interrupted. Also, if any of battery voltages becomes lower than the maximum voltage, this protection circuit turns a switching element that interrupts charging current OFF. Thus, charging current is interrupted. Since the battery pack has the protection circuit, which detects the battery voltages and controls charging/discharging operation, the battery pack can be used safely while protecting the base batteries 401. In addition, the circuit board 408 also has a temperature detecting circuit that detects the abnormal temperature in the base battery 401. This temperature detecting circuit detects whether the temperature of the base battery 401 detected by the temperature sensor 419 abnormally rises, and controls charging/discharging current or stops charging/discharging operation based on the detection.

The circuit board holder 409 secures and positions the circuit board 408 in place. The circuit board holder 409 shown in Figs. 63 through 65 is formed in a thin box shape to be arranged in the accommodation recessed portion 411. As shown in Fig. 65, the circuit board holder 409 is integrally formed with coupling portions 409A that protrude from the outer periphery. Fastening screws 416 penetrate the coupling portions 409A, and is screwed into the battery holders 404 and the secondary battery holder 407. In order that the fastening screws 416 are screwed into the battery holders 404 and the secondary battery holder 407, the battery holders 404 and the secondary battery holder 407 are integrally formed with screw-reception bosses 429 that protrude toward the accommodation recessed portion 411. The coupling portions 409A of the circuit board holder 409 are arranged in positions corresponding to the screw-reception bosses 429 of the battery holders 404 and the secondary battery holder 407, as shown in Fig. 65. When the fastening screws 416 penetrate the coupling portions 409A, and are screwed into screw-reception bosses 429, the circuit board holder 409 is secured in a predetermined position of the accommodation recessed portion 411. However, although not illustrated, the circuit board holder may be secured to the battery holders and the secondary battery holder by interlocking structures.

In the illustrated battery pack, in order to prevent a short circuit between the metal case unit 441, and the lead plates 405 of the core pack 410 and the circuit board 408 accommodated in this metal case, insulating sheets 417 are arranged between the side surfaces of the core pack 410, and the upper surface of the circuit board 408.

### Industrial Applicability

The battery pack according to the present invention can be suitably applied to a power supply for electric devices used outdoors and in particular for power assisted electric bicycles.

Also, the battery pack according to the present invention can be suitably applied to a power supply or the like for power assisted electric bicycles.

## Claims

1. A battery pack comprising:
a plurality of battery blocks (210) each of which includes a plurality of base batteries (211) having a cylindrical exterior container, and a battery spacer (212) for holding said plurality of base batteries (211) in parallel to each other;
a plurality of pairs of lead plates (220) each of which connect the end surfaces of said base batteries (211) held by said battery spacer (212) in corresponding one of the battery blocks (210) so that the base batteries (211) are connected to each other in parallel, and one of one pair of the lead plates (220) in one battery block (210) is serially connected to one of one pair of the lead plates (220) in another battery block (210) adjacent to the one battery block (210);
a circuit board (240) that is electrically connected to said plurality of pairs of lead plates (220); and
an exterior case (230) that accommodates said battery blocks (210) and the circuit board (240),
**characterized in that**
said battery blocks (210) are classified into battery block rows (202) **in that** the classified battery blocks (210) are arranged side by side in parallel to each other so that the end surfaces of the base batteries (211) included in the battery blocks (210) are arranged coplanar with each other, wherein
said battery block rows (202) are arranged side by side so that the end surfaces of said base batteries (211) of said battery block rows (202) are opposed to each other and so that said base batteries (211) of said battery block rows (202) are aligned in substantially straight lines and extend in the center axes of cylindrical shapes whereby composing a battery assembly (201), wherein
battery block rows (202) that are arranged side by side adjacent to each other include lead plate (220) extension parts that extend along the side surfaces of said battery assembly (201), and the battery pack comprises lead connection portions (225) that electrically connect the lead plate (220) extension parts to each other, wherein
the lead connection portions (225) are alternately arranged on parts of the side surfaces of said battery assembly (201) between adjacent battery block rows (202) to connect said lead plates (220) to each other.

2. The battery pack according to claim 1, wherein said lead connection portions (225) are a metal plate that includes a pair of contact parts (226) with screw holes, and the thickness of the metal plate is thicker than said lead plate (220), wherein
said lead plate (220) includes a lead connection terminal (222) that is formed by bending said lead plate (220) into an L shape and extends along a side surface of said battery block row (202), and the lead connection terminal has a connection terminal screw hole (223), wherein
said battery spacer (212) has a screw passing opening that is formed on a side surface of said battery assembly (201), wherein
said lead connection portion (225) is coupled to said lead connection terminal (222) and said battery spacer (212) by threaded engagement of a lead connection screw (228).

3. The battery pack according to claim 1, wherein said lead connection portions (225) are a bent part that is formed by bending a part of said lead plate (220) into an L shape so that the part of said lead plate (220) protrudes from the upper surface of said battery assembly (201), wherein
the lead connection portions overlap each other and are coupled to each other by threaded engagement so that adjacent lead plates (220) are connected to each other.

4. The battery pack according to any of claims 1 to 3,
wherein the battery spacer (212) comprises battery holding portions (213), the battery holding portions (213) being formed in a curved shape that opens upward or downward and agrees with the cylinder surface of the base batteries (211) on an upper surface and a lower surface of the battery spacer (212), and
wherein said plurality of base batteries (211) are arranged in two rows on the upper and lower surface of the battery spacer (212) and are held in the battery holding portions (213) in parallel to each other.

5. The battery pack according to any of claims 1 to 4, further comprising a plurality of metal penetration screws (250) that penetrate the battery assembly (201) in the longitudinal direction of the exterior case (230) in parallel to each other, wherein
the battery spacer (212) is formed of an electrically-insulating resin material, center axes of the curved battery holding portions (213) on the upper and lower surfaces of the battery spacer (212) are aligned on a substantially straight line in plan view, and
at least one of parts that are surrounded by adjacent battery holding portions (213) comprises a spacer through hole (214) into which the penetration screw (250) is inserted.

6. The battery pack according to claim 5, further comprising an electrically-insulating sheet (235) that is arranged in each part between the battery block rows (202) and is interposed between the lead plates (220) opposed to each other to electrically insulate the opposed lead plates (220) from each other,
wherein each of the plurality of penetration screws (250) penetrate corresponding one of the battery blocks (210) that compose each of the battery block rows (202), and
wherein the insulating sheet (235) comprises sheet through holes (236) into which the penetration screws (250) are inserted.

7. The battery pack according to claim 6,
wherein the battery spacer (212) includes a spacer coupling portion (216) that couples one battery spacer (212) to another battery spacer (212), said one battery spacer (212) and said another battery spacer (212) composing the battery block row (202),
wherein the spacer coupling part (216) is arranged on a part of a side surface of the battery spacer (212) between the upper and lower battery holding portions (213),
wherein the battery spacers (212) have connection grooves (217) in parts of side surfaces of the battery assembly (201) between the upper and lower battery holding portions (213),
the spacer coupling portion (216) is inserted into the connection grooves (217) of battery spacer (212) adjacent to each other so that the adjacent battery spacers (212) are mechanically coupled to each other, and
each of the connection grooves (217) is also used as screw passing opening.

8. The battery pack according to any of claims 5 to 7, part of the plurality of penetration screws (250) is also used as lead for electrical conduction.

9. The battery pack according to any of claims 1 to 8, wherein the number of battery blocks (210) in the battery block row (202) that is located on an end surface of the battery assembly (201) is less than that of other battery block rows (202) so that an available space portion (BS) is produced, and
wherein an output terminal (233) is arranged in the available space portion (BS).

## Patentansprüche

1. Batteriepack, umfassend:
eine Vielzahl von Batterieblöcken (210), die jeweils eine Vielzahl von Basisbatterien (211) enthalten, die einen zylindrischen Außencontainer haben, und einen Batterieabstandshalter (212), um diese Vielzahl von Basisbatterien (211) parallel zueinander zu halten;
eine Vielzahl von Paaren von Anschlussplatten (220), von denen jede die Endflächen dieser Basisbatterien (211) verbindet, die von dem Batterieabstandshalter (212) in korrespondierenden Batterieblöcken (210) gehalten werden, so dass die Basisbatterien (211) parallel miteinander verbunden sind, und eine der Anschlussplatten eines Paares von Anschlussplatten (220) ist in einem Batterieblock (210) in Reihe mit einer Anschlussplatte eines Paares von Anschlussplatten (220) in einem anderen Batterieblock (210), der zu dem einen Batterieblock (210) benachbart ist, verbunden;
eine Schaltungskarte (240), die elektrisch mit der Vielzahl von Paaren von Anschlussplatten (220) verbunden ist; und
ein Außengehäuse (230), das die Batterieblöcke (210) und die Schaltungskarte (240) aufnimmt,
**dadurch gekennzeichnet, dass**
die Batterieblöcke (210) in Batterieblockreihen (202) geordnet sind, derart, dass die geordneten Batterieblöcke (210) Seite an Seite parallel zueinander angeordnet sind, so dass die Endflächen der Basisbatterien (211), die in dem Batterieblock (210) enthalten sind, planparallel zueinander angeordnet sind, wobei
diese Batterieblockreihen (202) Seite an Seite angeordnet sind, derart dass die Endflächen dieser Basisbatterien (211) dieser Batterieblockreihen (202) zueinander gegenüberliegend sind, und derart dass diese Basisbatterien (211) dieser Batterieblockreihen (202) in im Wesentlichen geraden Linien angeordnet sind und sich in den Mittelachsen von zylindrischen Formen erstrecken, wodurch sie eine Batterieanordnung (201) bilden, wobei
die Batterieblockreihen (202), die Seite an Seite aneinander angrenzend angeordnet sind, Anschlussplatten(220)-Erweiterungsteile umfassen, die sich entlang der Seitenflächen der Batterieanordnung (201) erstrecken, und das Batteriepack Anschlussbereiche (225) umfasst, die die Anschlussplatten(220)-Erweiterungsteile miteinander elektrisch verbinden, wobei
die Anschlussbereiche (225) alternierend auf Teilen der Seitenfläche der Batterieanordnung (201) zwischen angrenzenden Batterieblockreihen (202) angeordnet sind, um die Anschlussplatten (220) miteinander zu verbinden.

2. Das Batteriepack nach Anspruch 1, wobei die Anschlussbereiche (225) als eine Metallplatte ausgebildet sind, die ein Paar von Kontaktteilen (226) mit Schraublöchern enthält, und die Dicke der Metallplatte dicker ist als die Anschlussplatte (220), wobei
die Anschlussplatte (220) einen Leiteranschluss (222) enthält, der durch Biegen der Anschlussplatte (220) in eine L-Form geformt wird und sich entlang einer Seitenfläche der Batterieblockreihe (202) erstreckt, und der Leiteranschluss ein Leiteranschluss-Schraubloch (223) aufweist, wobei
der Batterieabstandshalter (212) eine Schraubendurchführungsöffnung hat, die an einer Seitenfläche der Batterieanordnung (201) angeformt ist, wobei
der Anschlussbereich (225) an die Leiteranschlüsse (222) und den Batterieabstandshalter (212) mittels einer Gewindeverbindung einer Anschlussschraube (228) gekoppelt ist.

3. Das Batteriepack nach Anspruch 1, wobei die Anschlussbereiche (225) als gebogenes Teil ausgebildet sind, das durch Biegen eines Teils der Anschlussplatte (220) in eine L-Form geformt wird, so dass der Teil dieser Anschlussplatte (220) von deren oberen Fläche der Batterieanordnung (201) vorsteht, wobei
die Anschlussbereiche einander überlappen und durch Gewindeverbindung miteinander gekoppelt sind, so dass benachbarte Anschlussplatten (220) miteinander verbunden sind.

4. Das Batteriepack nach einem der Ansprüche 1 bis 3, wobei der Batterieabstandshalter (212) Batteriehalteabschnitte (213) umfasst, die in gekrümmter Form geformt sind, die sich nach oben oder unten öffnet und mit der Zylinderfläche der Basisbatterien (211) an einer oberen Fläche und einer unteren Fläche des Batterieabstandshalters (212) übereinstimmt, und
wobei die Vielzahl der Basisbatterien (211) in zwei Reihen auf der oberen und unteren Fläche des Batterieabstandshalters (212) angeordnet sind und in dem Batteriehalteabschnitt (213) parallel zueinander gehalten sind.

5. Das Batteriepack nach einem der Ansprüche 1 bis 4, weiter umfassend eine Vielzahl von metallischen Penetrationsschrauben (250), die parallel zueinander die Batterieanordnung (201) in Längsrichtung des Außengehäuses (230) durchdringen, wobei
der Batterieabstandshalter (212) aus einem elektrischisolierenden Harzmaterial geformt ist,
die Mittelachsen der gekrümmten Batteriehalteabschnitte (203) auf der oberen und unteren Fläche des Batterieabstandshalters (212) in Draufsicht entlang einer im Wesentlichen geraden Linie ausgerichtet sind, und
zumindest eines derjenigen Teile, die von benachbarten Batteriehalteabschnitten (213) umgeben sind, eine Abstandsdurchgangsbohrung (214) umfasst, in die die Penetrationsschraube (250) eingefügt ist.

6. Das Batteriepack nach Anspruch 5, weiter umfassend eine elektrisch isolierende Platte (235), die in jedem Abschnitt zwischen den Batterieblockreihen (202) angeordnet und zwischen einander gegenüberliegenden Anschlussplatten (220) eingefügt ist, um gegenüberliegende Anschlussplatten (220) elektrisch voneinander zu isolieren,
wobei jede der Vielzahl der Penetrationsschrauben (250) jeweils einen der korrespondierenden Batterieblöcke (210) durchdringen, die jeweils die Batterieblockreihen (202) bilden, und
wobei die Isolierplatte (235) Plattendurchgangsbohrungen (236) umfasst, in die die Penetrationsschrauben (250) eingefügt sind.

7. Das Batteriepack nach Anspruch 6,
wobei der Batterieabstandshalter (212) ein Abstandskupplungsteil (216) enthält, das einen Batterieabstandshalter (212) an einen anderen Batterieabstandshalter (212) koppelt und dieser eine Batterieabstandshalter (212) und dieser andere Batterieabstandshalter (212) die Batterieblockreihe (202) bilden,
wobei das Abstandsverbindungsteil (216) auf einem Abschnitt einer Seitenfläche des Batterieabstandshalters (212) zwischen der oberen und unteren Batteriehalteabschnitte (213) angeordnet ist,
wobei die Batterieabstandshalter (212) Verbindungsnuten (217) in Teilen der Seitenflächen der Batterieanordnung (201) zwischen den oberen und unteren Batteriehalteabschnitten (213) aufweisen,
das Abstandsverbindungsteil (216) ist in die Verbindungsnuten (217) benachbarter Batterieabstandshalter (212) eingefügt, so dass benachbarte Batterieabstandshalter (212) mechanisch miteinander gekoppelt sind, und
jede der Verbindungsnuten (217) wird auch als Schraubeinführöffnung verwendet.

8. Das Batteriepack nach einem der Ansprüche 5 bis 7, wobei ein Teil der Vielzahl der Penetrationsschrauben (250) auch als Leiter für die elektrische Leitfähigkeit benutzt wird.

9. Das Batteriepack nach einem der Ansprüche 1 bis 8, wobei die Anzahl der Batterieblöcke (201) in der Batterieblockreihe (202), die an einer Endfläche der Batterieanordnung (201) angeordnet ist, kleiner ist als die einer anderen Batterieblockreihe (202), so dass ein verfügbarer Platzbereich (BS) erzeugt wird, und
wobei ein Ausgangsanschluss (233) in dem verfügbaren Platzbereich (BS) angeordnet ist.

## Revendications

1. Ensemble de batteries comprenant :
une pluralité de blocs de batteries (210) dont chacun inclut une pluralité de batteries de base (211) ayant un contenant extérieur cylindrique, et un espaceur de batterie (212) permettant de maintenir ladite pluralité de batteries de base (211) en parallèle les unes avec les autres ;
une pluralité de paires de plaques conductrices (220) dont chacune relie les surfaces d'extrémité desdites batteries de base (211) maintenues par ledit espaceur de batterie (212) dans l'un correspondant des blocs de batteries (210) de sorte que les batteries de base (211) sont reliées les unes aux autres en parallèle, et l'une d'une paire des plaques conductrices (220) dans un bloc de batteries (210) est reliée en série à l'une d'une paire des plaques conductrices (220) dans un autre bloc de batteries (210) adjacent au un bloc de batteries (210) ;
une carte de circuit (240) qui est reliée électriquement à ladite pluralité de paires de plaques conductrices (220) ; et
un boîtier extérieur (230) qui loge lesdits blocs de batteries (210) et la carte de circuit (240),
**caractérisé en ce que**
lesdits blocs de batteries (210) sont classifiés en rangées de blocs de batteries (202) **en ce que** les blocs de batteries (210) classifiés sont agencés côte à côte en parallèle les uns aux autres de sorte que les surfaces d'extrémité des batteries de base (211) incluses dans les blocs de batterie (210) soient agencées coplanaires les unes avec les autres, dans lequel
lesdites rangées de blocs de batteries (202) sont agencées côte à côte de sorte que les surfaces d'extrémité desdites batteries de base (211) desdites rangées de blocs de batteries (202) soient opposées les unes aux autres et de sorte que lesdites batteries de base (211) desdites rangées de blocs de batteries (202) soient alignées dans des lignes sensiblement droites et s'étendent dans les axes centraux de formes cylindriques de façon à composer un assemblage de batteries (201), dans lequel
des rangées de blocs de batteries (202) qui sont agencées côte à côte adjacentes les unes aux autres incluent des parties d'extension des plaques conductrices (220) qui s'étendent le long des surfaces latérales dudit assemblage de batteries (201), et l'ensemble de batteries comprend des portions de liaison conductrices (225) qui relient électriquement les parties d'extension des plaques conductrices (220) les unes aux autres, dans lequel
les portions de liaison conductrices (225) sont agencées de manière alternée sur des parties des surfaces latérales dudit assemblage de batteries (201) entre des rangées de blocs de batteries (202) adjacentes pour relier lesdites plaques conductrices (220) les unes aux autres.

2. Ensemble de batteries selon la revendication 1, dans lequel lesdites portions de liaison conductrices (225) sont une plaque en métal qui inclut une paire de parties de contact (226) avec des trous de vis, et l'épaisseur de la plaque de métal est plus importante que ladite plaque conductrice (220), dans lequel
ladite plaque conductrice (220) inclut une borne de liaison conductrice (222) qui est formée en pliant ladite plaque conductrice (220) en une forme de L et s'étend le long d'une surface latérale de ladite rangée de blocs de batteries (202), et la borne de liaison conductrice comporte un trou de vis de borne de liaison (223), dans lequel
ledit espaceur de batterie (212) comporte une ouverture de passage de vis qui est formée sur une surface latérale dudit assemblage de batterie (201), dans lequel
ladite portion de liaison conductrice (225) est couplée à ladite borne de liaison conductrice (222) et audit espaceur de batterie (212) par mise en prise filetée d'une vis de liaison conductrice (228).

3. Ensemble de batteries selon la revendication 1, dans lequel lesdites portions de liaison conductrices (225) sont une partie pliée qui est formée en pliant une partie de ladite plaque conductrice (220) en une forme de L de sorte que la partie de ladite plaque conductrice (220) fasse saillie depuis la surface supérieure dudit assemblage de batteries (201), dans lequel
les portions de liaison conductrices se chevauchent les unes les autres et sont couplées les unes aux autres par mise en prise filetée de sorte que des plaques conductrices (220) adjacentes soient reliées les unes aux autres.

4. Ensemble de batteries selon l'une quelconque des revendications 1 à 3,
dans lequel l'espaceur de batterie (212) comprend des portions de maintien de batterie (213), les portions de maintien de batterie (213) étant formées en une forme incurvée qui s'ouvre vers le haut ou vers le bas et se conforment à la surface cylindrique des batteries de base (211) sur une surface supérieure et une surface inférieure de l'espaceur de batterie (212), et
dans lequel ladite pluralité de batteries de base (211) sont agencées en deux rangées sur la surface supérieure et inférieure de l'espaceur de batterie (212) et sont maintenues dans les portions de maintien de batterie (213) en parallèle les unes avec les autres.

5. Ensemble de batteries selon l'une quelconque des revendications 1 à 4, comprenant en outre une pluralité de vis pénétrantes de métal (250) qui pénètrent l'assemblage de batteries (201) dans la direction longitudinale du boîtier extérieur (230) en parallèle les unes avec les autres, dans lequel
l'espaceur de batterie (212) est formé d'un matériau de résine électriquement isolant,
des axes centraux des portions de maintien de batterie incurvées (213) sur les surfaces supérieure et inférieure de l'espaceur de batterie (212) sont alignés sur une ligne sensiblement droite dans une vue en plan, et
au moins l'une des parties qui sont entourées par des portions de maintien de batterie (213) adjacentes comprend un trou traversant d'espaceur (214) dans lequel la vis pénétrante (250) est insérée.

6. Ensemble de batteries selon la revendication 5, comprenant en outre une feuille électriquement isolante (235) qui est agencée dans chaque partie entre les rangées de blocs de batteries (202) et est interposée entre les plaques conductrices (220) opposées les unes aux autres pour isoler électriquement les plaques conductrices opposées (220) les unes des autres,
dans lequel chacune de la pluralité de vis pénétrantes (250) pénètre un bloc correspondant parmi les blocs de batteries (210) qui composent chacune des rangées de blocs de batteries (202), et
dans lequel la feuille isolante (235) comprend des trous traversants de feuille (236) dans lesquels les vis pénétrantes (250) sont insérées.

7. Ensemble de batteries selon la revendication 6, dans lequel l'espaceur de batterie (212) inclut une portion de couplage d'espaceur (216) qui couple un espaceur de batterie (212) à un autre espaceur de batterie (212), ledit un espaceur de batterie (212) et ledit autre espaceur de batterie (212) composant la rangée de blocs de batteries (202),
dans lequel la partie de couplage d'espaceur (216) est agencée sur une partie d'une surface latérale de l'espaceur de batterie (212) entre les portions de maintien de batterie supérieure et inférieure (213),
dans lequel l'espaceur de batterie (212) comporte des rainures de liaison (217) dans des parties de surfaces latérales de l'assemblage de batteries (201) entre les portions de maintien de batterie supérieure et inférieure (213),
la portion de couplage d'espaceur (216) est insérée dans les rainures de liaison (217) de l'espaceur de batterie (212) adjacentes les unes aux autres de sorte que les espaceurs de batterie (212) adjacents soient mécaniquement couplés les uns aux autres, et
chacune des rainures de liaison (217) est également utilisée comme une ouverture de passage de vis.

8. Ensemble de batteries selon l'une quelconque des revendications 5 à 7, dans lequel une partie de la pluralité de vis pénétrantes (250) est également utilisée comme fil conducteur pour conduction électrique.

9. Ensemble de batteries selon l'une quelconque des revendications 1 à 8, dans lequel le nombre de blocs de batteries (210) dans la rangée de blocs de batteries (202) qui est située sur une surface d'extrémité de l'assemblage de batteries (201) est inférieur à celui des autres rangées de blocs de batteries (202) de sorte qu'une portion d'espace disponible (BS) soit produite, et
dans lequel une borne de sortie (233) est agencée dans la portion d'espace disponible (BS).
